# EUROPEAN PATENT APPLICATION

(11) **EP 4 343 889 A1**
(43) Date of publication of application: **27.03.2024**
(21) Application number: 22897974.6
(22) Date of filing: 28.11.2022
(51) Int. Cl.: H01M 4/36, H01M 4/38, H01M 4/62, H01M 10/0525

(54) **NANO-SILICON-OXYGEN-CARBON STRUCTURE COMPOSITE MATERIAL AND PREPARATION METHOD THEREFOR, NEGATIVE ELECTRODE AND ELECTROCHEMICAL DEVICE**

(30) Priority: 27.11.2021 CN 202111438788; 31.01.2022 CN 202210114895
(71) Applicant: Lanxi Zhide Advanced Materials Co., Ltd., Zhejiang 321100 (CN)
(72) Inventor: CHEN, Qinghua, Jinhua, Zhejiang 321100 (CN); LIU, Jiangping, Jinhua, Zhejiang 321100 (CN); LIU, Ruifang, Jinhua, Zhejiang 321100 (CN); FANG, Bing, Jinhua, Zhejiang 321100 (CN)
(74) Representative: Studio Torta S.p.A.
(86) International application number: PCT/CN2022/134811
(87) International publication number: WO 2023/093893

(57) **Abstract**

The present disclosure provides a nano silicon-oxygen-carbon structural composite material, a preparation method thereof, an anode, and an electrochemical device. The composite material includes (C_{*x*1}-O_{*y*1})-(Si*_{z}*-O_{*y*2}-C_{*x*2}), wherein C_{*x*1}-O_{*y*1} is a porous carbon substrate containing a surface oxidized layer, and 0.001≤*y*1/*x*1≤0.05; Si*_{z}*-O_{*y*2}-C_{*x*2} includes silicon nanoparticles, an oxygen-containing substance and an optional carbon, wherein the silicon nanoparticles, the oxygen-containing substance and the optional carbon are dispersedly distributed on the surface and/or within the pores of the porous carbon substrate containing a surface oxidized layer, and the oxygen-containing substance presents in a form of SiOδ, wherein 0<δ≤2, 0.1≤*z*/*x*1≤2, 0.01≤*y*2/*z*≤0.15, and 0≤*x*2/*z*≤0.15. The silicon nanoparticles are uniformly dispersed in the composite material, separated and bounded by the oxygen-containing substance and the optional carbon, controlling their volume changes and possible fusion during charge and discharge cycles, thereby improving the cycle performance of lithium batteries.

## Description

### Cross-Reference to Related Application

This application is on the basis of Chinese application with CN Application Number 202111438788.0 and an application date of November 27, 2021, and claims its priority, the disclosure of the CN application is incorporated herein in its entirety again.

This application is on the basis of Chinese application with CN Application Number 202210114895.6 and an application date of January 31, 2022, and claims its priority, the disclosure of the CN application can be partly incorporated herein.

### Technical Field

The present disclosure relates to the technical field of battery materials, in particular to a nano silicon-oxygen-carbon structural composite material, a preparation method thereof, an anode, and an electrochemical device.

### Background

Lithium ion batteries are playing an increasingly important role in humans' manufacture and life nowadays, the performance of the anode materials thereof, such as capacity, initial coulombic efficiency, and cycle performance, etc., greatly affects the capacity, energy density, and service life of batteries.

The traditional anode of lithium ion batteries usually uses a carbon material as an active ingredient, graphite is especially typical, based on the interlayer lithium intercalation mechanism of graphite, its theoretical capacity per gram is only 372 mAh/g, currently, the capacity per gram of graphite anode is close to the theoretical capacity, which greatly limits the improvement of the overall energy density of the batteries. Therefore, it is necessary to develop a variety of anode materials with lithium intercalation mechanisms. Among them, the alloying lithium intercalation mechanism can usually achieve larger lithium intercalation capacity, such as in silicon materials, which form a lithium silicon alloy Li*ₓ*Si during the lithium intercalation process, with a maximum *x* of 4.4, corresponding to a theoretical capacity of silicon anode up to 4200 mAh/g. In addition, silicon-based materials have a delithiation potential close to that of lithium metals (<0.5V v.s. Li/Li⁺), are environmentally friendly, and have abundant reserves, making them highly potential anode materials for the new generation of high energy density lithium-ion batteries. However, there is a serious problem with silicon-based anode materials, that is, they experience significant volume expansion and contraction during the lithium intercalation and delithiation processes (with a volume expansion of up to 300% in the fully lithium intercalation state), which will lead to battery capacity degradation and electrode pulverization failure. Due to the poor cycle stability of silicon materials, their practical applications face significant technical bottlenecks.

The fundamental reason for the cycling capacity degradation of lithium ion batteries is the formation of SEI films. During the charging process of lithium ion batteries, the electrolyte in the electrolytic solution will react with lithium ions from the positive electrode at the surface active material of the anode, forming a solid electrolyte interface (SEI) film until it completely covers the contact surface between the electrode and the electrolytic solution. The formation of SEI film is irreversible, and its consumption of lithium competes with the reversible lithium formation on the electrode, which is manifested in the first lithium intercalation and delithiation cycle, where the delithiation capacity is lower than the lithium intercalation capacity, i.e. the initial coulombic efficiency (ICE) is less than 100%. After the completion of the first charge and discharge, if a stable SEI film can be formed, the subsequent capacity will no longer significantly degrade, and the battery cycle performance is good. On the contrary, if the SEI membrane is damaged, a new SEI membrane will be generated at the exposed fresh active material, resulting in the continuous consumption of reversible lithium ions in the positive electrode and the continuous degradation of battery capacity. Therefore, chemically and mechanically stable SEI membranes are crucial for maintaining high capacity, energy density, and cycle performance of lithium ion batteries.

The significant volume effect of silicon based anode materials during the lithium intercalation and delithiation processes causes the SEI film on the electrode surface to be continuously damaged and regenerated during the cyclic charge and discharge processes, resulting in corrosion of the active silicon material and continuous degradation of electrode capacity. In addition, this volume effect is also prone to the gradual pulverization and structural collapse of the anode active material, ultimately leading to the detachment of the electrode active material from the current collector to loss electrical contact, greatly reducing the cycle performance of the battery. Therefore, suppressing the excessive volume effect of silicon particles during the charge and discharge processes has always been a non negligible issue in the research and development of silicon based anode materials.

The silicon particles undergo lithium intercalation to an extent that irreversible rupture occurs, thereby damaging the SEI film and/or occurring self-pulverization, which is essentially a process of uneven expansion and accumulation. During lithium intercalation, a large amount of lithium is first accumulated at the silicon atoms on the surface of the silicon particles, and lithium ions then migrate slowly towards the interior of the particles, that is, there is a gradient of lithium from inside to outside within the silicon particles, resulting in uneven expansion, which will lead to the rupture of the silicon particles. Research has shown that nano-sized silicon particles can weaken the lithium ion gradient within the particles due to their small size, and the gaps between the particles also help to buffer the volume effect caused by expansion and contraction, which is an effective method to reduce the expansion of the anode sheet and maintain good electrode performance.

The electrical conductivity of silicon itself is low, and it is usually combined with carbon materials with good conductivity to obtain composite electrode materials with good conductivity, dispersing silicon nanoparticles on porous carbon carriers is one of the commonly used methods, the pore structure of carbon carriers can also play a role in alleviating expansion, but on the other hand, porous carriers cause an increase in the specific surface area of the composite material, leading to an increase in electrode side reactions and a decrease in the initial coulombic efficiency, therefore, how to achieve effective deposition and uniform dispersion of silicon nanoparticles on porous carriers, while reducing the specific surface area of the composite material, is the difficulty in the preparation of silicon-carbon composite materials.

In the prior art, researchers have deposited silane gas onto porous carbon carriers through vapor deposition, which can prepare nano silicon-oxygen-carbon structural composite materials in large quantities and suppress the excessive volume effect of silicon particles during the charge and discharge processes. The Chinese patent disclosure with disclosure publication number CN110112377A discloses a method for preparing a nano silicon-carbon structural composite material by depositing silicon on porous carbon, when the Si content of the composite material reaches 90%, the initial lithium intercalation capacity can reach 2414 mAh/g, and the initial coulombic efficiency is 82%, however, the cycle performance is poor, and the fifth cycling capacity retention rate is only 48%. The Chinese patent disclosure with disclosure publication number CN110582823A discloses a method for sequentially or simultaneously depositing silicon and hydrocarbon carbon on porous carbon, and under the condition that the Si content in the composite material is controlled at about 50%, the resulting nano silicon-carbon structural composite material has a capacity of 2082 mAh/g, an initial coulombic efficiency is 82%, and an average coulombic efficiency for the 7^{th} to 10^{th} cycles is 98%.

The initial coulombic efficiency and cycle efficiency of silicon-carbon composite materials in the prior art are relatively low due to two reasons. On the one hand, silane gas is directly deposited on the carbon material, due to the lack of bonding between C and Si, it is difficult to achieve effective silicon deposition on the surface of the porous carbon substrate located inside the pore, the material has a larger specific surface area, more side reactions on the electrode surface occur, and the initial coulombic efficiency of the battery is relatively low; on the other hand, and also more importantly, the decomposition of SiH₄ is a chain reaction process of thermal polymerization, firstly, it nucleates on the surface of carbon particles that is easy to contact, and then it is very easy to grow rapidly on the formed silicon nuclei, during the silane deposition process, the growth of silicon nanoparticles is difficult to control and the size is relatively large, which leads to significant volume expansion of composite material electrodes during the charge and discharge processes due to the lithium-silicon alloying reaction, which in turn leads to repeated damage and regeneration of the SEI film during the cycling process, consuming reversible lithium from the positive electrodes, and deteriorating the cycle performance of the batteries. In addition, during the charge and discharge processes of silicon-carbon composite materials, as the forward and reverse reactions of lithium-silicon alloying proceed, adjacent silicon particles will fuse together, leading to further growth of silicon particles in the composite material and deterioration of electrode cycle performance. With respect that how to successfully prepare silicon-carbon composite materials with uniformly dispersed small-sized silicon nanoparticles and to prevent silicon nanoparticles from fusion into large particles during electrode reactions, there are currently no reported researches and related disclosed patents.

### Summary

The main purpose of the disclosure is to provide a nano silicon-oxygen-carbon structural composite material, a preparation method thereof, an anode, and an electrochemical device, so as to solve the problem of deterioration in the cycle performance of the batteries due to the volume expansion of the silicon-carbon composite material electrode in the prior art. From the perspective of materials, it is to solve the problem of difficulty in obtaining uniformly dispersed silicon nanoparticles from the silicon-carbon composite material structure and preparation method in the prior art.

In order to achieve the above purpose, according to an aspect of the disclosure, a nano silicon-oxygen-carbon structural composite material is provided, the composite material comprising (C_{*x*1}-O_{*y*1})-(Si*_{z}*-O_{*y*2}-C_{*x*2}), wherein C_{*x*1}-O_{*y*1} is a porous carbon substrate containing a surface oxidized layer, comprising the porous carbon substrate and its surface oxidized layer, *x*1 is the stoichiometric number of carbon, *y*1 is the stoichiometric number of oxygen in the surface oxidized layer, and 0.001 ≤*y*1/*x*1≤0.05; Si*_{z}*-O_{*y*2}-C_{*x*2} comprises silicon nanoparticles, an oxygen-containing substance, and an optional carbon, the silicon nanoparticles, the oxygen-containing substance, and the optional carbon are dispersedly distributed on the surface and/or within the pores of the porous carbon substrate containing a surface oxidized layer, and the oxygen-containing substance presents in a form of SiO_{δ}, 0<*δ*≤2, 0.1≤*z*/*x*1≤2, 0.01≤*y*2/*z*≤0.15, and 0≤x2/z≤0.15; Si*_{z}*-O_{*y*2}-C_{*x*2} can be considered as repetition of Si-O-C(Si-SiO*_{δ}*-C) building block, and can be written as (Si_{*z*1}-O*_{y}*-C*ₓ*)*ₙ*, *n*≥1.

According to another aspect of the disclosure, a preparation method for a nano silicon-oxygen-carbon structural composite material is provided, the preparation method includes: step S1, providing a porous carbon substrate containing a surface oxidized layer, wherein the molar ratio of oxygen to carbon in the porous carbon substrate containing the surface oxidized layer ranges from 0.001 to 0.05; step S2, introducing a silicon-containing precursor and an oxygen containing precursor into a reaction furnace providing with the porous carbon substrate containing the surface oxidized layer, and taking into contact with the porous carbon substrate containing the surface oxidized layer at 150-700°C for 5-100 hours of heat treatment, and allowing silicon, oxygen containing substance, and optional carbon to disperse and deposit onto the surface and/or within the pores of the porous carbon substrate to obtain the nano silicon-oxygen-carbon structural composite material.

According to another aspect of the disclosure, an anode is provided, including an anode material, which is either any of the aforementioned nano silicon-oxygen-carbon structural composite materials or the nano silicon-oxygen-carbon structural composite materials obtained by any of the aforementioned preparation method.

According to another aspect of the disclosure, an electrochemical device is provided, comprising an anode, which is any of the aforementioned anodes, preferably the electrochemical device is a lithium ion secondary battery.

By applying the technical solution of the disclosure, the silicon nanoparticles are uniformly dispersed in the nano silicon-oxygen-carbon structural composite material of the disclosure, and are separated and bounded by the oxygen-containing substance and the optional carbon, thereby effectively suppressing the aggregation of silicon particles during the deposition process, as well as their volume change and possible fusion during the charge and discharge cycle, the lithium ion secondary battery containing the anode prepared from the obtained composite material has a high capacity per gram, high initial coulombic efficiency and good cycle performance.

The above preparation method uses a porous carbon substrate containing a surface oxidized layer as a carrier and/or support, and the deposition of silicon nanoparticles, the oxygen-containing substance, and the optional carbon is carried out on the surface and in pore structure thereof, wherein the oxygen containing substance and the optional carbon play a role in separating and bounding the deposition layer of silicon nanoparticles, and the deposition can eventually leave a small amount of closed pores in the pores of the porous carbon substrate. Therefore, the volume effect of the uniformly dispersed and bounded silicon nanoparticles in the obtained nano silicon-oxygen-carbon structural composite material can be effectively buffered during the lithium intercalation and delithiation processes, the fusion phenomenon of silicon nanoparticles during the charge and discharge processes can be suppressed, and the material strength can be improved, which helps to improve the electrochemical performance of the electrochemical device containing the silicon-oxygen-carbon composite anode material.

Another purpose according to the disclosure is to provide a nano silicon-oxygen-carbon composite material, a preparation method thereof, an anode, and an electrochemical device, so as to solve the problem of deterioration in the cycle performance of the batteries due to the volume expansion of the silicon-carbon composite material electrode in the prior art.

### 1. Technical solution

To achieve the above purposes, the disclosure is achieved through the following technical solutions:
In a typical embodiment of the disclosure, a nano silicon-oxygen-carbon composite material is provided, the nano silicon-oxygen-carbon composite material comprises a porous carbon skeleton (equivalent to the porous carbon substrate mentioned above), silicon nanoparticles and SiO_{δ} (0<δ≤2), wherein the content of silicon element in the nano silicon-oxygen-carbon composite material is 25-75 wt%, and the content of oxygen element is 0.5-10 wt%; the N₂ adsorption BET specific surface area of the nano silicon-oxygen-carbon composite material is 0.01-10 m²/g, and the total pore volume as measured based on the adsorption amount at a point where the N₂ partial pressure is greater than 0.999 is 0.001-0.05 cm³/g; the silicon nanoparticles are separated and/or wrapped by the SiO_{δ} network, the silicon nanoparticles and the SiO_{δ} are distributed on the surface and/or in the pores of the porous carbon skeleton, and the porous carbon skeleton and silicon nanoparticles are connected by a C-O-Si bond.

In some embodiments, the content of silicon element in the nano silicon-oxygen-carbon composite material is controlled at 30-65 wt%, the content of carbon element is controlled at 30-65 wt%, the content of oxygen element is controlled at 0.5-5 wt%, and the content of other elements is controlled at 0-5 wt%.

In some embodiments, XPS testing is performed on the nano silicon-oxygen-carbon composite material using Al K*α* as a radioactive source, the binding energy of the amorphous C-C peak in the C 1s spectrum at 284.7 eV is used as the peak position calibration. Since the high resolution C 1 s spectrum contains the C-C peak in the test system, there is a large error in its C-Si analysis, and thus only its high resolution Si 2*p* spectrum is analyzed. The deconvolution peak analysis results of high-resolution Si 2p spectrum in the X-ray photoelectric spectroscopy (XPS) testing of the nano silicon-oxygen-carbon composite material comprise comprise the ratio of the peak area of Si-O with a binding energy peak at 103 ± 0.5 eV to the peak area of Si-Si with a binding energy peak at 99 ± 0.5 eV is 0.5-2, preferably 0.8-1 .5, and the ratio of the peak area of Si-C with a binding energy peak at 100.5 ± 0.5 eV to the peak area of Si-Si with a binding energy peak at 99 ± 0.5 eV is 0.01-1, preferably 0.01-0.5. The proportion of each of the bonding forms can be calculated based on the corresponding peak areas.

In some embodiments, the 2-10 nm pore volume in the pore structure of the porous carbon skeleton of the nano silicon-oxygen-carbon composite material accounts for greater than 50% of the total pore volume, preferably, the 2-10 nm pore volume in the pore structure of the porous carbon skeleton of the nano silicon-oxygen-carbon composite material accounts for greater than 80% of the total pore volume. The pore structure of the porous carbon skeleton in the nano silicon-oxygen-carbon composite material can be obtained through testing after obtaining the porous carbon skeleton in the early stage of the preparation process, or obtained through testing the remaining porous carbon skeleton after etching the Si and SiO_{δ} in the nano silicon-oxygen-carbon composite material using HF and a high concentration NaOH solution, etc., the latter has a certain deviation in understanding the pore structure of the porous carbon skeleton in the nano silicon-oxygen-carbon composite material due to the degree of etching and the possibility of generating new pores, but it can also reflect its properties within a certain range.

In some embodiments, the silicon nanoparticles include silicon crystal particles and/or non-crystalline silicon, preferably the crystal size of the silicon crystal particles is less than 5 nm, and further preferably the crystal size of the silicon crystal particles is less than 2 nm. It is calculated according to the half peak width of the characteristic peak of Si crystal at 2*θ*=28.4° in the XRD diffraction results, and the formula used is Scherrer's Formula. Due to the presence of diffraction near 2*θ*=26.6° for the carbon material, amorphous carbon usually exhibits as a peak envelope, for the silicon nanoparticles with crystal grain size of less than 2 nm or close to amorphous form, the characteristic peak of Si crystal at 2*θ*=28.4° overlaps with the carbon diffraction peak, thus there is no obvious Si crystalline peak in the XRD diffraction results. The morphology of silicon nanoparticles can also be observed through high-resolution Transmission Electron Microscopy (TEM), and the size of a single silicon nanoparticle can be determined by the number of lattice fringes in a group of lattice fringes conforming to the silicon crystal. The strongest diffraction peak at 2*θ*=28.4° in Si crystal corresponds to the interplanar spacing of Si (111) of 0.312 nm, when the ordered lattice fringes are less than 6, the corresponding silicon crystal particle size is less than 2 nm.

On the other hand, although the silicon-oxygen-carbon material exhibits as non-crystalline silicon or smaller than 2 nm size of silicon crystal particles, in the electrochemical process of the electrode, the silicon crystal particles may undergo recombinationzzto fusion to form larger particles, affecting the cycle performance of the electrode. In view of this, the disclosure provides a method for accelerating aging to analyze the aggregation of silicon nanoparticles, that is, by treating the nano silicon-oxygen-carbon composite material at an elevated temperature in the N₂ atmosphere, and carrying out XRD testing, the growth of silicon crystal particles is analyzed. Upon testing, the composite material is further treated at 700°C, 800°C, and 900°C, after the treatment at 700°C, a certain crystalline peak at 2*θ*=28.4° is exhibited, indicating that the formation of Si crystals begins, the intensity of the silicon crystalline peak in the XRD curve increases after the treatment at 800°C, the Si crystalline peak in the composite material sample treated at 900°C has basically the same results as those after the treatment at 800°C, indicating that the growth of Si crystal particles has reached its limit. The size of crystal particles after high temperature treatment can be calculated according to the half peak width of the silicon crystalline peak, which indirectly reflects the extent of fusion and aggregation of silicon crystal particles in the electrochemical process. In the disclosure, an oxygen containing substance is introduced to disperse the silicon nanoparticles and prevent same from further aggregation and growth, and the pore structure of the porous carbon skeleton also ultimately restricts the size of the silicon nanoparticles. As mentioned above, the present disclosure estimates the limit size of silicon nanoparticles increased in the nano silicon-oxygen-carbon composite material in the electrochemical process through the XRD results of the composite material after treated at 800°C in N₂ atmosphere, and preferably the limit size of silicon nanoparticles increased in the electrochemical process is controlled to be less than 10 nm.

The effect of completely dense materials on suppressing the volume effect of lithium silicon alloys is limited, an appropriate amount of closed pores in the composite material is beneficial for alleviating the volume effect of silicon. The closed pores are pores enclosed inside the surface of the composite material, and no point of the pores is in contact with the surface of the material, the surface is one with which the N₂ molecules can contact, that is, the closed pores are pores to which the N₂ molecules cannot access or are basically inaccessible, and these pores enclosed within the composite material can provide buffer space for the volume expansion of lithium intercalated silicon. However, excessive closed pores lead to an increase in the volume of the material, resulting in a decrease in the volumetric specific capacity. More importantly, excessive closed pores leads to a decrease in the structural strength of the composite material, which may lead to structural collapse during the subsequent tabletting process, therefore, the amount of closed pores should not be too large. Closed pores cannot be obtained by conventional physical adsorption methods because they belong to areas that adsorbed molecules cannot access or are basically unable to directly access. For example, N₂ adsorption can only detect the open pores and their surface area, this part of pores and surface will come into contact with the electrolytic solution, which is not conducive to the electrode performance of the material. The detection of closed pores is inferred by measuring the true density of composite material, when the true density of the material is less than the true density of a completely dense material with the same element composition, it indicates the existence of closed pores. The volume of closed pores is the reciprocal of the true density of the composite material (the volume of closed pores and skeleton) minus the reciprocal of the true density of a completely dense material with the same element composition (skeleton volume). The density of both the pure graphite and the silicon is greater than 2.2 g/cm³. The true density of composite material can be obtained through helium displacement method and/or giavimeter method (acetone immersion method) testing. This disclosure uses the giavimeter method to measure the true density of composite material. In some embodiments, the true density of nano silicon-oxygen-carbon composite material is 1.8-2.1 g/cm³, indicating that a certain amount of closed pores exists.

In some embodiments, the nano silicon-oxygen-carbon composite material further includes a clading layer, the clading layer includes a solid electrolyte and/or a conductive polymer. Specific solid electrolyte and conductive polymer can make reference to the existing technologies, and will not be repeated in this disclosure.

In order to improve the compaction density of the composite material, the median particle diameter D₅₀ of the composite material can be controlled through crushing and other methods, in some embodiments, the median particle diameter D₅₀ of the composite material is between 2 µm and 12 µm.

In another typical embodiment of the disclosure, a preparation method of the nano silicon-oxygen-carbon composite material is provided, wherein the preparation method comprises: step S1, mixing and carbonizing a carbon precursor and a pore forming agent to form a porous carbon skeleton material, and crushing and oxidizing same to obtain a porous carbon skeleton containing a surface oxidized layer and having a suitable specific surface area and pore structure; step S2, vacuumizing the porous carbon skeleton containing the surface oxidized layer obtained in step S1, introducing a silicon containing precursor and an oxygen containing precursor into a reaction furnace provided with the porous carbon skeleton containing the surface oxidized layer, and making same come into contact with the porous carbon skeleton containing the surface oxidized layer, and allowing silicon and the oxygen containing substance to disperse and deposit onto the surface and/or within the pores of the porous carbon substrate; and crushing and shaping the obtained material to obtain the nano silicon-oxygen-carbon composite material 1; and step S3, subjecting the nano silicon-oxygen-carbon composite material 1 obtained in step S2 to deep oxidation treatment so as to obtain the nano silicon-oxygen-carbon composite material.

The above reaction furnace is any one or more of a rotary furnace, a ladle furnace, a liner furnace, a roller kiln, a pushed slab kiln, an atmosphere box furnace, or a tube furnace or a combination thereof; wherein in steps S2 and S3, the solid-gas two-phase contact method is any one or more of various methods such as fixed bed, moving bed, fluidized bed, and boiling-bed, etc., or a combination thereof.

In some embodiments, the particle size of the porous carbon skeleton containing a surface oxidized layer in the step S1 is 5-50 µm, the specific surface area of the porous carbon skeleton containing a surface oxidized layer is 50-2000 m²/g, and the pore volume is 0.1-3.0 cm³/g, and in the pore structure of the porous carbon skeleton containing a surface oxidized layer, the 2-10 nm pore volume accounts for greater than 50% of the total pore volume; and/or the step S2 specifically includes vacuumizing the porous carbon skeleton containing the surface oxidized layer in step S1 to a vacuum degree below 10⁻² Pa, preferably below 10⁻⁶ Pa, introducing a silicon-containing precursor and an oxygen containing precursor into a reaction furnace providing with the porous carbon skeleton containing the surface oxidized layer, and taken into contact with the porous carbon skeleton containing the surface oxidized layer at 150-700°C for 5-100 hours, and allowing silicon and the oxygen containing substance to disperse and deposit onto the surface and/or within the pores of the porous carbon skeleton; and crushing and shaping the obtained material to obtain the nano silicon-oxygen-carbon composite material 1 having a median particle diameter of 2-12 µm; and/or the deep oxidation treatment in the step S3 including contacting the nano silicon-oxygen-carbon composite material 1 with a solution and/or a gas containing an oxidizing substance at 0-400°C for 0.5-12 hours.

The pore size distribution of the porous carbon skeleton affects the size of silicon nanoparticles to a large extent, a suitable porous carbon skeleton should contain more mesopores (with a pore size of 2-50 nm), and a small amount of micropores (with a pore size of less than 2 nm) and macropores (with a pore size of greater than 50 nm). Mesopores and macropores should be the main areas for silicon deposition, but excessive macropores are easy to cause the aggregation and growth of silicon nanoparticles. In some embodiments, the specific surface area of the porous carbon skeleton containing the surface oxidized layer in the disclosure is 50-2000 m²/g, and the pore volume is 0.1-3.0 cm³/g, and the particle size of the porous carbon skeleton containing the surface oxidized layer is 5-50 µm; the pore volume of the micropores in the pore structure of the porous porous carbon skeleton containing a surface oxidized layer accounts for 1-20% of the total pore volume, the pore volume of the mesopores accounts for 40-90% of the total pore volume, and the pore volume of the macropores accounts for 0-10% of the total pore volume; in the pore structure of the porous carbon skeleton containing a surface oxidized layer, the 2-10 nm pore volume accounts for greater than 50% of the total pore volume, preferably the 2-10 nm pore volume accounts for greater than 80% of the total pore volume.

The corresponding implementation method for the preparation method of the porous carbon skeleton containing a surface oxidized layer according to the disclosure can be selected according to different carbon precursors and/or porous carbon skeletons.

In some embodiments, the porous carbon skeleton material in the step S1 is formed by co-carbonization of a uniform mixture of carbon precursor and pore forming agent; the carbon precursor is selected from one or more of glucose, fructose, sucrose, maltose, lactose, cyclodextrin, starch, glycogen, cellulose, hemicellulose, lignin, unsaturated polyester resin, epoxy resin, thermoplastic phenolic resin, thermosetting phenolic resin, polyformaldehyde resin, urea formaldehyde resin, furfural resin, furfural ketone resin, acrylic resin, polyamide, polyimide, asphalt; the pore forming agent is selected from one or more of sodium dodecylbenzene sulfonate, cetyl trimethyl ammonium bromide, polyethylene glycol, polyvinyl alcohol, polyvinyl pyrrolidone, oleic acid, oleylamine, polyethylene oxide-polypropylene oxide-polyethylene oxide triblock copolymer, citric acid, malic acid, succinic acid, NH₄HCO₃, (NH₄)₂CO₃, HNOs, H₂SO₄, LiOH, NaOH, and KOH, etc., preferably, the polyethylene oxide-polypropylene oxide-polyethylene oxide triblock copolymer is selected from P123, F127, and/or F108. The mixing of carbon precursor and pore forming agent can be carried out in a manner familiar to those skilled in the art. In some embodiments, the carbon precursor and pore forming agent are mixed by wet ball milling and/or dry ball milling. In some embodiments, the carbon precursor and pore forming agent are dissolved together in water and/or ethanol, thoroughly mixed by ultrasound and/or stirring, etc. before drying. After mixing the carbon precursor with the pore forming agent, the mixture is first pre-stabilized and then carbonized. The pre-stabilization and carbonization are both routine procedures in the preparation process of carbon materials. The pre-stabilization is carried out in an oxidizing atmosphere at a temperature of 100-300°C for a time of 0.1-48 hours; the carbonization is carried out in an inert gas at a temperature of 600-1800°C for a time of 0.5-10 hours, further preferably, the carbonization is carried out at a temperature of 800-1500°C for a time of 2-5 hours.

The porous carbon skeleton material is subjected to oxidation treatment to generate a surface oxidized layer so as to promote effective deposition of a silicon-containing precursor, the oxidation treatment includes liquid phase oxidation and/or gas phase oxidation. Preferably, the oxidation treatment method for the porous carbon skeleton material in the step S1 includes liquid phase oxidation and/or gas phase oxidation; preferably, the liquid phase oxidation comprises the steps of placing the porous carbon skeleton material in an oxygen-containing compound and/or an aqueous solution and/or an ethanol solution of an oxygen-containing compound, sonicating and dispersing for 0.5-2 hours, then stirring at 0-50°C for 0.5-12 hours, filtering and/or centrifuging to separate the solid with the liquid, washing the solid multiple times with deionized water and/or ethanol, and vacuum drying and roasting the obtained solid, wherein the oxygen-containing compound is selected from any one or more of HNOs, H₂SO₄, acetic acid, propionic acid, butanol, butyric acid, succinic acid, malic acid, and citric acid; and preferably, the gas phase oxidation comprises the steps of vacuumizing the porous carbon skeleton material to a vacuum degree below 10⁻² Pa, then introducing a mixed gas comprising an oxidizing gas and an inert gas, and contacting at 300-1600°C for 0.1-5 hours, preferably contacting at 600-900°C for 2-4 hours; wherein the oxidizing gas is selected from any one or more of carbon dioxide, water vapor, methanol, ethanol, acetic acid, propanol, butanol, and acetone, the inert gas is one or more of nitrogen, argon, and helium, and the oxidizing gas accounts for 0.5-20% of the mixed gas.

In some embodiments, during the implementation process of the step S2, the silicon containing precursor and the oxygen containing precursor are combined in any volume ratio; preferably the silicon containing precursor is selected from one or more of monosilane, disilane, trisilane, halosilane, polysilane, polymethylsilane, silole and a derivative thereof, silafluorene and a derivative thereof; preferably the oxygen containing precursor is one or more of oxygen, carbon dioxide, water vapor, methanol, ethanol, n-propanol, isopropanol, butanol, acetone, and butanone; and preferably, the volume ratio and vapor deposition temperature of the silicon containing precursor and the oxygen containing precursor exhibit intermittent and/or periodic changes with the extension of the introduction time; and preferably, a vacuumizing treatment is carried out before changing the gas composition until the vacuum degree is below 10⁻² Pa.

In some embodiments, the step S2 involves introducing an inert gas simultaneously with introducing both silicon-containing and oxygen-containing precursors to regulate the concentration of silicon-containing and oxygen-containing precursors and provide an appropriate pressure, wherein the inert gas is one or more of nitrogen, argon, and helium. When the silicon-containing precursor and oxygen-containing precursor are simultaneously introduced with an inert gas, the three can be introduced in a mixed gas form or separately introduced to form a mixed gas in the reaction furnace, in any case, as long as the silicon-containing precursor, the oxygen-containing precursor and an inert gas are simultaneously introduced, it is called that the first mixed gas of the silicon-containing precursor and the oxygen-containing precursor with the inert gas is introduced, and the oxygen-containing precursor is one or more of methanol, ethanol, n-propanol, isopropanol, butanol, acetone and butanone. The volume content of silicon-containing precursor in the first mixed gas is 1-50%, and the volume content of the oxygen containing precursor is 0.5-10%; preferably, the heat treatment temperature when introducing the first mixed gas is 400-700°C, and further preferably, the heat treatment time when introducing the first mixed gas is 5-50 hours.

In some embodiments, the step S2 involves introducing an inert gas before, after, or simultaneously with the silicon-containing precursor and the oxygen-containing precursor, or the inert gas can be introduced in the interval between the silicon containing precursor and the oxygen containing precursor, and the inert gas is one or more of nitrogen, argon, and helium, to regulate the concentration of silicon-containing and oxygen-containing precursors and provide an appropriate pressure. When the silicon-containing precursor and the inert gas are simultaneously introduced, the two can be introduced in a mixed gas form or separately introduced to form a mixed gas in the reaction furnace. In any case, as long as the silicon-containing precursor and the inert gas are simultaneously introduced, it is called that the second mixed gas of the silicon-containing precursor and the inert gas is introduced, and the volume content of the silicon precursor in the second mixed gas is 1-50%, and when the oxygen-containing precursor and the inert gas are simultaneously introduced, the two can be introduced in a mixed gas form or separately introduced to form a mixed gas in the reaction furnace. In any case, as long as the oxygen-containing precursor and the inert gas are simultaneously introduced, it is called that the third mixed gas of the oxygen-containing precursor and the inert gas is introduced, and the volume content of the oxygen precursor in the third mixed gas is 1-50%.

In some embodiments, the above step S2 includes: step S2-1, introducing an inert gas into a reaction furnace providing with a porous carbon skeleton containing a surface oxidized layer, and increasing the temperature of the reaction furnace to 400-700°C; step S2-2, introducing a second mixed gas of the silicon containing precursor and the inert gas, with a concentration by volume of 1%-50% of the silicon containing precursor in the second mixed gas, and holding the reaction furnace at 400-700°C for 0.5-15 hours; step S2-3, stopping the introduction of the silicon containing precursor, and adjusting the temperature of the reaction furnace to 150-600°C; step S2-4, introducing a third mixed gas of the oxygen containing precursor and the inert gas, with a concentration by volume of 1%-50% of the oxygen containing precursor in the third mixed gas, and holding the reaction furnace at 150-600°C for 0.1-5 hours; and step S2-5, repeating step S2-1 to step S2-4 for 2-50 times; step S2-6, crushing and shaping the obtained material to obtain the nano silicon-oxygen-carbon composite material 1 having a median particle diameter of 2-12 µm, wherein the crushing and shaping process is carried out through one or more methods such as airflow milling, dry ball milling, and wet ball milling, etc.

In some embodiments, the deep oxidation treatment in the step S3 includes liquid phase oxidation and/or gas phase oxidation; preferably, the liquid phase oxidation comprises the steps of placing the nano silicon-oxygen-carbon composite material 1 in an oxidizing substance and/or an aqueous solution and/or an ethanol solution of an oxidizing substance, sonicating and dispersing for 0.5-2 hours, then stirring at 0-50°C for 0.5-12 hours, filtering and/or centrifuging to separate the solid with the liquid, washing the solid multiple times with deionized water and/or ethanol, and forced air drying the obtained solid at 40-200°C for 0.5-24 hours, and treating in an inert atmosphere at 200-400°C for 0.5-5 hours, wherein the oxygen-containing compound is selected from any one or more of KMnO₄, H₂O₂, HNOs, H₂SO₄, acetic acid, propionic acid, butyric acid, succinic acid, malic acid, and citric acid, and the liquid phase oxidation is carried out under the action of ultraviolet light and/or microwave radiation; and preferably, the gas phase oxidation comprises the steps of vacuumizing the nano silicon-oxygen-carbon composite material 1 to a vacuum degree below 10⁻² Pa, then introducing a mixed gas comprising an oxidizing gas and an inert gas, and controlling the heating rate at 1-10°C/min, heating up from room temperature to 200-400°C, and treating at 200-400°C for 0.1-5 hours; wherein the oxidizing gas is selected from any one or more of oxygen, ozone, carbon dioxide, and water vapor, the inert gas is one or more of nitrogen, argon, and helium, and the oxidizing gas accounts for 0.5-20% of the mixed gas.

In some embodiments, before the step S3, an acid treatment and/or an alkali treatment process for the nano silicon-oxygen-carbon composite material 1 obtained by crushing in the step S2 is added; preferably, the acid treatment method involves dispersing the nano silicon-oxygen-carbon composite material 1 into an aqueous/ethanol solution containing acid, stirring at 0-50°C for 0.5-12 hours, filtering and/or centrifuging to separate the solid with the liquid, washing the solid multiple times with deionized water and/or ethanol until the pH of the filtrate and/or supernatant is neutral, and vacuum drying the resulting solid; the alkali treatment method involves dispersing the nano silicon-oxygen-carbon composite material 1 into an aqueous/ethanol solution containing alkali, stirring at 0-50°C for 0.5-12 hours, filtering and/or centrifuging to separate the solid with the liquid, washing the solid multiple times with deionized water and/or ethanol until the pH of the filtrate and/or supernatant is neutral, and vacuum drying the resulting solid; the acid is one or more of HCl, H₂SO₄, HNOs, and H₃PO₄, and the base is one or more of NaOH, KOH, Na₂CO₃, K₂CO₃, NH₃H₂O, NH₄HCO₃, (NH₄)₂CO₃, and urea.

In some embodiments, after the step S3, vacuum treating and carbon clading the nano silicon-oxygen-carbon composite material, wherein the carbon clading method involves using one or more of methane, ethane, propane, butane, ethylene, propylene, butene, acetylene, propyne, methanol, ethanol, n-propanol, isopropanol, butanol, propanone, and butanone to perform vapor deposition on the nano silicon-oxygen-carbon composite material, or using a liquid carbon precursor for liquid phase carbon clading, and preferably the liquid carbon precursor is selected from resin and asphalt, etc.

In some embodiments, the preparation method further includes the step of clading a solid electrolyte and/or a conductive polymer on the nano silicon-oxygen-carbon composite material.

In another typical embodiment of the disclosure, an application of the nano silicon-oxygen-carbon composite material in the preparation of an anode material is provided, the nano silicon-oxygen-carbon composite material is the nano silicon-oxygen-carbon composite material mentioned above or the nano silicon-oxygen-carbon composite material obtained by any of the preparation methods mentioned above.

In another typical embodiment of the disclosure, an anode is provided, which includes an anode material, the anode material is the nano silicon-oxygen-carbon composite material mentioned above or the nano silicon-oxygen-carbon composite material obtained by any of the preparation methods mentioned above.

In another typical embodiment of the disclosure, the disclosure provides an electrochemical device comprising an anode, which is the aforementioned anode; preferably, the electrochemical device is a lithium-ion secondary battery.

### 2. Beneficial effects

Compared with the existing technology, it has the following beneficial effects:
By applying the technical solution of the disclosure, a stable binding is formed between the porous carbon carrier and the silicon nanoparticles in the nano silicon-oxygen-carbon composite material of this disclosure through C-O-Si, the silicon nanoparticles are uniformly dispersed in the pores and on the surface of the carbon carrier and are separated and bounded by the oxygen-containing substance, thereby effectively suppressing the aggregation of silicon particles during the deposition process, as well as their volume change and possible fusion during the charge and discharge cycle, the lithium ion secondary battery containing the anode prepared from the obtained composite material has excellent characteristics such as a high capacity per gram, high initial coulombic efficiency and good cycle performance etc., at the same time.

### Brief Description of the Drawings

The accompanying drawings of the description, which form a part of the disclosure, are used to provide a further understanding of the disclosure. The illustrative embodiments and their descriptions of the disclosure are used to explain the disclosure, and do not constitute an improper limitation thereto. In the accompanying drawings:
Figure 1 shows a structural schematic diagram of the nano silicon-oxygen-carbon structural composite material obtained according to embodiment 1 of the disclosure;
Figure 2 shows an XRD diffraction spectrum of the nano silicon-oxygen-carbon structural composite material obtained according to embodiment 1 of the disclosure;
Figure 3 shows a HRTEM diagram of the nano silicon-oxygen-carbon structural composite material obtained according to embodiment 1 of the disclosure;
Figure 4 shows the constant current charge and discharge curves of the electrode containing the nano silicon-oxygen-carbon structural composite material obtained from embodiment 1 of the disclosure, the electrode containing the composite material from embodiment 23, and the electrode containing the composite material of comparative embodiment 2;
Figure 5 shows the XRD spectra of the nano silicon-oxygen-carbon structural composite materials obtained from embodiments 1 and 23 of the present disclosure, as well as the composite material of comparative embodiment 2 after being treated in a N₂ atmosphere at 800°C;
Figure 6 shows the half cell cycle performance test results of the electrode containing the nano silicon-oxygen-carbon structural composite material in embodiment 1 and the electrode containing the composite material in comparative embodiment 2;
Figure 7 shows a structural schematic diagram of the nano silicon-oxygen-carbon structural composite material obtained according to embodiment 26 of the disclosure; and
Figure 8 shows diagrams of high-resolution Si 2*p* spectrum in an XPS testing and its deconvolution peak analysis results of the nano silicon-oxygen-carbon structural composite material obtained according to embodiment 26 of the disclosure;
Figure 9 is a structural schematic diagram of the nano silicon-oxygen-carbon structural composite material of the disclosure;
Figure 10 shows the high-resolution Si 2*p* spectrum in an XPS testing and its deconvolution peak analysis results of the nano silicon-oxygen-carbon composite material obtained from embodiment 1;
Figure 11 shows the XRD spectra of the nano silicon-oxygen-carbon composite material obtained from embodiment 1 and its material obtained after treated in a N₂ atmosphere at 800°C;
Figure 12 shows a high-resolution TEM image of the nano silicon-oxygen-carbon composite material obtained from embodiment 1;
Figure 13 shows the initial constant current charge and discharge curve of a half cell test result of the electrode containing the nano silicon-oxygen-carbon composite material obtained in embodiment 1; and
Figure 14 shows the half cell cycle performance test results of the electrode containing the nano silicon-oxygen-carbon composite material obtained in embodiment 1 and the electrode containing the silicon-oxygen-carbon composite material obtained in comparative embodiment 2.

### Detailed Description of the Embodiments

It should be noted that the embodiments and features in the embodiments in the disclosure can be combined with each other without conflict. The disclosure will be described in detail below with reference to the drawings and in combination with embodiments.

As analyzed in the background of this disclosure, it is difficult for a silicon-carbon composite material in the prior art to achieve effective deposition and uniform dispersion of silicon nanoparticles on a porous carrier during the preparation process, thus it is difficult to suppress significant volume expansion and contraction of the electrode during the charge and discharge processes, ultimately leading to deterioration of electrode cycle performance. In addition, during the charge and discharge processes of the battery, fusion between adjacent silicon particles may occur, leading to further deterioration of electrode cycle performance. In order to control the rapid growth and agglomeration of silicon nanoparticles in the preparation process of a silicon-carbon composite material, so as to obtain a composite material containing uniformly dispersed silicon nanoparticles, and control the volume effect in the charge and discharge process of electrodes and the fusion of adjacent silicon nanoparticles, this disclosure provides a nano silicon-oxygen-carbon structural composite material, a preparation method thereof, an anode, and an electrochemical device.

In a typical embodiment of the disclosure, a nano silicon-oxygen-carbon structural composite material is provided, the composite material comprising (C_{*x*1}-O_{*y*1})-(Si*_{z}*-O_{*y*2}-C_{*x*2}), wherein C_{*x*1}-O_{*y*1} is a porous carbon substrate containing a surface oxidized layer, comprising the porous carbon substrate and its surface oxidized layer, *x*1 is the stoichiometric number of carbon, *y*1 is the stoichiometric number of oxygen in the surface oxidized layer, and 0.001≤*y*1/*x*1≤0.05; Si*_{z}*-O_{*y*2}-C_{*x*2} comprises silicon nanoparticles, an oxygen-containing substance, and an optional carbon, the silicon nanoparticles, the oxygen-containing substance, and the optional carbon are dispersedly distributed on the surface and/or within the pores of the porous carbon substrate containing a surface oxidized layer, and the oxygen-containing substance presents in a form of SiO_{δ}, and 0<*δ*≤2, 0.1≤*z*/*x*1≤2, 0.01≤*y*2/*z*≤0.15, 0≤*x*2/*z*≤0.15.

The silicon nanoparticles are uniformly dispersed in the nano silicon-oxygen-carbon structural composite material of the disclosure, and are separated and bounded by the oxygen-containing substance and the optional carbon, thereby effectively suppressing the aggregation of silicon nanoparticles during the deposition process, as well as their volume change and possible fusion during the charge and discharge cycle, the lithium ion secondary battery containing the anode prepared from the obtained composite material has a high capacity per gram, high initial coulombic efficiency and good cycle performance.

The above mentioned C_{*x*1}-O_{*y*1} is a porous carbon substrate containing a surface oxidized layer, including the porous carbon substrate and its surface oxidized layer, predominantly the carbon substance C, the surface oxidized layer can be formed by forming a small amount of residual oxygen-containing functional groups on the surface of the porous carbon substrate after incomplete carbonization and/or by an oxidation treatment on the porous carbon substrate, the role of which is to provide better silicon deposition sites through the formation of C-O-Si chemical actions, *x*1 is the stoichiometric number of carbon, which is only an algebra in the molecular formula, and aims to better express the content of related substances. The content of surface oxidized layer in the porous carbon substrate is defined and expressed by the molar ratio *y*1/*x*1 of oxygen element to carbon element in the porous carbon substrate, with 0.001≤*y*1/x1≤0.05. If *y*1/*x*1 is too large, excess oxygen will react irreversibly with lithium during the lithium intercalation process, resulting in a loss of reversible lithium capacity and a decrease in the initial coulombic efficiency and cycle efficiency of the battery; if it is too small, effective C-O-Si chemical contact and/or bonding cannot be formed, and the subsequent silicon deposition process is prone to the formation of larger silicon particle aggregates.

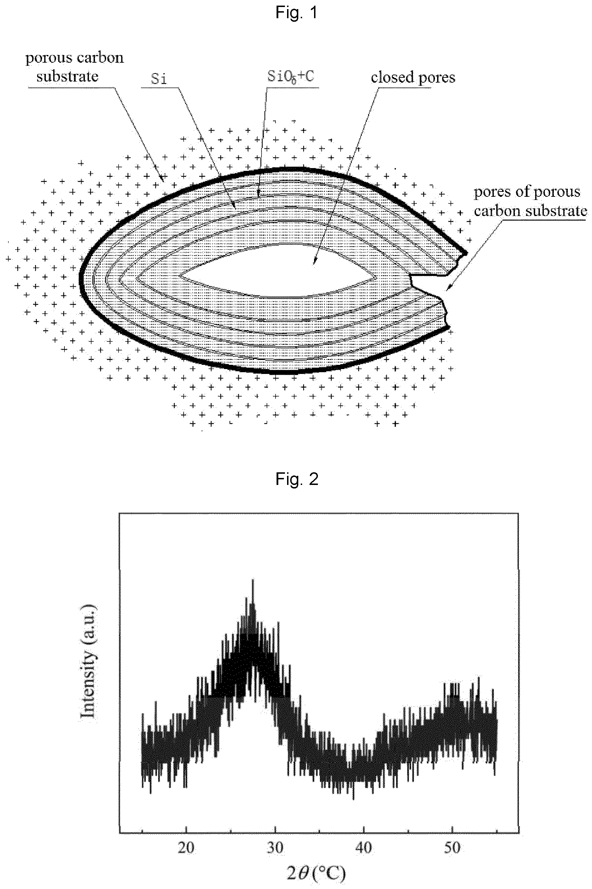

The above Si*_{z}*-O_{*y*2}-C_{*x*2} is the silicon nanoparticles, an oxygen-containing substance, and an optional carbon which uniformly dispersed within the pores and on the surface of the above mentioned porous carbon substrate C_{*x*1}-O_{*y*1}, the silicon nanoparticles are uniformly staggered with the oxygen-containing substance and the optional carbon, and the oxygen-containing substance presents in a form of SiO*_{δ}*(0<*δ*≤2), the Si*_{z}*-O_{*y*2}-C_{*x*2} structural component can be considered as repetition of Si-O-C(Si-SiOó-C) building block, and can be written as (Si_{*z*1}-O*_{y}*-C*ₓ*)*ₙ*, *n*≥1, as shown in the schematic diagram of Figure 1. Due to the fact that silane decomposition is a chain reaction process of thermal polymerization, the uncontrolled result is the rapid aggregation and growth of silane. In the present disclosure, there are an oxygen-containing substance and an optional carbon between Si nanoparticles, that is, the Si nanoparticles are dispersed and bounded by a small amount of the oxygen-containing substance and the optional carbon to avoid uncontrolled aggregation and growth during their deposition process, and effectively control the volume expansion and contraction of silicon during the charge and discharge processes, as well as the fusion among silicon particles. The silicon loading needs to be within a suitable range to obtain a higher capacity per gram and a higher initial coulombic efficiency of the composite material, which are controlled at 0.1≤*z*/*x*1≤2, preferably 0.2≤*z*/*x*1≤1, and more preferably 0.3≤*z*/*x*1≤0.6 in the present disclosure. By using the *z*/*x*1 value mentioned above to control the physicochemical properties of the composite material, the following can be avoided: if the silicon loading is too low, it is not enough to obtain a higher capacity per gram of composite material, and there are still many pore structures retained on the porous carbon substrate, resulting in an increase in the specific surface area of the final product and a decrease in the initial coulombic efficiency of battery, and at the same time, it will also lead to a decrease in the strength of material, which is easy to cause structural collapse during the tabletting and electrode reaction processes; and if the silicon load is too high, it is easy to cause silicon particles to aggregate and grow on the outer surface of the porous carbon substrate, larger silicon particles cannot effectively control the volume effect of the composite material electrode during the charge and discharge processes, resulting in a decrease in cycle performance of battery.

The oxygen-containing substance and the optional carbon in Si*_{z}*-O_{*y*2}-C_{*x*2} are used to disperse silicon particles, achieving the nanoscalization of silicon particles while acting to bound the silicon nanoparticles as well. The oxygen containing substance presents in the nano silicon-oxygen-carbon structural composite material in a form of SiO*_{δ}*, which can constrain the volume expansion and contraction of silicon nanoparticles during the charge and discharge processes, and prevent silicon nanoparticles from fusion and forming larger particles during the charge and discharge processes, resulting in deterioration of cycle performance of the electrodes. The amount of oxygen-containing substance and optional carbon should not be too high, as excessive amount will lead to a decrease in the overall Si content, resulting in a decrease in the capacity per gram and initial coulombic efficiency of composite material electrodes; If the amount is too small, it cannot plat an effective dispersing and bounding role, thus it is needed to be controlled at 0.01≤*y*2/*z*≤0.15, and 0≤*x*2/*z*≤0.15.

In summary, the present disclosure provides a nano silicon-oxygen-carbon structural composite material, including two structural components of a porous carbon substrate C_{*x*1}-O_{*y*1} containing a surface oxidized layer and Si*_{z}*-O_{*y*2}-C_{*x*2} uniformly dispersed on the outer surfaces and inside the pores thereof, the surface oxidized layer of the porous carbon substrate facilitates the formation of C-O-Si, thereby achieving a more stable silicon loading; in Si*_{z}*-O_{*y*2}-C_{*x*2}, the silicon nanoparticles are uniformly dispersed with the oxygen-containing substance and the optional carbon, the oxygen-containing substance and the optional carbon separate the silicon material, forming a repetitive structure similar to (Si_{*z*1}-O*_{y}*-C*ₓ*)*ₙ* (n ≥ 1), achieving effective nanoscalization and uniform dispersion of silicon particles, and at the same time, the oxygen-containing substance and the optional carbon also play a bounding role on silicon particles.

As mentioned above, when the content of oxygen materials in composite materials is controlled within a more appropriate range, it can avoid the problems of a decrease in overall Si content, a decrease in the capacity per gram and initial coulombic efficiency of electrodes due to excessive oxygen content, and inability to effectively disperse and bound silicon particles when the oxygen content is too low. In some embodiments, the total oxygen content of the composite material ranges from 0.5 wt% to 5 wt%.

In some embodiments, the deconvolution peak analysis results of high-resolution Si 2p spectrum in the X-ray photoelectric spectroscopy (XPS) testing of the nano silicon-oxygen-carbon structural composite material comprise the following characteristics, the ratio of the peak area of Si-O with a binding energy peak at 103 ± 0.5 eV to the peak area of Si-Si with a binding energy peak at 99 ± 0.5 eV is 0.5-2, preferably 0.8-1.5, and the ratio of the peak area of Si-C with a binding energy peak at 100.5 ± 0.5 eV to the peak area of Si-Si with a binding energy peak at 99 ± 0.5 eV is 0.01-1, preferably 0.01-0.5. The proportion of each of the bonding forms can be calculated based on the corresponding peak areas.

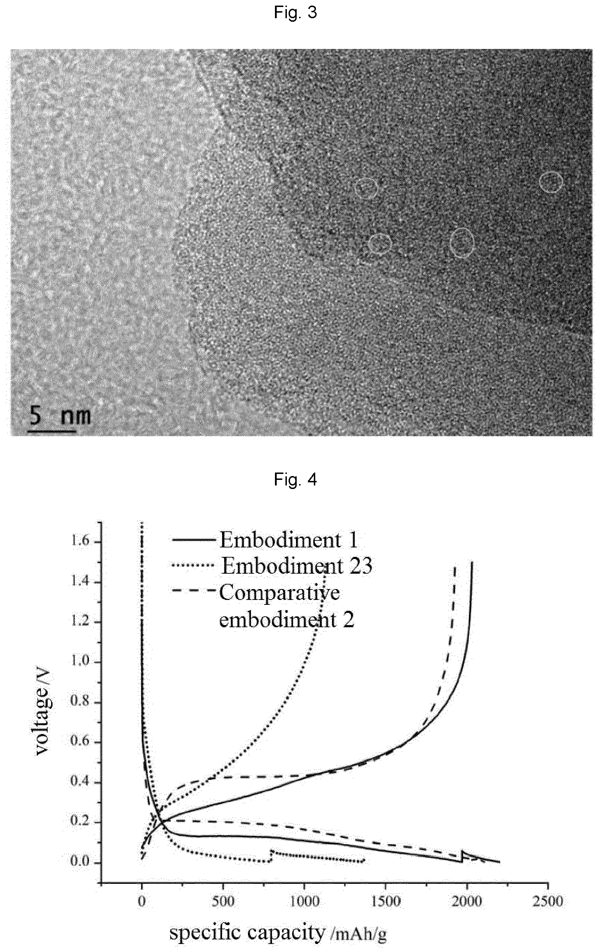

In some embodiments, the silicon nanoparticles in the nano silicon-oxygen-carbon structural composite material include silicon crystal particles and/or non-crystalline silicon, preferably the crystal size of the silicon crystal particles is less than 5 nm, and further preferably the crystal size of the silicon crystal particles is less than 2 nm. It is calculated according to the half peak width of the characteristic peak of Si crystal at 2*θ*=28.4° in the XRD diffraction results, and the formula used is Scherrer's Formula. Due to the presence of diffraction near 2*θ*=26.6° for the carbon material, amorphous carbon usually exhibits as a peak envelope, for the silicon nanoparticles with crystal grain size of less than 2 nm or close to amorphous form, the characteristic peak of Si crystal at 2*θ*=28.4° overlaps with the carbon diffraction peak, thus there is no obvious Si crystalline peak in the XRD diffraction results. In fact, the XRD diffraction results of the silicon-oxygen-carbon material obtained through silane vapor deposition in the present disclosure show no obvious Si crystalline peak, which is usually non-crystalline silicon (as shown in Figure 2), and TEM (as shown in Figure 3) also shows that the nano silicon-oxygen-carbon structural composite material mainly exhibits an amorphous structure, with few very small silicon crystal particles present, and its lattice fringe spacing is about 0.314 nm, closing to the interplanar spacing of Si (111). The number of ordered lattice fringes is only 4-5, and the corresponding silicon crystal particle size is less than 2 nm.

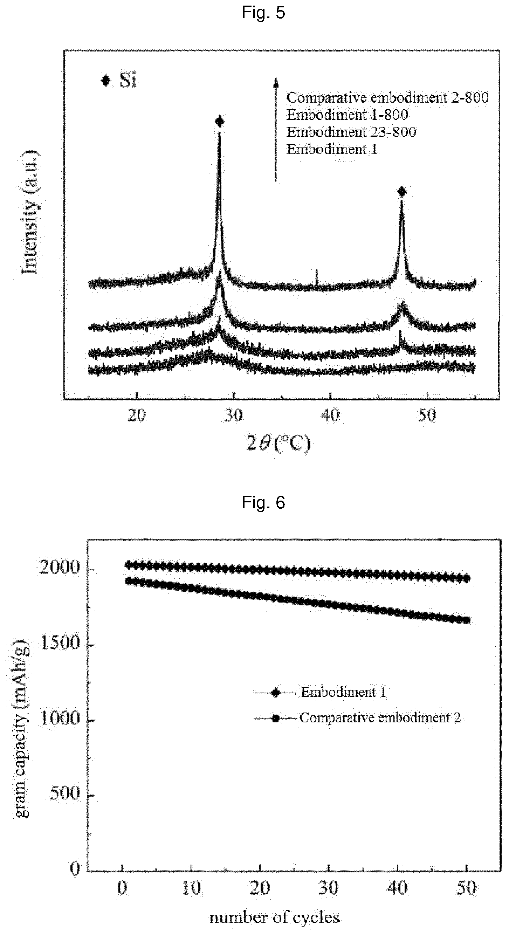

On the other hand, although the silicon-oxygen-carbon materials exhibit as non-crystalline silicon, they still exhibit completely different electrochemical properties due to different oxygen contents (Figure 4). This is not only reflected in the differences in capacity and initial coulombic efficiency that may be caused by the oxygen content mentioned above, and more significantly the composite materials with high oxygen content exhibit an obvious rape type delithiation curve, which is speculated to be related to the aggregation state of silicon particles (size of silicon nanoparticles) in different composite materials. Since the nano silicon-oxygen-carbon structural composite material is a dense material and the silicon, oxygen and carbon are uniformly distributed, it is not possible to accurately obtain the aggregation state of silicon particles through SEM and TEM examination, in view of this, the present disclosure provides a method for indirectly analyzing the aggregation state of silicon particles, and the results of which can be effectively correlated with the electrochemical properties of the composite material, that is, by treating the nano silicon-oxygen-carbon structural composite material in N₂ atmosphere at 800°C and carrying out XRD testing, the growth of silicon crystal particles is analyzed. Upon testing, the composite material is further treated at 700°C, 800°C, and 900°C, after the treatment at 800°C, the silicon crystalline peak in the XRD curve is basically stable and no longer changed due to the rising temperature. The silicon particles in the nano silicon-oxygen-carbon structural composite material undergo the transformation from amorphous particles to crystals under high temperature conditions, and further undergo crystal particle growth, however, the porous carbon substrate in the composite material does not change significantly under such treatment conditions, and it is still amorphous carbon material, at this point, the crystal particle size after high temperature treatment can be calculated from the half peak width of the silicon crystalline peak, and the number of crystal particles involved in crystallization can be speculated from the relative intensity of silicon crystalline peak and amorphous carbon peak, thereby indirectly reflecting the aggregation state of silicon particles in the nano silicon-oxygen-carbon structural composite material. The XRD test results after high temperature treatment are shown in Figure 5, it can be seen that the higher the oxygen content, the smaller the size of the silicon crystal particle after high temperature treatment, and the lower the degree of crystallization, which reflects the smaller the size of silicon nanoparticles in the composite material, and correspondingly the charge and discharge curve in Figure 4 shows a delithiation curve with a larger slope.

The smaller the silicon nanoparticles, the better the effect of preventing irreversible damage caused by uneven deformation gradients inside the particles, moreover, when they are uniformly dispersed in porous carbon carriers, the graphite-like structure and its pore structure in the carbon carriers can provide a certain buffer for the volume expansion of silicon during lithium intercalation. However, it is inevitable that silicon crystal particles will aggregate to a certain extent during the preparation process of composite materials, forming larger silicon nanoparticles. In the present disclosure, silicon nanoparticles are dispersed and prevented from further aggregation and growth by introducing an oxygen-containing substance and an optional carbon; in addition, the pore structure of the porous carbon substrate ultimately constrains the size of silicon nanoparticles. As mentioned above, the size of silicon particles is difficult to be directly detected and determined. The size of silicon nanoparticles in the nano silicon-oxygen-carbon structural composite material is estimated by the XRD results of composite material after it is treated at 800°C in a N₂ atmosphere in the present disclosure. Preferably the size of silicon nanoparticles is controlled to be less than 20 nm, and further preferably, the size of silicon nanoparticles is less than 10 nm.

Excessive specific surface area will lead to an increase in the contact area between the composite material electrode and the electrolytic solution, increasing interfacial side reactions, and consuming more reversible lithium in the formation of SEI films, resulting in a decrease in the initial coulombic efficiency and cycle performance of the battery. In some embodiments, the specific surface area (N₂ adsorption, multipoint BET) of the composite material is 0.1-15 m²/g, and the total pore volume (N₂ adsorption, as measured p/p0>0.999) is 0.001-0.05 cm³/g, preferably, the specific surface area of the composite material is 0.1-10 m²/g, and the total pore volume is 0.001-0.035 cm³/g. The lower specific surface area and total pore volume effectively suppress the occurrence of interfacial side reactions in the composite material electrode.

The effect of completely dense materials on suppressing the volume effect of lithium silicon alloys is limited, an appropriate amount of closed pores in the composite material is beneficial for alleviating the volume effect of silicon, however, excessive closed pores leads to an increase in the volume of the material, resulting in a decrease in the volumetric specific capacity. More importantly, excessive closed pores leads to a decrease in the structural strength of the composite material, which may lead to structural collapse during the subsequent tabletting process, therefore, the amount of closed pores should not be too large. Closed pores cannot be obtained by conventional physical adsorption methods because they belong to areas that adsorbed molecules cannot access directly, for example, N₂ adsorption can only detect the open pores and their surface area, this part of pores and surface will come into contact with the electrolytic solution, which is not conducive to the electrode performance of the material. The detection of closed pores is inferred by measuring the true density of composite material, when the true density of the material is less than the true density of a completely dense material with the same element composition, it indicates the existence of closed pores, the volume of closed pores is the reciprocal of the true density of the composite material (the volume of closed pores and skeleton) minus the reciprocal of the true density of a completely dense material with the same element composition (skeleton volume). The density of both the pure graphite and the silicon is greater than 2.2 g/cm³. The true density of composite material can be obtained through helium displacement method and/or gravimeter method (acetone immersion method) testing. This disclosure uses the gravimeter method to measure the true density of composite material, in some embodiments, the true density of nano silicon-oxygen-carbon structural composite material is 1.8-2.1 g/cm³, indicating that a certain amount of closed pores exists.

In some embodiments, the composite material further includes a cladding layer, the clading layer includes a solid electrolyte and/or a conductive polymer. To further improve its electrical performance. Specific solid electrolyte and conductive polymer can make reference to the existing technologies, and will not be repeated in this disclosure.

In order to improve the compaction density of the composite material, the median particle diameter D₅₀ of the composite material can be controlled through crushing and other methods, in some embodiments, the median particle diameter D₅₀ of the composite material is between 4 µm and 12 µm.

In another typical embodiment of the present disclosure, a preparation method for a nano silicon-oxygen-carbon structural composite material is provided, the preparation method includes: step S1, providing a porous carbon substrate containing a surface oxidized layer, wherein the molar ratio of oxygen to carbon in the porous carbon substrate containing the surface oxidized layer ranges from 0.001 to 0.05; step S2, introducing a silicon-containing precursor and an oxygen containing precursor into a reaction furnace providing with the porous carbon substrate containing the surface oxidized layer, and taken into contact with the porous carbon substrate containing the surface oxidized layer at 150-700°C for 5-100 hours, and allowing silicon, oxygen containing substance, and optional carbon to disperse and deposit onto the surface and/or within the pores of the porous carbon substrate to obtain the nano silicon-oxygen-carbon structural composite material.

Carbon precursor carbonization and silane vapor deposition are well-known technical means for those skilled in the art, however it is difficult to obtain uniformly dispersed silicon nanoparticle deposition in practical operations, which is related to many reasons, such as the structure of carbon precursor, treatment method, carbonization conditions, surface performance after carbonization, silicon deposition method and conditions, etc. Silane decomposition is a chain reaction of thermal polymerization, which is difficult to occur at low temperatures and has low utilization rate of silane, However, the decomposition rate is fast at high temperatures, and the silicon particles inevitably grow rapidly. The preparation method of the present disclosure first provides a porous carbon substrate surface that retains a small amount of oxygen-containing functional groups, that is, a porous carbon substrate containing a surface oxidized layer of the present disclosure, the surface oxidized layer can promote the adsorption and reaction of silane molecules, and in the process of silane decomposition and deposition, oxygen-containing precursors are introduced to form an oxidation separation layer for silicon nanoparticles, achieving uniform dispersion of silicon nanoparticles.

The above preparation method uses a porous carbon substrate containing a surface oxidized layer as a carrier and/or support (equivalent to the porous carbon skeleton containing a surface oxidized layer in the priority document (CN disclosure number 202210114895.6)), and the deposition of silicon nanoparticles, the oxygen-containing substance, and the optional carbon is carried out on the surface and in pore structure thereof, wherein the oxygen containing substance and the optional carbon play a role in separating and bounding the deposition layer of silicon nanoparticles, and the deposition may eventually leave a small amount of closed pores in the pores of the porous carbon substrate. Therefore, the volume effect of the uniformly dispersed and bounded silicon nanoparticles in the obtained nano silicon-oxygen-carbon structural composite material can be effectively buffered during the lithium intercalation and delithiation processes, the fusion phenomenon of silicon nanoparticles during the charge and discharge processes can be suppressed, and the material strength can be improved, which helps to improve the electrochemical performance of the electrochemical device containing the silicon-oxygen-carbon composite anode material.

The porous carbon substrate containing a surface oxidized layer may or may not be vacuumed before introducing a silicon-containing precursor and an oxygen-containing precursor into the porous carbon substrate containing the surface oxidized layer in the above step S2, wherein the vacuumizing treatment can accelerate the rate of initial deposition of a silicon containing precursor.

The structure, composition, and physical properties of the composite material obtained by the above preparation methods can make reference to the structure, composition, and physical properties of the composite materials mentioned above, and will not be repeated here.

The above reaction furnace is any one or more of a rotary furnace, a ladle furnace, a liner furnace, a roller kiln, a pushed slab kiln, an atmosphere box furnace, or a tube furnace or a combination thereof; wherein in step S2, the solid-gas two-phase contact method is any one or more of various methods such as fixed bed, moving bed, fluidized bed, and boiling-bed, etc., or a combination thereof.

The corresponding implementation method for the preparation method of the porous carbon substrate containing a surface oxidized layer according to the disclosure can be selected according to different carbon precursors and/or porous carbon substrates.

In some embodiments, the above step S1 includes: pre-stabilizing the carbon precursor to obtain a pre-stabilized precursor, wherein the carbon precursor is selected from one or more of monosaccharide, disaccharide, polysaccharide, unsaturated polyester resin, epoxy resin, phenolic resin, polyformaldehyde resin, urea aldehyde resin, furfural resin, furfuryl ketone resin, acrylic resin, polyamide, polyimide, polyvinyl alcohol and asphalt, the pre-stabilization is carried out in a fourth mixed gas comprising a first oxidizing gas and an inert gas, wherein the first oxidizing gas is oxygen and/or ozone, and the inert gas is one or more of nitrogen, argon, and helium, the pre-stabilization temperature is 100-300°C for a time of 0.1-48 hours, preferably the pre-stabilization temperature is 170-220 ° C for a time of 1-48 hours; and carbonizing the pre-stabilized precursor to obtain a porous carbon substrate, wherein the carbonizing is carried out in an inert gas, the inert gas is one or more of nitrogen, argon, and helium, preferably the carbonization temperature is 600-1800°C for a time of 0.5-10 hours, further preferably the carbonization temperature is 800-1500°C for a time of 2-5 hours. During the carbonization process, by adjusting the carbonization conditions, some oxygen-containing functional groups can be retained as the oxide layer. Alternatively, the porous carbon substrate can be oxidized to obtain a porous carbon substrate containing a surface oxidized layer.

The above pre-stabilization and carbonization are routine steps in the preparation process of carbon materials, and the pre-stabilization and carbonization in the priority document (CN disclosure number 202210114895.6) are similar to the above pre-stabilization and carbonization.

In one embodiment of the present disclosure, the preparation method of the porous carbon substrate containing the surface oxidized layer in the above step S1 involves mixing and carbonizing the carbon precursor and pore forming agent to form a carbonized material, and then subjecting the carbonized material to crushing and oxidizing treatment.

Specifically, preferably the step S1 includes: pre-stabilizing a uniform mixture of the carbon precursor and the pore forming agent to obtain a pre-stabilized material; then carbonizing the pre-stabilized material to obtain a porous carbon substrate; crushing and oxidizing the porous carbon substrate to obtain a porous carbon substrate containing a surface oxidized layer. The carbon precursor is selected from one or more of glucose, fructose, sucrose, maltose, lactose, cyclodextrin, starch, glycogen, cellulose, hemicellulose, lignin, unsaturated polyester resin, epoxy resin, thermoplastic phenolic resin, thermosetting phenolic resin, polyformaldehyde resin, urea aldehyde resin, furfural resin, furfural ketone resin, acrylic resin, polyamide, polyimide, asphalt; the pore forming agent is selected from one or more of sodium dodecylbenzene sulfonate, cetyl trimethyl ammonium bromide, polyethylene glycol, polyvinyl alcohol, polyvinyl pyrrolidone, oleic acid, oleylamine, polyethylene oxide-polypropylene oxide-polyethylene oxide triblock copolymer, citric acid, malic acid, succinic acid, NH₄HCO₃, (NH₄)₂CO₃, HNOs, H₂SO₄, LiOH, NaOH, and KOH, etc., preferably, the polyethylene oxide-polypropylene oxide-polyethylene oxide triblock copolymer is selected from P123, F127, and/or F108. The mixing of carbon precursor and pore forming agent can be carried out in a manner familiar to those skilled in the art. In some embodiments, the carbon precursor and pore forming agent are mixed by wet ball milling and/or dry ball milling. In some embodiments, the carbon precursor and pore forming agent are dissolved together in water and/or ethanol, thoroughly mixed by ultrasound and/or stirring before drying. The pre-stabilization and carbonization are both routine procedures in the preparation process of carbon materials. The pre-stabilization is carried out in an oxidizing atmosphere at a temperature of 100-300°C for a time of 0.1-48 hours; the carbonization is carried out in an inert gas at a temperature of 600-1800°C for a time of 0.5-10 hours, further preferably, the carbonization is carried out at a temperature of 800-1500°C for a time of 2-5 hours.

In some embodiments, the above oxidation is carried out in a fifth mixed gas of a second oxidizing gas and an inert gas, wherein the second oxidizing gas is selected from any one or more of oxygen, carbon dioxide, and water vapor, and the inert gas is one or more of nitrogen, argon, and helium; preferably, the oxidation temperature is 300-1600°C for a time of 0.1-5 hours, and further preferably the oxidation temperature is 600-900°C for a time of 2-4 hours, to form a stable oxide layer on the basis of retaining the porous structure as much as possible.

In another embodiments, the above step S1 also includes: directly oxidizing the porous carbon substrate to obtain a porous carbon substrate containing a surface oxidized layer, wherein the porous carbon substrate is selected from one or more of soft carbon, hard carbon, carbon black, graphite, graphene, carbon nanotube, carbon fiber, and mesophase carbon microspheres, preferably, the oxidation is carried out in a fifth mixed gas of a second oxidizing gas and an inert gas, wherein the second oxidizing gas is selected from any one or more of oxygen, carbon dioxide, and water vapor, and the inert gas is one or more of nitrogen, argon, and helium; preferably, the oxidation temperature is 300-1600°C for a time of 0.1-5 hours, and further preferably the oxidation temperature is 600-900°C for a time of 2-4 hours. That is, the porous carbon substrate containing a surface oxidized layer can also be obtained by using the porous carbon material in the prior art as the substrate for the above oxidation.

In some embodiments, the second oxidizing gas mentioned above can also be selected from any one or more of methanol, ethanol, acetic acid, propanol, butanol, and acetone, and the porous carbon substrate may or may not be vacuumed before it is oxidized, and vacuumizing the porous carbon substrate can clean its surface, which is more conducive to oxidation.

In the above oxidation, the ratio of the second oxidizing gas to the inert gas can be made reference to the existing technology, but it is usually dominated by the inert gas to avoid burning damage to the porous carbon material, for example, the first active oxygen gas and the inert gas are mixed at a volume ratio of 1:99 to 20:80; preferably, the second oxidizing gas accounts for 0.5-20% of the fifth mixed gas.

In yet some embodiments, the above oxidation is carried out in an oxygen-containing compound and/or an aqueous solution and/or an ethanol solution of an oxygen-containing compound, wherein the oxygen-containing compound is selected from any one or more of HNOs, H₂SO₄, acetic acid, propionic acid, butanol, butyric acid, succinic acid, malic acid, and citric acid; preferably, the oxidation step involves placing the porous carbon substrate in an oxygen-containing compound and/or an aqueous solution and/or an ethanol solution of an oxygen-containing compound, after ultrasound dispersing for 0.5-2 hours, stirring at 0-50°C for 0.5-12 hours, filtering and/or centrifuging to separate the solid with the liquid, washing the solid multiple times with deionized water and/or ethanol, and vacuum drying and roasting the resulting solid.

The nano silicon-oxygen-carbon structural composite material uses porous carbon as substrate. The porous carbon has a large specific surface area and abundant pore structure, providing a deposition area for the silicon nanoparticles. The specific surface area and pore distribution of porous carbon substrates directly affect the silicon deposition effect and the specific surface area of the composite material. While fully loading silicon nanoparticles, it is also necessary to avoid the problem of excessive side reactions caused by excessive specific surface area. A suitable porous carbon substrate should contain a large number of mesopores (with a pore size of 2-50 nm), as well as a small amount of micropores (with a pore size of less than 2 nm) and macropores (with a pore size of greater than 50 nm), wherein the mesopores and macropores should be the main areas of silicon deposition, but excessive macropores on the one hand can easily cause silicon particles to aggregate within the pores, and on the other hand, when silicon particles cannot fill the macropores, some pore structures will be left in the final composite material, resulting in a specific surface area that is too large to meet demand, and an appropriate amount of micropores may lead to the deposition of silicon at the pore opening, resulting in the formation of closed pores, and an appropriate amount of closed pores can help to alleviate the volume expansion of silicon during lithium intercalation, but excessive closed pores can lead to a decrease in the structural strength of the material. In some embodiments, the specific surface area of the porous carbon substrate containing the surface oxidized layer is 50-2000 m²/g, and the pore volume is 0.1-3.0 cm³/g, including micropores, mesopores, and macropores; preferably, wherein the pore volume of the micropores accounts for 1-40% of the total pore volume, the pore volume of the mesopores accounts for 30-80% of the total pore volume, and the pore volume of the macropores accounts for 1-40% of the total pore volume. In some embodiments, the specific surface area of the porous carbon substrate containing the surface oxidized layer is 100-1000 m²/g, and the pore volume is 0.3-1.5 cm³/g, preferably, the pore volume of the micropores accounts for 1-20% of the total pore volume, the pore volume of the mesopores accounts for 60-80% of the total pore volume, and the pore volume of the macropores accounts for 1-20% of the total pore volume, to realize the full loading of silicon nanoparticles, oxygen containing substance and optional carbon on the porous carbon substrate, so that the resulting composite material has appropriate silicon content and specific surface area.

In order to achieve sufficient blocking of silicon nanoparticles, in some embodiments, during the implementation process of the above step S2, the silicon containing precursor and the oxygen containing precursor are combined in any volume ratio, preferably the silicon containing precursor is selected from one or more of monosilane, disilane, trisilane, halosilane, polysilane, silole and a derivative thereof, silafluorene and a derivative thereof, etc, and preferably the oxygen containing precursor is one or more of oxygen, carbon dioxide, water vapor, methanol, ethanol, n-propanol, isopropanol, butanol, acetone, and butanone.

In some embodiments, the step S2 involves introducing an inert gas simultaneously with introducing both silicon-containing and oxygen-containing precursors to regulate the concentration of silicon-containing and oxygen-containing precursors and provide an appropriate pressure, wherein the inert gas is one or more of nitrogen, argon, and helium. When the silicon-containing precursor and oxygen-containing precursor are simultaneously introduced with an inert gas, the three can be introduced in a mixed gas form or separately introduced to form a mixed gas in the reaction furnace, in any case, as long as the silicon-containing precursor, the oxygen-containing precursor and an inert gas are simultaneously introduced, it is called that the first mixed gas of the silicon-containing precursor and the oxygen-containing precursor with the inert gas is introduced, and the oxygen-containing precursor is one or more of methanol, ethanol, n-propanol, isopropanol, butanol, acetone and butanone, the content of the silicon containing precursor in the first mixed gas is 1-50% by volume, and the content of the oxygen containing precursor is 0.5-10% by volume; preferably, the temperature of the heat treatment when introducing the first mixed gas is 400-700°C, and further preferably, the time of the heat treatment when introducing the first mixed gas is 5-50 hours.

Preferably, the step S2 involves introducing an inert gas before, after, simultaneously or gap with the silicon-containing precursor and the oxygen-containing precursor, and the inert gas is one or more of nitrogen, argon, and helium, to regulate the concentration of silicon-containing and oxygen-containing precursors and provide an appropriate pressure. When the silicon-containing precursor and the inert gas are simultaneously introduced, the two can be introduced in a mixed gas form or separately introduced to form a mixed gas in the reaction furnace. In any case, as long as the silicon-containing precursor and the inert gas are simultaneously introduced, it is called that the second mixed gas of the silicon-containing precursor and the inert gas is introduced, and the volume content of the silicon precursor in the second mixed gas is 1-50%. When the oxygen-containing precursor and the inert gas are simultaneously introduced, the two can be introduced in a mixed gas form or separately introduced to form a mixed gas in the reaction furnace, in any case, as long as the oxygen-containing precursor and the inert gas are simultaneously introduced, it is called that the third mixed gas of the oxygen-containing precursor and the inert gas is introduced, and the volume content of the oxygen precursor in the third mixed gas is 1-50%.

In some embodiments, the temperature in step S2 varies with the concentration of the silicon containing precursor and the oxygen containing precursor. In order to achieve efficient deposition of silicon and oxygen, further preferably, the heat treatment temperature when introducing the silicon containing precursor is 400-700°C, and the heat treatment temperature when introducing the oxygen containing precursor is 150-600°C.

In some embodiments, the above step S2 includes: step S2-1, introducing the inert gas into a reaction furnace providing with the porous carbon substrate containing the surface oxidized layer, and increasing the temperature of the reaction furnace to 400-700°C; step S2-2, introducing the second mixed gas of the silicon containing precursor and the inert gas, with a concentration by volume of 1%-50% of the silicon containing precursor in the second mixed gas, and holding the reaction furnace at 400-700°C for 0.5-15 hours; step S2-3, stopping the introduction of the silicon containing precursor, and adjusting the temperature of the reaction furnace to 150-600°C; step S2-4, introducing the third mixed gas of the oxygen containing precursor and the inert gas, with a concentration by volume of 1%-50% of the oxygen containing precursor in the third mixed gas, and holding the reaction furnace at 150-600°C for 0.1-5 hours; and step S2-5, repeating step S2-1 to step S2-4 for 2-50 times.

In some embodiments, the above preparation method also includes step S3, crushing and grading the nano silicon-oxygen-carbon structural composite material in the step S2 to obtain the fine-removed particles of the nano silicon-oxygen-carbon structural composite material having a median particle diameter of 4-12 µm, and preferably the crushing and grading method is any one or more of manual milling, mechanical milling, ball milling, and airflow milling, to adjust the compaction density of the composite material.

The above mentioned crushing and grading is equivalent to the crushing and shaping of step S2 in the priority document (CN disclosure number 202210114895.6).

In some embodiments, the above preparation method also includes: step S4, subjecting the fine-removed particles of the nano silicon-oxygen-carbon structural composite material in the step S3 to deep oxidation treatment, preferably the deep oxidation treatment comprising contacting the fine-removed particles of the nano silicon-oxygen-carbon structural composite material with a solution and/or gas containing an oxidizing substance at 0-400°C for 0.5-12 hours.

Preferably, in the above step S4, the solid-gas two-phase contact method is any one or more of various methods such as fixed bed, moving bed, fluidized bed, and boiling-bed, etc., or a combination thereof.

In some embodiments, in the above step S4, the deep oxidation treatment includes liquid phase oxidation and/or gas phase oxidation; preferably, the step of the liquid phase oxidation is placing the fine-removed particles of the nano silicon-oxygen-carbon structural composite material in an oxygen-containing compound and/or an aqueous solution and/or an ethanol solution of an oxygen-containing compound, sonicating 0.5-2 hours for dispersing the particles into the oxygen-containing compound or the solution, then stirring at 0-50°C for 0.5-12 hours, filtering and/or centrifuging to separate the solid with the liquid, washing the solid multiple times with deionized water and/or ethanol, and forced air drying the obtained solid at 40-200°C for 0.5-24 hours, and treating in an inert atmosphere at 200-400°C for 0.5-5 hours, wherein the oxygen-containing compound is selected from any one or more of KMnO₄, H₂O₂, HNOs, H₂SO₄, acetic acid, propionic acid, butyric acid, succinic acid, malic acid, and citric acid, and the liquid phase oxidation is carried out under the action of ultraviolet light and/or microwave radiation; and preferably, the step of the gas phase oxidation is vacuumizing the fine-removed particles of the nano silicon-oxygen-carbon structural composite material to a vacuum degree below 10⁻² Pa, then introducing a mixed gas comprising an oxidizing gas and an inert gas, heating up from room temperature to 200-400°C with a heating rate of 1-10°C/min, and holding at 200-400°C for 0.1-5 hours; the oxidizing gas is selected from any one or more of oxygen, ozone, carbon dioxide, and water vapor, and the inert gas is one or more of nitrogen, argon, and helium, and the oxidizing gas accounts for 0.5-20% of the mixed gas.

In some embodiments, before the above step S4, an acid treatment and/or an alkali treatment process for the fine-removed particles of the nano silicon-oxygen-carbon structural composite material is added; preferably, the acid treatment method involves dispersing the fine-removed particles of the nano silicon-oxygen-carbon structural composite material into an aqueous/ethanol solution containing acid, stirring at 0-50°C for 0.5-12 hours, filtering and/or centrifuging to separate the solid with the liquid, washing the solid multiple times with deionized water and/or ethanol until the pH of the filtrate and/or supernatant is neutral, and vacuum drying the resulting solid; the alkali treatment method involves dispersing the fine-removed particles of the nano silicon-oxygen-carbon structural composite material into an aqueous/ethanol solution containing alkali, stirring at 0-50°C for 0.5-12 hours, filtering and/or centrifuging to separate the solid with the liquid, washing the solid multiple times with deionized water and/or ethanol until the pH of the filtrate and/or supernatant is neutral, and vacuum drying the resulting solid; the acid is one or more of HCl, H₂SO₄, HNOs, and H₃PO₄, and the base is one or more of NaOH, KOH, Na₂CO₃, K₂CO₃, NH₃H₂O, NH₄HCO₃, (NH₄)₂CO₃, and urea.

In order to further improve the electrochemical performance of the prepared composite material, in some embodiments, the above preparation method further includes the step 5 of clading a solid electrolyte and/or a conductive polymer on the nano silicon-oxygen-carbon structural composite material.

The above solid electrolyte and the conductive polymer mentioned above can use the existing conventional corresponding substances, and will not be repeated here.

It should be noted that the nano silicon-oxygen-carbon structural composite material referred to in the step S5 has a relatively broad meaning, i.e. including: any one of the nano silicon-oxygen-carbon structural composite material referred to in S2, the fine-removed particles of the nano silicon-oxygen-carbon structural composite material obtained by further grading treatment of the nano silicon-oxygen-carbon structural composite material in the step S3, the oxidized nano silicon-oxygen-carbon structural composite material obtained by further deep oxidation treatment of the fine-removed particles of the nano silicon-oxygen-carbon structural composite material in the step S4, or the nano silicon-oxygen-carbon structural composite material deeply oxidized after acid and/or alkali treatment obtained in the process of acid treatment and/or alkali treatment for the fine-removed particles of the nano silicon-oxygen-carbon structural composite material before the step S4.

In some embodiments, the above preparation method also includes step S6, vacuum treating and carbon clading the nano silicon-oxygen-carbon structural composite material, the carbon clading method involving using one or more of methane, ethane, propane, butane, ethylene, propylene, butene, acetylene, propyne, methanol, ethanol, n-propanol, isopropanol, butanol, propanone, and butanone to perform vapor deposition on the composite material, or using a liquid carbon precursor for liquid phase carbon clading, and preferably the liquid carbon precursor is selected from resin and asphalt.

It should be noted that the nano silicon-oxygen-carbon structural composite material referred to in the step S6 has a relatively broad meaning, i.e. including: any one of the fine-removed particles of the nano silicon-oxygen-carbon structural composite material obtained by further grading treatment of the nano silicon-oxygen-carbon structural composite material in the step S3, the oxidized nano silicon-oxygen-carbon structural composite material obtained by further deep oxidation treatment of the fine-removed particles of the nano silicon-oxygen-carbon structural composite material in the step S4, or the nano silicon-oxygen-carbon structural composite material deeply oxidized after acid and/or alkali treatment obtained in the process of acid treatment and/or alkali treatment for the fine-removed particles of the nano silicon-oxygen-carbon structural composite material before the step S4, and the nano silicon-oxygen-carbon structural composite material coated with a solid electrolyte and/or a conductive polymer obtained in the step S5.

In another typical embodiment of the disclosure, an anode is provided, which includes an anode material, the anode material is any of the nano silicon-oxygen-carbon structural composite materials mentioned above or the nano silicon-oxygen-carbon structural composite material obtained by any of the preparation methods mentioned above.

In another typical embodiment of the disclosure, there is provided an electrochemical device comprising an anode, which is the aforementioned anode, and preferably the electrochemical device is a lithium-ion secondary battery.

The silicon nanoparticles are uniformly dispersed in the nano silicon-oxygen-carbon structural composite material of the disclosure, and are separated and bounded by the oxygen-containing substance and the optional carbon, thereby effectively suppressing the aggregation of silicon particles during the deposition process, as well as their volume change and possible fusion during the charge and discharge cycle, the lithium ion secondary battery containing the anode prepared from the obtained composite material has a high capacity per gram, high initial coulombic efficiency and good cycle performance.

The beneficial effect of the present disclosure will be further explained below in combination with the embodiments and the comparative embodiments. The embodiments of the present disclosure shall not be construed as restrictions to the present disclosure.

### Embodiment 1:

### Preparation of nano silicon-oxygen-carbon structural composite material:

Step S1, preparation of porous carbon substrate containing a surface oxidized layer: using starch as a carbon precursor, heating up from room temperature to 220°C in an air atmosphere and holding at this temperature for 48 hours for pre-stabilization, then changing to N₂, and heating up at 2°C/min to 1500°C and holding at this temperature for 2 hours to complete carbonization, then cooling to 600°C in a N₂ atmosphere, switching to a 2%O₂-N₂ mixed gas, and oxidizing at 600°C for 2 hours to obtain a porous carbon substrate containing a surface oxidized layer. Wherein, the molar ratio of oxygen to carbon in the obtained porous carbon substrate was 0.031, the specific surface area of the porous carbon substrate was 380 m²/g, the pore volume was 0.74 cm³/g, and the proportions of micropores, mesopores, and macropores were 9%, 70%, and 21%, respectively.

Step S2, silicon deposition and oxygen containing treatment: heating up the porous carbon substrate from room temperature to 600°C at 2°C/min in a N₂ atmosphere, then changing to 20%SiH₄-N₂ mixed gas, and in the 20%SiH₄-N₂ mixed gas atmosphere, holding at 600°C for 2 hours for the deposition of silicon; then changing to N₂, cooling to 200°C, changing to a 1%O₂-N₂ mixed gas, and in the 1%O₂-N₂ mixed gas atmosphere, holding at 200°C for 12 minutes for oxygen containing treatment; then, changing to N₂ and heating up to 600°C, whereby performing 15 cycles of silicon deposition-oxygen containing treatment on the porous carbon substrate, and naturally cooling down under the protection of N₂ to obtain a nano silicon-oxygen-carbon structural composite material.

Step S3, crushing: crushing and grading the nano silicon-oxygen-carbon structural composite material obtained in step S2 using airflow milling to obtain the fine-removed particles of the nano silicon-oxygen-carbon structural composite material with a median particle size of 6 µm.

The obtained graded particles of the nano silicon-oxygen-carbon structural composite material with a median particle size of 6 µm was subjected to XRD, N₂ adsorption testing, and TEM detection, and electrodes were made and an electrochemical test was carried out.

Preparation of electrodes and half cells and electrochemical performance testing methods (applicable to all embodiments and comparative embodiments listed in this disclosure):
The electrode sheets comprising the composite materials of embodiments and comparative embodiments were prepared into CR2032 button batteries using conventional methods, and the electrical performance of which was tested. The CR2032 button batteries were assembled in a glove box, a lithium metal sheet was used as the counter electrode, polypropylene microporous membrane was used as the separator, and the electrolytic solution was LiPF₆ dissolved in a mixed solution of ethyl carbonate (EC) and diethyl carbonate (DEC) (EC: DEC=1:1 by volume), wherein the concentration of LiPF₆ was 1 mol/L.

Charge and discharge tests were carried out on the battery using the LAND battery testing system.

After the CR2032 button battery was left standing for 6 hours, it was discharged to 0.005 V at 0.05 C, and then discharged to 0.005 V at 0.01 C; and after standing for 5 minutes, it was charged to 1.5 V at a constant current of 0.05 C; the ratio of the initial delithiation capacity to the initial lithium intercalation capacity was the initial coulombic efficiency of the battery.

After standing for 5 minutes, the above charge and discharge steps were repeated twice;
Then it was discharged to 0.005 V at 0.25 C; after standing for 5 minutes, it was charged to 1.5 V at 0.25C constant current, and the above cycle was repeated for 50 times. The capacity retention rate was calculated according to specific charge capacity of the 50^{th} cycle/charge capacity of the 1^{st} cycle × 100%.

Testing the expansion rate of the electrode sheet using the following method: after making the CR2032 button battery stand for 6 hours, discharging to 0.005 V at 0.05 C, and then discharging to 0.005 V at 0.01 C; then disassembling the button battery in the glove box, cleaning the electrode sheet with DEC, and measuring the thickness of the electrode sheet, the expansion rate was calculated according to the equation: (thickness of electrode sheet in a first fully charged state - thickness of fresh electrode sheet)/thickness of fresh electrode sheet × 100%.

Figure 1 shows a structural schematic diagram of the fine-removed particles of nano silicon-oxygen-carbon structural composite material obtained in embodiment 1. Based on the above procedure, it can be speculated that in the fine-removed particles of nano silicon-oxygen-carbon structural composite material, the core composition (C_{*x*1}-O_{*y*1})-(Si*_{z}*-O_{*y*2}-C_{*x*2}) included two main parts, i.e. a porous carbon substrate C_{*x*1}-O_{*y*1} containing a surface oxidized layer and Si*_{z}*-O_{*y*2}-C_{*x*2} loaded on the surface and in the pores of the porous carbon substrate. The latter included uniformly dispersed silicon nanoparticles, a small amount of oxygen-containing substance, and optional carbon, and can also be written as (Si_{*z*1}-O*_{y}*-C*ₓ*)*ₙ*, wherein *n*≥1. The composite material exhibited a multi-level structure, and used a porous carbon substrate containing a surface oxidized layer as a carrier and/or support, and the deposition of silicon nanoparticles (that is, Si in Figure 1) and the oxygen-containing substance and the optional carbon (that is, SiO*_{δ}*+C in Figure 1) were carried out on the surface and in pore structure thereof, wherein the oxygen containing substance and the optional carbon played a role in separating and bounding the silicon nanoparticles, and the deposition may eventually leave a small amount of closed pores in the pores of the porous carbon substrate.

In addition, as shown in Figure 2, there was no obvious crystalline peak in the XRD spectrum of the fine-removed particles of the nano silicon-oxygen-carbon structural composite material obtained from embodiment 1, reflecting that the silicon particles are amorphous and the carbon was also amorphous, correspondingly, in the HRTEM diagram of Figure 3, it can be seen that the composite material was mainly amorphous without obvious long-range ordered structure, which was consistent with the XRD spectrum. The spacing between lattice fringes in the white circle in Figure 3 is about 0.314 nm, corresponding to the interplanar spacing of (111) in the Si crystal particles, from the number of the ordered lattice fringes, it can be seen that the Si crystal particle size is all less than 2 nm. The specific surface area, pore volume, and true density of the fine-removed particles of the nano silicon-oxygen-carbon structural composite material were 4.7 m²/g, 0.024 cm³/g, and 1.97 g/cm³, respectively, as measured by N₂ adsorption and acetone immersion method. The mass contents of silicon, oxygen, and carbon in the nano silicon-oxygen-carbon structural composite material obtained from embodiment 1 were 50.2%, 1.9%, and 47.9%, respectively.

The fine-removed particles of the nano silicon-oxygen-carbon structural composite material obtained from embodiment 1 were treated in a N₂ atmosphere at 800°C, and then subjected to XRD testing. The results were shown in Figure 5, the crystal particle size was calculated by the half peak width at 2*θ*=28.4° and by use of the Scherrer's Formula, the results showed that the crystal size of the silicon crystal particles in the material after the treatment at 800°C was 7.7 nm, indicating that the appropriate oxygen content in the material played a good role in separating silicon nanoparticles and limiting the aggregation between silicon crystal particles and/or non-crystalline silicon. The constant current charge and discharge curves of the electrode containing the nano silicon-oxygen-carbon structural composite material obtained from embodiment 1 were shown in Figure 4, with a capacity per gram of 2029 mAh/g, an initial coulombic efficiency of 92.6% at 1.5 V, an electrode sheet expansion rate of 124%, and a capacity per gram retention rate of 95.6% after 50 cycles of charge and discharge.

Table 1 shows the porous carbon substrate containing a surface oxidized layer used in embodiments 1 to 25 and comparative embodiments 1 and 2 and preparation conditions thereof.

Table 2 shows the oxygen content, specific surface area, and pore properties of the porous carbon substrate containing a surface oxidation layer. The porous carbon substrate contains predominantly mesopores, and contains some micropores and macropores.

Table 3 shows the preparation conditions for the fine-removed particles of the nano silicon-oxygen-carbon structural composite material of embodiments 1 to 25 and comparative embodiments 1 and 2. The concentrations of silicon- and/or oxygen-containing precursors and their corresponding treating temperatures in the embodiments listed in this specification exhibited pulse periodic or aperiodic changes, for ease of expression, they are placed in a same table, and such difference was described by use of "deposition cycles", and the number of cycles during aperiodic changes was 1. Due to the existence of embodiments where a silicon containing precursor and an oxygen containing precursor were introduced, separately, they are represented in Table 3 as "deposition mixed gas 1" and "deposition mixed gas 2", respectively. Correspondingly, and the respective contact temperatures and residence times were "deposition temperature 1" and "deposition time 1", "deposition temperature 2" and "deposition time 2", respectively. Nonexclusively, the nano silicon-oxygen-carbon structural composite material claimed in the present disclosure can also be achieved by using different precursor concentrations and treating temperatures and times, etc., among cycles.

Table 4 shows the basic physical properties and electrochemical performance of the fine-removed particles of the nano silicon-oxygen-carbon structural composite material of embodiments 1 to 36 and comparative embodiments 1 and 2.

Due to the different lithium intercalation abilities of silicon and carbon in anode materials, the presence of oxygen in a form of SiO*_{δ}* can lead to irreversible lithium intercalation, reducing the initial coulombic efficiency of the anode, therefore, the content of silicon, oxygen, and carbon in the nano silicon-oxygen-carbon structural composite material had a significant impact on the initial coulombic efficiency of the composite material, and the content of each material can be regulated by the pore structure of the porous carbon carrier, the concentration of the deposition mixed gas, the deposition temperature, and time, etc, the optimal temperature required for different precursors varied within a certain range, when the deposition temperature was high, the corresponding material deposition amount will increase. On the other hand, the deposition method of the oxygen-containing substance and the relative time with silicon deposition largely determined the degree of dispersion of silicon nanoparticles by the oxygen-containing layer, which in turn affected the electrochemical properties of composite materials such as electrode sheet expansion rate and cycle performance, etc. The embodiments of this disclosure were mainly carried out on basis of these factors.

In the nano silicon-oxygen-carbon structural composite material, the silicon- and oxygen-containing substances were mainly deposited inside the pores of the porous carbon substrate, and a small amount was deposited on the surface outside the pores of the carbon skeleton, on the other hand, a relatively dense silicon-oxygen-carbon composite material was prepared in the present disclosure, therefore, the pore volume of the carbon substrate determined the maximum loading amount of silicon precursor and oxygen-containing precursor. The concentration, deposition temperature and relative time of silicon- and oxygen-containing precursors, as well as the pore volume of the carbon substrate, jointly determined the silicon content, oxygen content, and correspondingly the carbon content of the nano silicon-oxygen-carbon structural composite material. The flow rate of deposition gas was related to the volume of the reaction furnace, the used amount of carbon substrate, and the concentration of silicon precursor and oxygen-containing precursor in the deposition mixed gas. It can be adjusted accordingly according to the situation, and will not be described in detail in this specification. Most embodiments controlled a consistent total silicon deposition time to meet the amount that can be accommodated by the pore volume of the carbon substrate.

As listed in Table 3, embodiments 1 to 20, 23, 24, and 25 all used alternating deposition of silicon precursor and oxygen-containing precursor to load silicon and oxygen-containing substance. The deposition conditions used in each deposition cycle, including gas concentration, deposition temperature, and time, were consistent (however, the rights claimed by the present disclosure were not limited to complete repetition of deposition cycles, and the deposition conditions in each cycle can be changed according to the situations). The oxygen-containing precursors used in the steps S2 of embodiments 1-12 were all mixed gas of O₂ and N₂. In embodiments 1-9, 20% SiH₄-N₂ and 1% O₂-N₂ were used for deposition mixed gas 1 and deposition mixed gas 2, respectively; embodiment 10 used a mixed gas of silicon- and oxygen containing precursors with an increased concentration, while embodiments 11 and 12 used other silicon containing precursors for deposition, such as Si₂H₆ and SisHs.

Compared with embodiment 1, the difference lied in that the treatment time of the oxygen-containing precursor in embodiment 2 was relatively longer, which will lead to an increase in its oxygen content and a decrease in the initial coulombic efficiency of electrodes. Embodiments 3-6 changed the time of silicon deposition in a single deposition cycle, and correspondingly changed the time and number of deposition cycles of the oxygen-containing substance. It can be seen that when the time of silicon deposition in a single deposition cycle was longer, as shown in embodiments 5 and 6, which were 10 hours and 15 hours, respectively, the separation effect of the oxygen-containing substance on silicon nanoparticles was reduced, and the electrode sheet expansion rate of the resulting ano silicon-oxygen-carbon structural composite material increased, and the capacity retention rate decreased after multiple cycles.

The porous carbon substrate used in embodiment 7 had a smaller pore volume of 0.33 cm³/g, thus the amount of silicon loaded was significantly decreased as compared to embodiment 1, resulting in an initial cycle capacity per gram of only 1639 mAh/g, which was significantly lower than embodiment 1. Embodiment 8 used a 9 # porous carbon substrate with a specific surface area of 581 m²/g and a pore volume of 1.1 cm³/g for silicon deposition, the resulting nano silicon-oxygen-carbon structural composite material had a silicon content of up to 68.7%, and the electrode containing same had a capacity per gram of up to 2500 mAh/g and an initial coulombic efficiency of up to 92.8%, however, the expansion rate of the electrode sheet was relatively large, and the capacity retention rate was only 90.4% after 50 cycles.

Compared with embodiment 1, the difference lied in that in step S2 of embodiment 9, the cycle number of silicon deposition-oxygen containing treatment was reduced to 10, the silicon content was relatively low (35.4%), and the composite material electrode capacity was less than 1500 mAh/g, however, the lower silicon content also resulted in a lower expansion rate of the composite material electrode; in addition, due to silicon and oxygen-containing substance failed to fully fill the pore volume of the carbon substrate, the specific surface area and pore volume of the material significantly increased, reaching 41.8 m²/g and 0.217 cm³/g, respectively, the larger pore volume further alleviated the expansion of silicon, therefore, the electrode sheet expansion rate of the electrode containing such composite material for the first fully charged lithium intercalation was significantly reduced, which was only 31%, however, the larger specific surface area resulted in an increase in side reactions and a decrease in the initial coulombic efficiency of electrode, the initial coulombic efficiency at a voltage of 1.5 V was only 84.6%.

The mixed gas of silicon precursor and oxygen-containing precursor with an increased concentration used in embodiment 10, the content of silicon and oxygen in the composite material, and the resulting electrochemical performance were related to the relative concentration of silicon- and oxygen-containing precursors and their relative deposition time within one cycle thereof.

Embodiments 11 and 12 used other silicon-containing precursors for deposition, such as Si₂H₆ and SisHs. In addition, both embodiments used porous carbon substrates with relatively low pore volume as carbon carriers for silicon deposition, the pore volume of the carbon substrate determined the limited silicon content in both embodiments, resulting in a lower electrode capacity of the composite material.

Embodiments 13-17 were embodiments of using CO₂ as the oxygen-containing precursor in steps S2. When the deposition temperature used was low, the silicon content in the obtained silicon-oxygen-carbon composite material decreased, the capacity per gram of electrode decreased, and other factors such as deposition time and relative time, etc., were similar to those disclosed in embodiments 1-10. Embodiments 18-21 are embodiments of using acetone as an oxygen containing precursor in step S2. Embodiments 18-20 are embodiments of separately introducing the silicon containing precursor and acetone into a reaction furnace containing a porous carbon substrate. Embodiment 21 is an embodiment of simultaneously introducing the silicon containing precursor and acetone into a reaction furnace containing a porous carbon substrate. Embodiment 22 is an embodiment of simultaneously introducing the silicon containing precursor and methanol into a reaction furnace containing a porous carbon substrate. The differences in deposition method, deposition temperature, and concentration of oxygen-containing precursors lead to differences in silicon and oxygen contents in the composite material, high temperature and high concentration of acetone lead to higher oxygen content in the composite material, which in turn reduces the initial coulombic efficiency of electrode containing the composite material.

Embodiment 23 used a higher concentration of oxygen-containing precursor, higher temperature, and longer deposition time during the oxygen-containing treatment process. The composite material had a higher total oxygen content, exceeding 5 wt%, which played a good role in separating silicon particles, it can be seen from Figure 5 that the crystallinity of the sample in the comparative embodiment after the treatment at 800°C was still low, resulting in a lower expansion rate of the electrode sheet containing the material, which was only 72%. On the other hand, excessive oxygen content resulted in more SiO*_{δ}* substance in the composite material, there were more side reactions in the electrode reactions, both the capacity and the initial coulombic efficiency were greatly reduced, with a capacity of only 1219 mAh/g.

### Embodiment 26

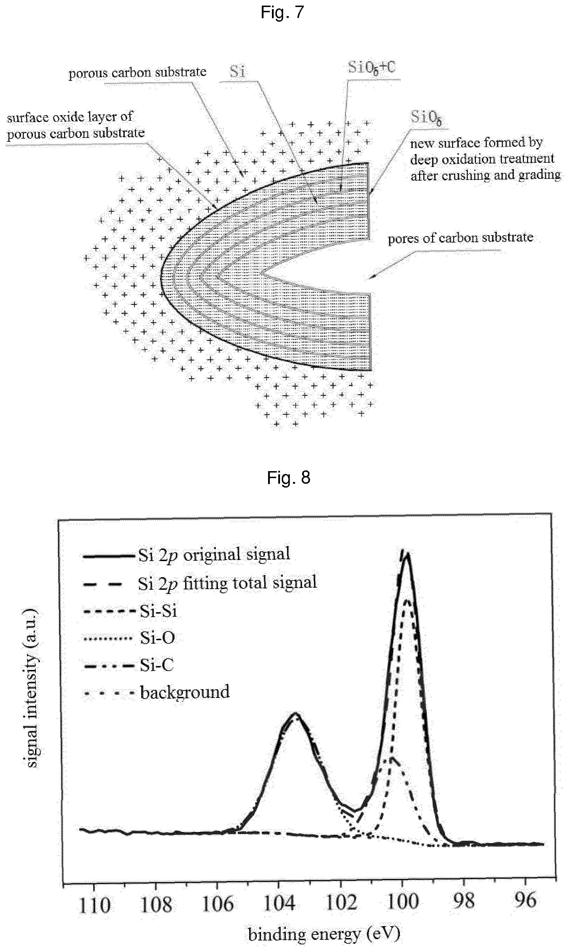

The difference between embodiment 26 and embodiment 1 lied in that a deep oxidation treatment step was added in embodiment 26:
Step S4, deep oxidation treatment: placing the fine-removed particles of the nano silicon-oxygen-carbon structural composite material obtained in step S3 in a tubular furnace, vacuumizing to a vacuum degree of 10⁻³ Pa, and then introducing 1% O₂-Ar mixed gas, controlling the heating rate at 1 °C/min, heating up from room temperature to 200°C, and treating at 200°C for 2 hours, cooling down to obtain the oxidized nano silicon-oxygen-carbon structural composite material, the structural schematic diagram of the oxidized nano silicon-oxygen-carbon structural composite material is shown in Figure 7.

XPS testing was performed on the nano silicon-oxygen-carbon composite material obtained in embodiment 26, the binding energy of the amorphous C-C peak in the C 1s spectrum at 284.7 eV was used as the peak position calibration. Since the high resolution C 1*s* spectrum contained the C-C peak present in the test system, there was a large error in its C-Si analysis, and thus only its high resolution Si 2*p* spectrum (Figure 8) was analyzed. The high-resolution Si 2*p* spectrum in an XPS testing and its deconvolution peak analysis results of the nano silicon-oxygen-carbon composite material obtained in embodiment 26 showed that the peak area of Si-C binding energy was significantly smaller than that of Si-O and Si-Si. The proportion of each bonding form can be calculated according to the corresponding peak area. In the nano silicon-oxygen-carbon composite material obtained in embodiment 26, the proportion of Si-O to Si-Si in the Si 2*p* spectrum was 0.96, and the proportion of Si-C to Si-Si was 0.40, it can be seen that the porous carbon skeleton and silicon nanoparticles in the nano silicon-oxygen-carbon composite material obtained in embodiment 1 were mainly connected by C-O-Si, and the proportion of C-Si was small.

### Embodiment 27

The difference between embodiment 27 and embodiment 1 lied in that a deep oxidation treatment step was added in embodiment 27:
Step S4, deep oxidation treatment: placing the fine-removed particles of the nano silicon-oxygen-carbon structural composite material obtained in step S3 in a tubular furnace, vacuumizing, and then introducing 1% O₂-Ar mixed gas, controlling the heating rate at 1 °C/min, heating up from room temperature to 300°C, and treating at 300 °C for 2 hours, cooling down to obtain the oxidized nano silicon-oxygen-carbon structural composite material.

### Embodiment 28

The difference between embodiment 28 and embodiment 1 lied in that a deep oxidation treatment step was added in embodiment 28:
Step S4, deep oxidation treatment: placing the fine-removed particles of the nano silicon-oxygen-carbon structural composite material obtained in step S3 in a tubular furnace, vacuumizing, and then introducing 1% O₂-Ar mixed gas, controlling the heating rate at 1 °C/min, heating up from room temperature to 350°C, and treating at 350°C for 2 hours, cooling down to obtain the oxidized nano silicon-oxygen-carbon structural composite material.

### Embodiment 29

The difference between embodiment 29 and embodiment 1 lied in that a deep oxidation treatment step was added in embodiment 29:
Step S4, deep oxidation treatment: placing the fine-removed particles of the nano silicon-oxygen-carbon structural composite material obtained in step S3 in a tubular furnace, vacuumizing, and then introducing 5% O₂-Ar mixed gas, controlling the heating rate at 1 °C/min, heating up from room temperature to 200°C, and treating at 200°C for 2 hours, cooling down to obtain the oxidized nano silicon-oxygen-carbon structural composite material.

### Embodiment 30

The difference between embodiment 30 and embodiment 1 lied in that a deep oxidation treatment step was added in embodiment 30:
Step S4, deep oxidation treatment: placing the fine-removed particles of the nano silicon-oxygen-carbon structural composite material obtained in step S3 in a tubular furnace, vacuumizing, and then introducing 20% O₂-Ar mixed gas, controlling the heating rate at 1 °C/min, heating up from room temperature to 200°C, and treating at 200°C for 2 hours, cooling down to obtain the oxidized nano silicon-oxygen-carbon structural composite material.

### Embodiment 31

The difference between embodiment 31 and embodiment 1 lied in that a deep oxidation treatment step and a pretreatment step thereof were added in embodiment 31:
Step S3₊, performing acid treatment on the fine-removed particles of the nano silicon-oxygen-carbon structural composite material obtained in step S3: dispersing the fine-removed particles of the nano silicon-oxygen-carbon structural composite material in a 1 M HNOs aqueous/ethanol (50/50) solution, sonicating and dispersing for 2 hours, stirring at 60°C for 8 hours, filtering, washing the solid multiple times with deionized water, and forced air drying the obtained solid at 120°C for 24 hours, then heating up to 400°C at 2°C/min in a N₂ atmosphere, and holding at this temperature for 2 hours, cooling down to obtain the acid treated composite material.

Step S4, deep oxidation treatment: placing the acid treated composite material obtained in step S3₊ in a tubular furnace, vacuumizing, and then introducing 1% O₂-Ar mixed gas, controlling the heating rate at 1 °C/min, heating up from room temperature to 200°C, and treating at 200°C for 2 hours, cooling down to obtain the oxidized nano silicon-oxygen-carbon structural composite material.

### Embodiment 32

The difference between embodiment 32 and embodiment 31 lied in that the pretreatment step of the deep oxidation treatment in embodiment 32 was different:
Step S3₊, performing acid treatment on the fine-removed particles of the nano silicon-oxygen-carbon structural composite material obtained in step S3: dispersing the fine-removed particles of the nano silicon-oxygen-carbon structural composite material in a 1 M NaOH aqueous/ethanol (50/50) solution, sonicating and dispersing for 2 hours, stirring at 60°C for 8 hours, filtering, washing the solid multiple times with deionized water, and forced air drying the obtained solid at 120°C for 24 hours, then heating up to 400°C at 2°C/min in a N₂ atmosphere, and holding at this temperature for 2 hours, cooling down to obtain the acid treated composite material, and finally the oxidized nano silicon-oxygen-carbon structural composite material was obtained.

### Embodiment 33

The difference between embodiment 33 and embodiment 1 lied in that a deep oxidation treatment step was added in embodiment 33:
Step S4, deep oxidation treatment: dispersing the fine-removed particles of the nano silicon-oxygen-carbon structural composite material obtained in step S3 in a 0.5 M KMnO₄ aqueous/ethanol (50/50) solution, sonicating and dispersing for 2 hours, stirring at 50°C for 2 hours, filtering, washing the solid multiple times with deionized water, and forced air drying the obtained solid at 60°C for 24 hours, then heating up to 400°C at 2°C/min in a N₂ atmosphere, and holding at this temperature for 2 hours, cooling down to finally obtain the oxidized nano silicon-oxygen-carbon structural composite material.

### Embodiment 34

The difference between embodiment 34 and embodiment 1 lied in that an outer layer clading step was added in embodiment 34:
Step S5, outer layer clading: placing the oxidized nano silicon-oxygen-carbon structural composite material obtained from step S4 in a tubular furnace, vacuumizing, and then introducing N₂, heating up to 700°C at 2°C/min, switching to C₂H₂ gas, holding at 700°C for 2 hours, cooling down to obtain the carbon claded nano silicon-oxygen-carbon structural composite material.

### Embodiment 35

The difference between embodiment 35 and embodiment 26 lied in that an outer layer clading step was added in embodiment 35, that is, the difference between embodiment 35 and embodiment 1 lied in that a deep oxidation treatment step and an outer layer clading step were added:

Step S6, outer layer clading: dispersing the oxidized nano silicon-oxygen-carbon structural composite material obtained in step S4 in a 0.1 M Al(NO₃)₃ aqueous/ethanol (50/50) solution, sonicating and dispersing for 2 hours, adding an appropriate amount of Na₂CO₃ aqueous solution (n(Na₂CO₃)=1.8n(Al)), stirring at 80°C for 3 hours, filtering, washing the solid multiple times with deionized water, and forced air drying the obtained solid at 60°C for 24 hours, then heating up to 400°C at 2°C/min in a N₂ atmosphere, and holding at this temperature for 2 hours, cooling down to obtain the Al₂O₃ claded nano silicon-oxygen-carbon structural composite material.

### Embodiment 36

The difference between embodiment 36 and embodiment 26 lied in that an outer layer clading step was added in embodiment 36, that is, the difference between embodiment 36 and embodiment 1 lied in that a deep oxidation treatment step and an outer layer clading step were added:
Step S5, outer layer clading-I: dispersing the oxidized nano silicon-oxygen-carbon structural composite material obtained in step S4 in a 0.1 M Al(NO₃)₃ aqueous/ethanol (50/50) solution, sonicating and dispersing for 2 hours, adding an appropriate amount of Na₂CO₃ aqueous solution (n(Na₂CO₃)=1.8n(Al)), stirring at 80°C for 3 hours, filtering, washing the solid multiple times with deionized water, and forced air drying the obtained solid at 60°C for 24 hours, then heating up to 400°C at 2°C/min in a N₂ atmosphere, and holding at this temperature for 2 hours;
Step S6, outer layer clading-II: heating up to 700°C at 2°C/min, switching to C₂H₂ gas, holding at 700°C for 2 hours, and cooling down to obtain the carbon claded and Al₂O₃ claded nano silicon-oxygen-carbon structural composite material.

### Comparative embodiment 1:

Silicon deposition was directly carried out on a porous carbon substrate without a surface oxidized layer, and no silicon deposition-oxygen containing treatment cycle was carried out.
(1) Porous carbon substrate: using commercial porous carbon as the porous carbon substrate, and the C content was tested to be 99.99%.
(2) Silicon deposition: heating up the porous carbon substrate from room temperature to 600°C at 2°C/min in a N₂ atmosphere, then changing to a 20%SiH₄-N₂ mixed gas; carrying out the deposition of silicon in a 20%SiH₄-N₂ mixed gas atmosphere at 600°C for 30 hours; then changing to N₂; naturally cooling down to obtain the silicon-carbon composite material.
(3) Crushing: crushing and grading the silicon-carbon composite material obtained from (2) using airflow milling to obtain a silicon-carbon composite material having a median particle size of 6 µm.

The silicon-carbon composite material prepared by this method had a structure of C-Si. In this material, the Si particles were severely agglomerated, and during the crushing process, silicon and carbon were separated, making it impossible to form an effective silicon-carbon composite material, and further characterization and electrochemical testing will not be conducted.

### Comparative embodiment 2:

Silicon deposition was carried out on a porous carbon substrate with a surface oxidized layer, and no oxygen containing treatment was carried out.

(1) Preparation of porous carbon substrate containing a surface oxidized layer: using starch as a carbon precursor, heating up from room temperature to 220°C in an air atmosphere and holding at this temperature for 48 hours for pre-stabilization, then changing to N₂, and heating up to 1500°C at 2°C/min and holding at this temperature for 2 hours to complete carbonization, then cooling to 600°C in a N₂ atmosphere, switching to a 2%O₂-N₂ mixed gas, and oxidizing at 600°C for 2 hours to obtain a porous carbon substrate containing a surface oxidized layer.

(2) Silicon deposition: heating up the porous carbon substrate from room temperature to 600°C at 2°C/min in a N₂ atmosphere, then changing to a 20%SiH₄-N₂ mixed gas; carrying out the deposition of silicon in a 20%SiH₄-N₂ mixed gas atmosphere at 600°C for 30 hours; then changing to N₂, naturally cooling down to obtain the silicon-oxygen-carbon composite material.

(3) Crushing: crushing and grading the nano silicon-oxygen-carbon structural composite material obtained from (2) using airflow milling to obtain a silicon-oxygen-carbon composite material having a median particle size of 6 µm.

In this method, a surface oxidation treatment was carried out on the carbonized porous carbon substrate to obtain a porous carbon substrate containing a surface oxidized layer, which was then used for silicon deposition. The structure of the prepared silicon-oxygen-carbon composite material was C-O-Si. Compared to the comparative embodiment 1, an effective loading of Si can be obtained with the material, wherein the Si particles were firmly bonded to the porous carbon substrate, and silicon carbon separation will not occur during the crushing process. The electrochemical test results showed that the initial coulombic efficiency at 1.5 V can reach 91.2%, however, due to the larger size of silicon particles (with a silicon crystal particle size of greater than 20 nm after the treatment at 800°C, as shown in Figure 5), the expansion rate of the electrode sheet was relatively high, reaching 157%, which will affect its cycle performance (as shown in Figure 6).

**Table 1 Porous carbon substrate and preparation conditions thereof**

| Por ous carb on sub strat e No. | Car bon prec urso r | Prestabi lizati on treat men t Y/N | Prestabiliz ation temper ature (°C) | Prestabil izatio n time (h) | Carbo nizatio n temper ature (°C) | Carb oniz ation time (h) | Oxid ation treat men t Y/N | Oxid ation atmo sphe re | Oxida tion tempe rature (°C) | Oxida tion time (h) |
|---|---|---|---|---|---|---|---|---|---|---|
| 1 | Phe nolic resin | Y | 180 | 4 | 900 | 2 | N | - | - | - |
| 2 | Cell ulos e | Y | 200 | 10 | 900 | 2 | N | - | - | - |
| 3 | Star ch | Y | 220 | 48 | 800 | 5 | N | - | - | - |
| 4 | Star ch | Y | 220 | 48 | 1500 | 2 | Y | 2%O ₂-N₂ | 600 | 2 |
| 5 | Sucr ose | Y | 170 | 24 | 900 | 3 | N | - | - | - |
| 6 | Sucr ose | Y | 170 | 24 | 900 | 10 | Y | 15% CO₂-N₂ | 900 | 4 |
| 7 | Co mm erci al carb on 1 | - | - | - | - | - | - | - | - | - |
| 8 | Co mm erci al carb on 2 | - | - | - | - | - | - | - | - | - |
| 9 | Co mm erci al carb on 2 | - | - | - | - | - | Y | 15% CO₂-N₂ | 900 | 4 |
| 10 | Co mm erci al carb on 3 | - | - | - | - | - | - | - | - | - |

**Table 2 Specific surface area and pore properties of porous carbon substrate**

| Porous carbon substrate | Oxygen content (y1/x1) | Specific surface area (m²/g) | Total pore volume (cm³/g) | Proportion of micropores, mesopores, and macropores (%) |
|---|---|---|---|---|
| No. | | | | |
| 1 | 0.023 | 120 | 0.17 | 16, 49, 35 |
| 2 | 0.035 | 237 | 0.38 | 12, 67, 21 |
| 3 | 0.025 | 325 | 0.35 | 21, 76, 3 |
| 4 | 0.031 | 380 | 0.74 | 9, 70, 21 |
| 5 | 0.028 | 283 | 0.33 | 15, 66, 19 |
| 6 | 0.035 | 855 | 0.89 | 23, 68, 9 |
| 7 | 0.033 | 1409 | 0.43 | 79, 18, 3 |
| 8 | 0.018 | 162 | 0.36 | 8, 55, 37 |
| 9 | 0.000 | 581 | 1.10 | 10, 52, 38 |
| 10 | 0.021 | 98 | 0.73 | 1, 25, 74 |

**Table 3 Preparation conditions of steps S1 and S2 of the nano silicon-oxygen-carbon structural composite material in embodiments and comparative embodiments**

| Embodim ents | Porou s carbo n substr ate No. | Deposit ion mixed gas 1 | Deposit! on tempera ture 1 (°C) | Deposi tion time 1 (h) | Deposi tion mixed gas 2 | Deposit! on tempera ture 2 (°C) | Deposi tion time 2 (h) | Deposi tion Cycle |
|---|---|---|---|---|---|---|---|---|
| 1 | 4 | 20%Si H4-N2 | 600 | 2 | 1%O2-N2 | 200 | 0.2 | 15 |
| 2 | 4 | 20%Si H4-N2 | 600 | 2 | 1%O2-N2 | 200 | 0.5 | 15 |
| 3 | 2 | 20%Si H4-N2 | 600 | 0.6 | 1%O2-N2 | 150 | 0.1 | 50 |
| 4 | 2 | 20%Si H4-N2 | 600 | 5 | 1%O2-N2 | 150 | 0.7 | 6 |
| 5 | 2 | 20%Si H4-N2 | 600 | 10 | 1%O2-N2 | 150 | 1.5 | 3 |
| 6 | 2 | 20%Si H4-N2 | 600 | 15 | 1%O2-N2 | 150 | 5 | 2 |
| 7 | 5 | 20%Si H4-N2 | 600 | 2 | 1%O2-N2 | 200 | 0.2 | 15 |
| 8 | 9 | 20%Si H4-N2 | 600 | 2 | 1%O2-N2 | 200 | 0.2 | 15 |
| 9 | 4 | 20%Si H4-N2 | 600 | 2 | 1%O2-N2 | 200 | 0.2 | 10 |
| 10 | 4 | 50%Si H4-N2 | 600 | 2 | 2%O2-N2 | 200 | 0.2 | 15 |
| 11 | 1 | 10%Si2 H6-N2 | 600 | 2 | 1%O2-N2 | 200 | 0.2 | 15 |
| 12 | 1 | 5%Si3 H8-N2 | 600 | 2 | 1%O2-N2 | 200 | 0.2 | 15 |
| 13 | 6 | 20%Si H4-N2 | 400 | 5 | 5%CO 2-N2 | 500 | 0.5 | 18 |
| 14 | 6 | 20%Si H4-N2 | 500 | 5 | 5%CO 2-N2 | 500 | 0.5 | 10 |
| 15 | 6 | 20%Si H4-N2 | 700 | 5 | 5%CO 2-N2 | 500 | 0.5 | 6 |
| 16 | 6 | 20%Si H4-N2 | 700 | 8 | 5%CO 2-N2 | 500 | 1 | 4 |
| 17 | 6 | 20%Si H4-N2 | 600 | 2 | 5%CO 2-N2 | 600 | 0.2 | 15 |
| 18 | 3 | 20%Si H4-N2 | 600 | 2 | 10% aceton e-N2 | 400 | 0.2 | 15 |
| 19 | 3 | 20%Si H4-N2 | 600 | 2 | 10% aceton e-N2 | 450 | 0.2 | 15 |
| 20 | 3 | 20%Si H4-N2 | 600 | 2 | 50% aceton e-N2 | 600 | 0.2 | 15 |
| 21 | 3 | 20%Si H4-1% acetone-N2 | 600 | 30 | - | - | - | 1 |
| 22 | 3 | 20%Si H4-1% methan ol-N2 | 600 | 30 | - | - | - | 1 |
| 23 | 4 | 20%Si H4-N2 | 600 | 2 | 5%O2-N2 | 300 | 0.8 | 15 |
| 24 | 10 | 20%Si H4-N2 | 600 | 2 | 1%O2-N2 | 300 | 0.2 | 15 |
| 25 | 7 | 20%Si H4-N2 | 600 | 2 | 1%O2-N2 | 300 | 0.2 | 15 |
| Compara tive embodim ent 1 | 8 | 20%Si H4-N2 | 600 | 30 | - | - | - | 1 |
| Compara tive embodim ent 2 | 4 | 20%Si H4-N2 | 600 | 30 | - | - | - | 1 |

**Table 4 Physical properties and electrochemical performance of the nano silicon-oxygen-carbon structural composite material in embodiments and comparative embodiments**

| E m b o di m e nt s | Silic on cont ent (wt %) | Oxyg en conte nt (wt % ) | Carbo n conte nt (wt %) | Speci fic surfa ce area (m²/g ) | Total pore volum e (cm³/g ) | True densit y (g/cm³ ) | Initia I coul ombi c effici ency at 1.5 V (%) | Capa city per gram (mAh/ g) | Expan sion rate of the electro de sheet (%) | Cap acity per gra m rete ntion rate (%) |
|---|---|---|---|---|---|---|---|---|---|---|
| 1 | 50.2 | 1.9 | 47.9 | 4.7 | 0.024 | 1.97 | 92.6 | 2029 | 124 | 95.6 |
| 2 | 47.3 | 4.8 | 47.9 | 3.7 | 0.031 | 1.93 | 88.7 | 1857 | 97 | 96.3 |
| 3 | 41.4 | 1.7 | 56.9 | 4.9 | 0.037 | 1.94 | 91.6 | 1627 | 91 | 95.8 |
| 4 | 44.3 | 1.3 | 54.4 | 4.6 | 0.024 | 1.95 | 92.2 | 1641 | 98 | 97.1 |
| 5 | 42.2 | 1.4 | 56.4 | 8.2 | 0.033 | 1.96 | 90.2 | 1663 | 115 | 92.7 |
| 6 | 41.1 | 2.4 | 56.5 | 13.6 | 0.041 | 1.95 | 90.1 | 1591 | 132 | 90.9 |
| 7 | 41.3 | 1.4 | 57.3 | 4.3 | 0.025 | 1.96 | 91.4 | 1639 | 92 | 96.2 |
| 8 | 68.7 | 2.2 | 29.1 | 9.2 | 0.042 | 2.01 | 92.8 | 2506 | 163 | 90.4 |
| 9 | 35.4 | 1.3 | 63.3 | 41.8 | 0.217 | 1.95 | 84.6 | 1465 | 31 | 97.2 |
| 10 | 60.5 | 1.6 | 37.9 | 6.8 | 0.033 | 1.93 | 88.3 | 2149 | 104 | 94.6 |
| 11 | 21.1 | 0.6 | 78.3 | 6.4 | 0.029 | 1.94 | 92.2 | 1072 | 76 | 96.7 |
| 12 | 19.6 | 0.7 | 79.7 | 8.3 | 0.037 | 1.91 | 91.6 | 1054 | 85 | 97.3 |
| 13 | 55.2 | 2.2 | 42.6 | 5.8 | 0.035 | 1.99 | 88.6 | 2006 | 108 | 94.1 |
| 14 | 58.2 | 2.6 | 39.1 | 6.7 | 0.031 | 2.02 | 89.3 | 2081 | 121 | 93.4 |
| 15 | 64.8 | 3.1 | 32.1 | 7.5 | 0.037 | 1.93 | 89.1 | 2165 | 135 | 91.6 |
| 16 | 63.5 | 4.2 | 32.3 | 9.6 | 0.034 | 1.91 | 88.7 | 2149 | 148 | 89.2 |
| 17 | 66.1 | 3.3 | 30.6 | 6.7 | 0.029 | 1.97 | 90.4 | 2202 | 125 | 92.7 |
| 18 | 40.5 | 2.1 | 57.4 | 7.4 | 0.032 | 1.96 | 90.9 | 1645 | 101 | 93.6 |
| 19 | 35.0 | 1.9 | 63.1 | 7.9 | 0.031 | 1.94 | 90.1 | 1563 | 98 | 95.5 |
| 20 | 32.2 | 4.8 | 63.0 | 6.0 | 0.028 | 1.92 | 88.4 | 1389 | 107 | 94.9 |
| 21 | 42.1 | 3.4 | 54.5 | 9.2 | 0.037 | 2.02 | 91.2 | 1621 | 145 | 91.9 |
| 22 | 43.5 | 2.7 | 53.8 | 7.6 | 0.039 | 1.99 | 92.8 | 1592 | 143 | 93.5 |
| 23 | 42.2 | 5.6 | 52.2 | 15.4 | 0.051 | 1.92 | 84.3 | 1219 | 72 | 96.4 |
| 24 | 52.0 | 1.7 | 46.3 | 19.6 | 0.097 | 2.05 | 86.2 | 1912 | 162 | 87.1 |
| 25 | 36.8 | 1.1 | 62.1 | 75.8 | 0.291 | 1.67 | 79.3 | 1287 | 39 | 93.7 |
| 26 | 50.2 | 1.9 | 47.9 | 4.0 | 0.020 | 2.00 | 92.7 | 2015 | 74 | 97.0 |
| 27 | 51.1 | 2.3 | 46.6 | 5.9 | 0.016 | 2.02 | 92.2 | 2021 | 72 | 97.1 |
| 28 | 51.7 | 2.9 | 45.4 | 5.2 | 0.015 | 2.00 | 91.5 | 2034 | 76 | 96.9 |
| 29 | 52.5 | 3.7 | 43.8 | 5.7 | 0.019 | 2.01 | 90.4 | 2009 | 77 | 96.8 |
| 30 | 51.4 | 3.5 | 45.1 | 5.4 | 0.014 | 1.99 | 90.6 | 2024 | 75 | 96.5 |
| 31 | 51.8 | 3.8 | 44.4 | 7.1 | 0.032 | 2.00 | 90.8 | 1999 | 66 | 97.4 |
| 32 | 50.5 | 3.4 | 46.1 | 8.2 | 0.038 | 1.94 | 90.9 | 1783 | 71 | 97.2 |
| 33 | 45.9 | 3.6 | 50.5 | 6.7 | 0.025 | 1.98 | 91.1 | 2048 | 79 | 96.4 |
| 34 | 53.2 | 3.5 | 43.3 | 1.0 | 0.004 | 2.03 | 94.2 | 1852 | 64 | 97.5 |
| 35 | 48.1 | 2.1 | 49.8 | 2.5 | 0.005 | 2.01 | 94.0 | 2011 | 72 | 97.2 |
| 36 | 50.5 | 3.2 | 46.3 | 1.3 | 0.004 | 1.97 | 94.5 | 1869 | 75 | 97.1 |
| Co mp arative Embodi ment 1 | / | / | / | / | / | / | / | / | / | / |
| Comparative Embodiment 2 | 51.4 | 1.1 | 47.5 | 12.5 | 0.038 | 2.02 | 91.2 | 1924 | 157 | 86.5 |

Figure 4 shows the constant current charge and discharge curves of the first cycle of a half cell (with a lithium metal electrode as the counter electrode) of the electrodes in embodiment 1, embodiment 23, and comparative embodiment 2. Due to the uniform dispersion of silicon nanoparticles in the composite material in embodiment 1, the electrode containing same exhibited a higher capacity per gram (2029 mAh/g) and initial coulombic efficiency (92.6%, 1.5V), and the delithiation curve exhibited a ramp type. Embodiment 23 used a higher oxygen content, the electrode exhibited a greater polarization, at the same time both the capacity per gram and the initial coulombic efficiency were low, i.e. 1219 mAh/g and 84.3%, respectively, and the slope of the ramp type delithiation curve was significantly increased compared to embodiment 1. An oxygen containing treatment during the silicon deposition step was not carried out in comparative embodiment 2, resulting in larger and unseparated silicon nanoparticles in the composite material, and a corresponding decrease in capacity per gram and the initial coulombic efficiency, and rapidly reaching a voltage plateau during the charge process.

Figure 5 shows the XRD spectra of the nano silicon-oxygen-carbon structural composite material in embodiment 1, embodiment 23 and comparative embodiment 2 after the treatment at 800°C in a N₂ atmosphere. As a comparison, the XRD spectrum of embodiment 1 before the heat treatment was also shown, and the XRD spectra of embodiment 23 and comparative embodiment 2 before the heat treatment were similar to embodiment 1, and also showed as broadened peak envelopes, which will not be shown here, reflecting that silicon was in/or near amorphous state in all three composite materials. It can be seen that there was obvious crystallization of silicon particles in the composite material after the treatment at 800°C, but the crystallinity and crystal particle size were related to the degree of oxygen treatment, for comparative embodiment 2, no oxygen treatment was carried out, and the crystallinity was very high after the high-temperature treatment, with a crystal particle size of greater than 20 nm, while embodiment 1 also showed a certain crystallinity, with a crystal particle size of 7.7 nm, embodiment 23 adopted a higher oxygen containing treatment temperature and longer oxygen containing treatment time than embodiment 1, resulting in a higher oxygen content in the composite material and being still close to amorphous state after the heat treatment. There was a corresponding relationship between the crystallinity and crystal particle size of the composite material after the treatment at 800°C and the results in the constant current charge and discharge curve of electrodes in Figure 4. It showed that the technical solution of the disclosure can effectively control the agglomeration of silicon nanoparticles in the process of silicon deposition, and can obtain silicon nanoparticles with good dispersion and small size, and then can regulate the electrochemical performance of the composite material electrode.

Figure 6 shows the cycle performance of a half cell (with a lithium metal electrode as the counter electrode) containing electrodes of the nano silicon-oxygen-carbon structural composite material in embodiment 1 and comparative embodiment 2. Embodiment 1 had uniformly dispersed silicon nanoparticles, and the electrode containing same had a capacity retention rate of 95.6% after 50 cycles, no oxygen containing treatment was carried out in comparative embodiment 2, and the silicon nanoparticles were not separated, resulting in low capacity per gram and initial coulombic efficiency, high expansion rate of the electrode sheet, and the capacity retention rate was only 86.5% after 50 cycles.

Embodiment 24 used a porous carbon substrate with a large pore volume of greater than 50% for silicon deposition, due to the large number of macropores on the porous carbon substrate, it was difficult for silicon particles to completely fill the macropores, some of the macropores become mesopores after being loaded with silicon, resulting in a larger specific surface area of the composite material, and thus more side reactions and lower initial coulombic efficiency during the electrode process.

Embodiment 25 used a porous carbon substrate with a microporous volume of greater than 50% for silicon deposition, due to the large number of micropores in the porous carbon substrate, pore blockage may occur during the silicon deposition process, and then silicon particles aggregated outside the pores, after the composite material was crushed, some of the closed pores become open pores, resulting in an increase in specific surface area, moreover, more closed pores resulted in a lower true density of the composite material, and during the tabletting process, structural collapse can occur, ultimately resulting in a relatively low per gram capacity and initial coulombic efficiency of the composite material.

Compared with embodiment 1, the crushing and grading and subsequent deep oxidation treatment of materials in embodiments 26 to 33 further ensured that silicon nanoparticles in the finished nano silicon-oxygen-carbon structural composite material were coated by an extremely low expansion oxide layer. Therefore, the volume effect of the uniformly dispersed and bounded silicon nanoparticles in the obtained nano silicon-oxygen-carbon structural composite material during the process of lithium intercalation and delithiation can be effectively buffered and suppressed, thus significantly reducing the expansion rate of the electrode sheet and significantly improving the capacity per gram retention rate.

In embodiments 34 to 36, the specific surface area of the composite material was reduced by the outer layer clading, resulting in a significant increase in the initial coulombic efficiency of the battery and a high cycle capacity retention rate, however, due to the decrease in silicon content, the battery capacity was slightly reduced.

As can be seen from the above description that the above embodiments of the disclosure achieve the following technical effects:
Firstly, a porous carbon substrate containing a surface oxidized layer is selected as the carrier for silicon deposition, through the C-O-Si chemical interaction between the surface oxidized layer of the carbon substrate and the silicon containing precursor, effective deposition of silicon material in the pores and on the surface of the porous carbon substrate is achieved; then, by controlling the deposition conditions of silicon containing precursor and oxygen containing precursor in the preparation method, the uniform dispersion and deposition of silicon nanoparticles with the oxygen containing substance and the optional carbon is achieved, forming a repeating structure similar to (Si*_{z1}*-O*_{y}*-C*ₓ*)*ₙ* (*n* ≥ 1). The silicon material is dispersed by the oxygen containing substance and the optional carbon in the composite material, achieving effective nanoscalization of silicon particles. At the same time, the oxygen containing substance and the optional carbon also play a bouonding role on the silicon particles, so that the volume effect of the uniformly dispersed and bounded silicon nanoparticles during lithium intercalation and delithiation processes can be effectively buffered, and the material strength can be improved, which contributes to the improvement of the electrochemical performance of the silicon-oxygen-carbon composite anode material and the electrochemical device containing same.

The size of silicon nanoparticles in the nano silicon-oxygen-carbon structural composite material is relatively small, and they are stable when combined with the porous carbon substrate, and are evenly dispersed in the pores and on the surface of the porous carbon substrate. The appropriate content of the oxygen-containing substance and the optional carbon contributes to the good dispersion of silicon nanoparticles, while also bounding the expansion of silicon during the lithium intercalation process, resulting in a high strength of the materia, low expansion rate of electrode sheet, and good battery cycle performance of battery. The nano silicon-oxygen-carbon structural composite material has a small specific surface area and pore volume, effectively reducing side reactions on the electrode surface, which is beneficial for improving the coulombic efficiency of the material and obtaining silicon-oxygen-carbon composite anode materials with an ultra-high initial coulombic efficiency. The nano silicon-oxygen-carbon structural composite material contained closed pores, which can to some extent buffer the volume expansion of silicon during the lithium insertion process. The electrode plates containing this composite material had a lower expansion rate, thereby further improving the battery cycle performance.

After depositing silicon nanoparticles on the porous carbon substrate, by crushing and grading the obtained materials in the present disclosure, on the one hand, the stress caused by different material phases in the materials is released, on the other hand, the composite material particles with uniform and appropriate size and shape can be obtained, so as to facilitate the homogenate and subsequent preparation of electrodes. After crushing and grading, the surface of fresh silicon particles is exposed and slowly oxidized in the air to form an oxide layer, which can also play a certain role in alleviating and bounding expansion. In addition, a stable oxide layer can be controllably generated on the surface of the exposed silicon nanoparticles through certain steps in the disclosure, and the oxide layer exists in a form of SiO_{δ} (0<δ≤2). The uniform oxide layer having a controllable structure on the surface of silicon nanoparticles can further alleviate and bound the lithium intercalation expansion of silicon.

The composite material is crushed and graded to release possible stresses among different material phases, and make the material have the appropriate size and shape distribution required for homogenization; finally, the broken and graded composite material was subjected to deep oxidation treatment to form a stable oxide layer on the surface of silicon nanoparticles. The crushing and grading and the subsequent deep oxidation treatment further ensure that silicon nanoparticles in the finished nano silicon-oxygen-carbon structural composite material are coated by an extremely low expansion oxide layer. Therefore, the volume effect of the uniformly dispersed and bounded silicon nanoparticles in the obtained nano silicon-oxygen-carbon structural composite material can be effectively buffered and suppressed during the lithium intercalation and delithiation processes, and the material strength can be improved, which helps to improve the electrochemical performance of the electrochemical device containing the nano silicon-oxygen-carbon structural composite material.

To sum up, the nano silicon-oxygen-carbon structural composite material provided by the disclosure includes a porous carbon skeleton and silicon nanoparticles evenly distributed in its pores and on its surface, the carbon and silicon are stably compounded, the nanoscalization and uniform dispersion of silicon particles are guaranteed by three levels of oxygen: (1) formation of C-O-Si bonds between the oxygen containing groups on the surface of porous carbon substrate and silicon nanoparticles to ensure stable bonding between silicon nanoparticles and porous carbon substrate; (2) in the pores of porous carbon substrate, separating the silicon nanoparticles by the oxygen containing substance to avoid uncontrolled aggregation and growth during deposition, so as to control the size of silicon nanoparticles and realize separation and/or clading of silicon nanoparticles by the oxygen containing substance; (3) uniform growth of the oxide layer on the surface of the fresh silicon particles exposed after crushing and grading to further realize the coating of silicon nanoparticles by the oxygen containing substance. Therefore, the silicon nanoparticles in the obtained nano silicon-oxygen-carbon structural composite material are completely separated and/or coated by the SiO_{δ}(0<δ≤2) network, and the silicon nanoparticles and SiO_{δ} are uniformly distributed on the surface and/or in the pores of the porous carbon substrate. The separation and/or clading of silicon nanoparticles by SiO_{δ} can effectively control the volume expansion and contraction of silicon and the fusion among silicon particles in the charge and discharge processes of the composite material. In addition, a suitable range of silicon, oxygen, and carbon element contents and specific surface area of the composite material can enable the nano silicon-oxygen-carbon structural composite material to exhibit the optimal gram capacity, first coulomb efficiency, extremely low expansion rate, and excellent cycle performance.

In some embodiments, the capacity per gram of lithium-ion secondary batteries is greater than or equal to 1500 mAh/g, the initial coulombic efficiency at 1.5 V is greater than or equal to 85%, the electrode sheet expansion rate is less than 120%, and the capacity per gram retention rate after 50 cycles of charge and discharge is greater than or equal to 95%.

In some embodiments, the capacity per gram of lithium-ion secondary batteries is greater than or equal to 2000 mAh/g, the initial coulombic efficiency at 1.5 V is greater than or equal to 90%, the electrode sheet expansion rate is less than 150%, and the capacity per gram retention rate after 50 cycles of charge and discharge is greater than or equal to 95%.

As analyzed in the background of the disclosure, it is difficult for a silicon-carbon composite material in the prior art to achieve effective deposition and uniform dispersion of silicon nanoparticles on a porous carrier during the preparation process, thus it is difficult to suppress significant volume expansion and contraction of the electrode during the charge and discharge processes, ultimately leading to deterioration of electrode cycle performance. In addition, during the charge and discharge processes of the battery, adjacent silicon particles may fuse, leading to further deterioration of electrode cycle performance. In order to solve the above-mentioned technical problems, the present disclosure provides a nano silicon-oxygen-carbon composite material, a preparation method thereof, an anode, and an electrochemical device.

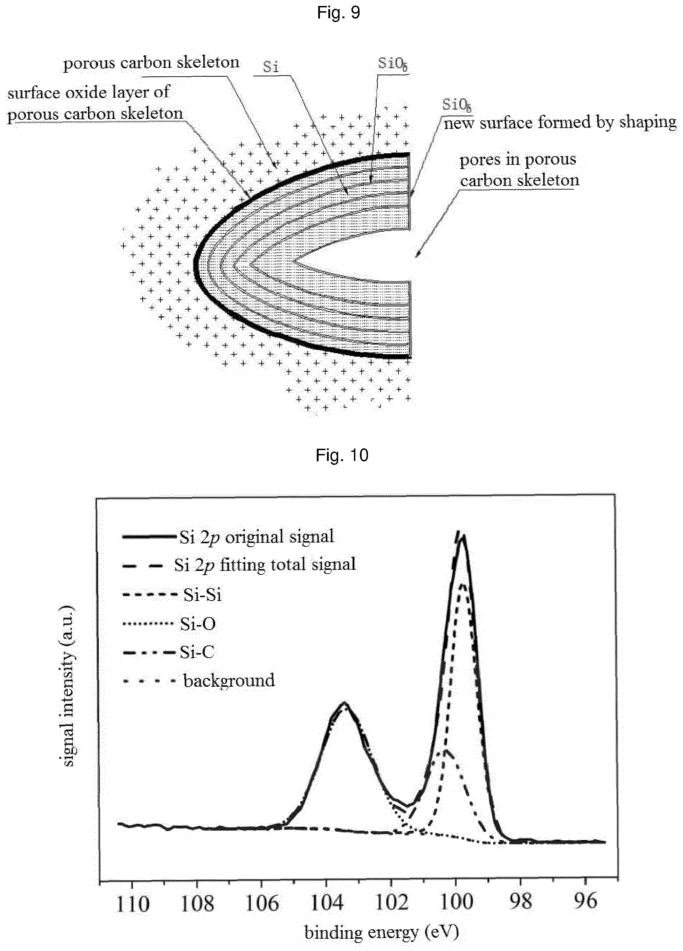

The porous carbon skeleton and silicon nanoparticles in the nano silicon-oxygen-carbon composite material of the present disclosure are connected through C-O-Si bonds, and the bonding between the silicon nanoparticles and the porous carbon skeleton is stable, the silicon nanoparticles are separated and/or claded by the SiO_{δ} network, and evenly distributed in the pores and on the surface of the porous carbon skeleton, thereby effectively suppressing the aggregation of silicon nanoparticles during the deposition process, as well as their volume change and possible fusion during the charge and discharge cycle, the lithium ion secondary battery containing the anode prepared from the obtained composite material has a high capacity per gram, high initial coulombic efficiency and good cycle performance. Figure 9 is a structural schematic diagram of the nano composite material of the disclosure.

Due to the different lithium intercalation abilities of silicon and carbon in anode materials, although the presence of an oxygen-containing substance in a form of SiO_{δ} can alleviate and bound expansion, it also leads to irreversible lithium intercalation, reducing the initial coulombic efficiency of anode, therefore, the content of silicon, oxygen, and carbon in the nano silicon-oxygen-carbon composite material has a significant impact on the capacity, initial coulombic efficiency, and electrode sheet expansion rate, etc., of the composite material, and it is needed to be reasonable controlled during the preparation process. In the nano silicon-oxygen-carbon composite material, the silicon- and oxygen-containing substances are mainly deposited inside the pores of the porous carbon skeleton, and a small amount is deposited on the surface outside the pores of the carbon skeleton. On the other hand, a relatively dense nano silicon-oxygen-carbon composite material is prepared in the present disclosure, therefore, the pore volume of the porous carbon skeleton determines the maximum loading amount of silicon precursor and oxygen-containing precursor. The concentration, deposition temperature and relative time of silicon- and oxygen-containing precursors, as well as the pore volume of the porous carbon skeleton, jointly determine the silicon content, oxygen content, and correspondingly the carbon content of the nano silicon-oxygen-carbon composite material. The flow rate of deposition gas is related to the volume of the reaction furnace, the used amount of porous carbon skeleton, and the concentration of silicon precursor and oxygen-containing precursor in the deposition mixed gas, it can be adjusted accordingly according to the situation, and will not be described in detail in this specification.

### Embodiment 1:

### Preparation of nano silicon-oxygen-carbon composite material:

Step S1, preparation of porous carbon skeleton with surface oxidation layer: using starch as a carbon precursor and a triblock copolymer P123 as a pore forming agent, adding starch to an aqueous/ethanol solution of P123, stirring at 50°C until the solvent evaporates completely, heating up the resulting solid from room temperature to 220°C in an air atmosphere, and holding at this temperature for 48 hours for pre-stabilization; then changing to N₂, heating up to 800°C at 2°C/min, and holding at this temperature for 2 hours to complete the carbonization; changing the gas to 5%CO₂-N₂ (using N₂ as the equilibrium gas, containing 5% CO₂ therein) and heating up to 900°C, and holding at 900°C in a 10%CO₂-N₂ atmosphere for 2 hours; then, cooling down to a specific temperature in a N₂ atmosphere for ready use to obtain a porous carbon skeleton containing a surface oxidized layer; and using airflow milling to crush same to particles having a median particle size of approximately 10-20 µm for ready use. The specific surface area of the particles of the porous carbon skeleton was 809 m²/g, the pore volume was 0.68 cm³/g, and the proportions of micropores, mesopores, and macropores were 16%, 75%, and 9%, respectively, wherein the 2-10 nm pore volume accounted for 68% of the total pore volume.

Step S2, silicon deposition and oxygen containing treatment: placing the particles of a porous carbon skeleton with a surface oxidized layer which had a median particle size of approximately 10-20 µm of step S1 in a tubular furnace, vacuumizing to a vacuum degree of 10⁻³ Pa, and heating up to 600°C at 2°C/min in a N₂ atmosphere, changing to 20%SiH₄-N₂ mixed gas; and in the 20%SiH₄-N₂ mixed gas atmosphere, holding at 600°C for 2 hours for the deposition of silicon; then changing to N₂, cooling down to 200°C, then changing to a 1%O₂-N₂ mixed gas; and in the 1%O₂-N₂ mixed gas atmosphere, holding at 200°C for 12 minutes for oxygen containing treatment; then changing to N₂ and heating up to 600°C, whereby performing 15 cycles of silicon deposition-oxygen containing treatment on the porous carbon skeleton, and naturally cooling down under the protection of N₂; and crushing and shaping the obtained material by wet ball milling to obtain a nano silicon-oxygen-carbon composite material having a median particle size of 6 µm, to obtain a nano silicon-oxygen-carbon composite material 1.

Step S3, deep oxidation treatment: placing the nano silicon-oxygen-carbon composite material 1 obtained in step S2 in a tubular furnace, vacuumizing to a vacuum degree of 10⁻³ Pa, and then introducing 1% O₂-Ar mixed gas, controlling the heating rate at 1 °C/min, heating up from room temperature to 200°C, and treating at 200°C for 2 hours, cooling down to obtain the nano silicon-oxygen-carbon composite material.

The obtained nano silicon-oxygen-carbon composite material was subjected to XRD, N₂ adsorption testing, XPS testing and TEM detection, and electrodes were made and an electrochemical test was carried out.

Preparation of electrodes and half cells and electrochemical performance testing methods (applicable to all embodiments and comparative embodiments listed in this disclosure):

The electrode sheets comprising the composite materials of embodiments and comparative embodiments were prepared into CR2032 button batteries using conventional methods, and the electrical performance of which was tested. The CR2032 button batteries were assembled in a glove box, a lithium metal sheet was used as the counter electrode, polypropylene microporous membrane was used as the separator, and the electrolytic solution was LiPF₆ dissolved in a mixed solution of ethyl carbonate (EC) and diethyl carbonate (DEC) (EC: DEC=1:1 by volume), wherein the concentration of LiPF₆ was 1 mol/L.

Charge and discharge tests were carried out on the battery using the LAND battery testing system.

After the CR2032 button battery was left standing for 6 hours, it was discharged to 0.005 V at 0.05 C, and then discharged to 0.005 V at 0.01 C; and after standing for 5 minutes, it was charged to 1.5 V at a constant current of 0.05 C; the initial delithiation capacity per gram was the capacity per gram of the electrode material (or referred to as mass specific capacity); the ratio of the initial delithiation capacity to the initial lithium intercalation capacity was the initial coulombic efficiency of the battery.

After standing for 5 minutes, the above charge and discharge steps were repeated twice;
Then it was discharged to 0.005 V at 0.25 C; after standing for 5 minutes, it was charged to 1.5 V at 0.25C constant current, and the above cycle was repeated for 50 times. The capacity retention rate was calculated according to specific charge capacity of the 50^{th} cycle/charge capacity of the 1^{st} cycle × 100%.

Testing the expansion rate of the electrode sheet using the following method: after making the CR2032 button battery stand for 6 hours, discharging to 0.005 V at 0.05 C, and then discharging to 0.005 V at 0.01 C; then disassembling the button battery in the glove box, cleaning the electrode sheet with DEC, and measuring the thickness of the electrode sheet. The expansion rate was calculated according to the equation: (thickness of electrode sheet in a first fully charged state - thickness of fresh electrode sheet)/thickness of fresh electrode sheet × 100%.

XPS testing was performed on the nano silicon-oxygen-carbon composite material obtained in embodiment 1, the binding energy of the amorphous C-C peak in the C 1s spectrum at 284.7 eV was used as the peak position calibration. Since the high resolution C 1s spectrum contained the C-C peak present in the test system, there was a large error in its C-Si analysis, and thus only its high resolution Si 2*p* spectrum was analyzed (Figure 10). The high-resolution Si 2*p* spectrum in an XPS testing and its deconvolution peak analysis results of the nano silicon-oxygen-carbon composite material obtained in embodiment 1 showed that the peak area of Si-C binding energy was significantly smaller than that of Si-O and Si-Si, the proportion of each bonding form can be calculated according to the corresponding peak area. In the nano silicon-oxygen-carbon composite material obtained in embodiment 1, the proportion of Si-O to Si-Si in the Si 2*p* spectrum was 0.95, and the proportion of Si-C to Si-Si was 0.41, it could be seen that the porous carbon skeleton and silicon nanoparticles in the nano silicon-oxygen-carbon composite material obtained in embodiment 1 were mainly connected by C-O-Si, and the proportion of C-Si was small.

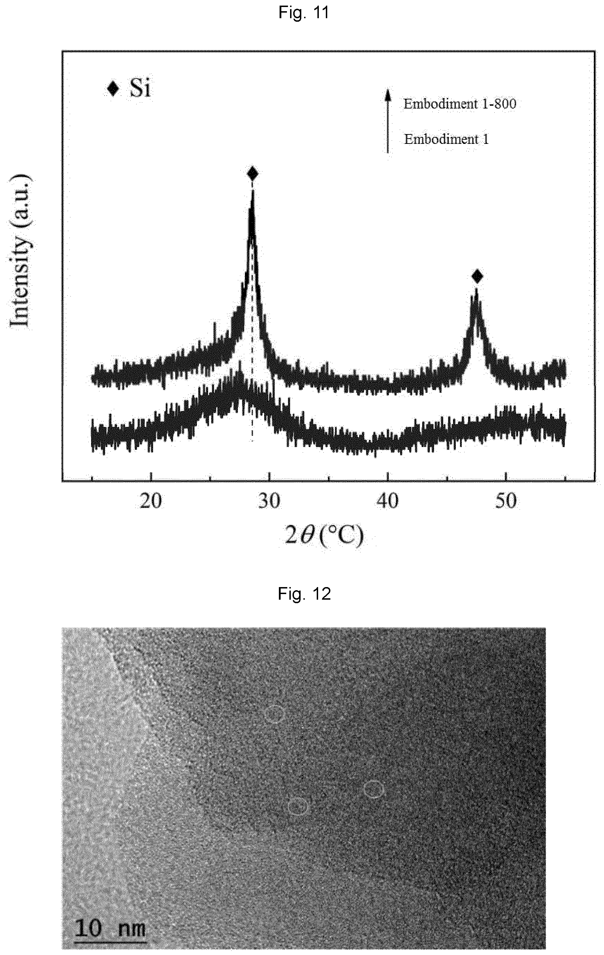

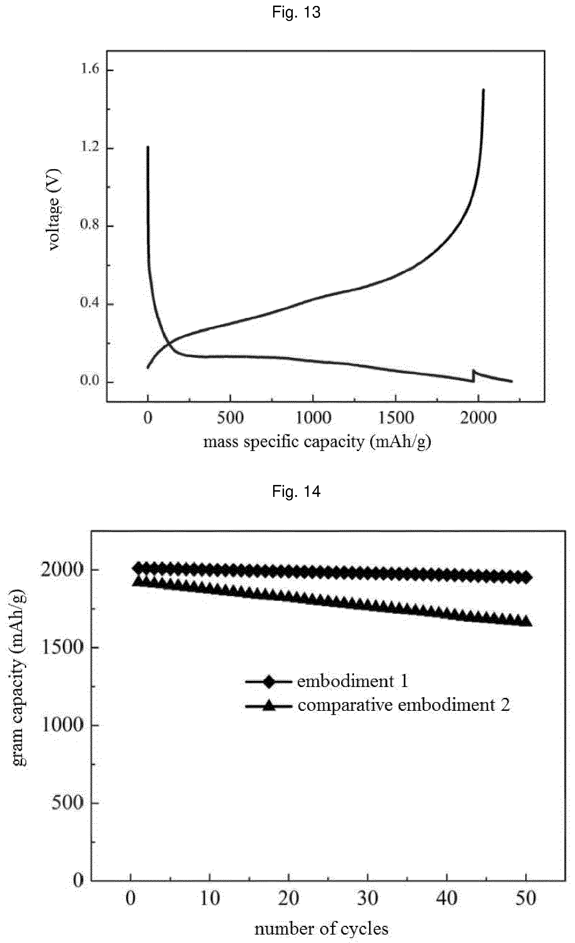

As shown in Figure 11, there was no obvious crystalline peak in the XRD spectrum of the nano silicon-oxygen-carbon composite material obtained from embodiment 1, reflecting that the silicon particles are amorphous and the carbon was also amorphous. Correspondingly, in the HRTEM diagram of Figure 12, it could be seen that the composite material was mainly amorphous without obvious long-range ordered structure, which was consistent with the XRD spectrum. The spacing between lattice fringes in the white circle in Figure 12 was about 0.314 nm, corresponding to the interplanar spacing of (111) in the Si crystal particles. It can be seen that the number of the ordered lattice fringes is less than 5, thus the Si crystal particle size is less than 2 nm. The XRD testing results of the nano silicon-oxygen-carbon composite material obtained from embodiment 1 after the treatment at 800°C are shown in Figure 11, indicating that the limiting size of the increased crystal particle size is 7 nm. The specific surface area, pore volume, and true density of the obtained nano silicon-oxygen-carbon composite material were 4.1 m²/g, 0.021 cm³/g, and 2.00 g/cm³, respectively, as measured by N₂ adsorption and acetone immersion method. The mass contents of silicon, oxygen, and carbon in the nano silicon-oxygen-carbon composite material obtained from embodiment 1 were 52.6%, 2.1%, and 45.3%, respectively. The constant current charge and discharge curves of the electrode containing the nano silicon-oxygen-carbon composite material obtained from embodiment 1 were shown in Figure 13, with a capacity per gram of 2011 mAh/g, an initial coulombic efficiency of 92.8% at 1.5 V, an electrode sheet expansion rate of 75%, and a capacity per gram retention rate of 97.1% after 50 cycles of charge and discharge, the variation trend of its capacity per gram with the increase of the number of cycles is shown in Figure 14.

### Comparative embodiment 1:

### Preparation of nano silicon-oxygen-carbon composite material:

Step S1, preparation of porous carbon skeleton: using starch as a carbon precursor, heating up from room temperature to 220°C in an air atmosphere and holding at this temperature for 48 hours for pre-stabilization; then changing to N₂, and heating up at 2°C/min to 800°C and holding at this temperature for 2 hours to complete carbonization, then cooling down in a N₂ atmosphere to obtain a porous carbon skeleton, and using airflow milling to crush same to particles having a median particle size of approximately 10-20 µm for ready use. The specific surface area of the particles of the obtained porous carbon skeleton was 331 m²/g, the pore volume was 0.35 cm³/g, and the proportions of micropores, mesopores, and macropores were 21%, 63%, and 16%, respectively.

Step S2, silicon deposition: heating up the porous carbon skeleton from room temperature to 600°C at 2°C/min in a N₂ atmosphere, then changing to a 20%SiH₄-N₂ mixed gas; carrying out the deposition of silicon in a 20%SiH₄-N₂ mixed gas atmosphere at 600°C for 30 hours; and naturally cooling down under the protection of N₂; and crushing and shaping same by wet grinding to obtain a nano silicon-oxygen-carbon composite material having a median particle size of 6 µm.

There was no step S3 of deep oxidation treatment.

The silicon-carbon composite material prepared by this method had a structure of C-Si, wherein no pore forming agent was introduced in the preparation process of porous carbon skeleton and no oxidation treatment was carried out after carbonization. In this material, the Si particles were severely agglomerated, and during the crushing process, silicon and carbon were separated, making it impossible to form an effective silicon-carbon composite material, and further characterization and electrochemical testing will not be conducted.

### Comparative embodiment 2:

### Preparation of nano silicon-oxygen-carbon composite material:

Step S1 was the same as embodiment 1.

Step S2 was the same as comparative embodiment 1.

There was no step S3 of deep oxidation treatment.

In this method, a silicon deposition (without oxygen containing treatment) was carried out on the carbonized porous carbon skeleton containing a surface oxidized layer, the structure of the prepared silicon-oxygen-carbon composite material was C-O-Si. Compared to the comparative embodiment 1, an effective loading of Si can be obtained with the material, wherein the Si particles were firmly bonded to the porous carbon skeleton, and silicon carbon separation will not occur during the crushing process, the electrochemical test results showed that the initial coulombic efficiency at 1.5 V can reach 91.8%, however, due to there was almost no oxide layer separation and bounding among silicon particles, the expansion rate of the electrode sheet was high, reaching 163%, which will affect its cycle performance, and the capacity retention rate was only 86.2% after 50 cycles.

### Comparative embodiment 3:

### Preparation of nano silicon-oxygen-carbon composite material:

Step S1 was the same as embodiment 1.

Step S2 was the same as comparative embodiment 1.

Step S3 was the same as embodiment 1.

### Comparative embodiment 4:

### Preparation of nano silicon-oxygen-carbon composite material:

Steps S1-S2 were the same as embodiment 1.

There was no step S3 of deep oxidation treatment.

Comparative embodiment 3 and comparative embodiment 4, a same porous carbon skeleton as that in embodiment 1 was used as the silicon deposition carrier, therefore the silicon will form C-O-Si chemical bonding with the oxygen containing layer on the surface of the porous carbon skeleton when depositing, and a stable silicon-oxygen-carbon composite material will be obtained. The silicon-oxygen-carbon composite material of comparative embodiment 3 was obtained through the subsequent deep oxidation treatment to comparative embodiment 2, although there was a deep oxidation treatment later, since the silane deposition process is not additionally treated with an oxygen-containing substance, the aggregation growth of silicon particles is limited only by the pore structure of the porous carbon skeleton, and an effective SiO_{δ} network cannot be formed, therefore the cycle performance was poor compared to embodiment 1, the capacity retention rate was only 86.9% after 50 cycles, and the expansion rate of the fully lithium intercalation electrode sheet was as high as 147%. Compared comparative embodiment 4 with embodiment 1, no deep oxidation treatment after crushing and shaping was carried out, but the surface of a large number of fresh silicon nanoparticles were exposed after crushing, and the thin oxide layer formed by natural oxidation was not enough to bound the lithium intercalation expansion of silicon in the use of the electrodes, thus the expansion rate of the electrode sheet was still high, reaching 125%, and the capacity retention rate was only 89.5% after 50 cycles.

### Embodiment 2:

### Preparation of nano silicon-oxygen-carbon composite material:

Step S1, preparation of porous carbon skeleton containing a surface oxidized layer: S1 - 1, using starch as a carbon precursor and a triblock copolymer P127 as a pore forming agent, adding starch to an aqueous/ethanol solution of F127, stirring at 50°C until the solvent evaporates completely, then heating up the obtained solid from room temperature to 220°C in an air atmosphere and holding at this temperature for 48 hours for pre-stabilization; then changing to N₂, heating up to 800°C at 2°C/min, and holding at this temperature for 2 hours to complete the carbonization; then cooling down in a N₂ atmosphere to obtain a porous carbon skeleton containing a surface oxidized layer, and using airflow milling to crush same to particles having a median particle size of approximately 10-20 µm for the treatment in next step. S1-2, dispersing the obtained porous carbon skeleton particles in a 1M HNOs aqueous/ethanol (50/50) solution, sonicating and dispersing for 2 hours, stirring at 60°C for 8 hours, filtering, washing the solid multiple times with deionized water, and vacuum drying the obtained solid, then heat up to 400°C at 2°C/min in a N₂ atmosphere, and holding at this temperature for 2 hours to obtain the porous carbon skeleton particles containing a surface oxidized layer. The specific surface area of the particles of porous carbon skeleton containing a surface oxidized layer was 705 m²/g, the pore volume was 0.65 cm³/g, and the proportions of micropores, mesopores, and macropores were 12%, 83%, and 5%, respectively, wherein the 2-10 nm pore volume accounted for 72% of the total pore volume.

Steps S2-S3 were the same as embodiment 1.

### Embodiment 3:

### Preparation of nano silicon-oxygen-carbon composite material:

Step S1, Preparation of porous carbon skeleton containing a surface oxidized layer: S1 - 1, mixing a thermoplastic phenolic resin and thermosetting phenolic resin in a ratio of 1:50 as a carbon precursor, and then mixing with a triblock copolymer F127 as a pore forming agent through ball milling, heating up the resulting solid from room temperature to 180°C in an air atmosphere and holding at this temperature for 4 hours for pre-stabilization; then changing to N₂, heating up to 900°C at 2°C/min, and holding at this temperature for 2 hours to complete carbonization, cooling down in a N₂ atmosphere to obtain a porous carbon skeleton containing a surface oxidized layer. Then use airflow milling to crush same to particles having a median particle size of approximately 10-20 µm for the treatment in next step. S1-2, dispersing the obtained porous carbon skeleton particles in a 1M HNOs aqueous/ethanol (50/50) solution, sonicating and dispersing for 2 hours, stirring at 60°C for 8 hours, filtering, washing the solid multiple times with deionized water, and vacuum drying the obtained solid, then heat up to 400°C at 2°C/min in a N₂ atmosphere, and holding at this temperature for 2 hours to obtain the porous carbon skeleton particles containing a surface oxidized layer. The specific surface area of the particles of porous carbon skeleton containing a surface oxidized layer was 837 m²/g, the pore volume was 0.74 cm³/g, and the proportions of micropores, mesopores, and macropores were 13%, 81%, and 6%, respectively, wherein the 2-10 nm pore volume accounted for 69% of the total pore volume.

Steps S2-S3 were the same as embodiment 1.

### Embodiment 4:

### Preparation of nano silicon-oxygen-carbon composite material:

Step S1, Preparation of porous carbon skeleton containing a surface oxidized layer: mixing a thermoplastic phenolic resin and thermosetting phenolic resin in a ratio of 1:50 as a carbon precursor, and then mixing with cetyltrimethylammonium bromide through ball milling, heating up the resulting mixture from room temperature to 180°C in an air atmosphere and holding at this temperature for 4 hours for pre-stabilization; then changing to N₂, heating up to 900°C at 2°C/min, and holding at this temperature for 2 hours to complete carbonization; then heating up to 1200°C at 2°C/min in a N₂ atmosphere, switching to 5% CO₂-Ar, and holding at 1200°C for 2 hours, cooling down in a N₂ atmosphere to obtain a porous carbon skeleton containing a surface oxidized layer. Then use airflow milling to crush same to particles having a median particle size of approximately 10-20 µm for ready use. The specific surface area of the particles of the porous carbon skeleton was 922 m²/g, the pore volume was 0.78 cm³/g, and the proportions of micropores, mesopores, and macropores were 15%, 8%, and 0%, respectively, wherein the 2-10 nm pore volume accounted for 63% of the total pore volume.

Steps S2-S3 were the same as embodiment 1.

### Embodiment 5:

### Preparation of nano silicon-oxygen-carbon composite material:

Step S1 was the same as embodiment 2.

Step S2, silicon deposition and oxygen containing treatment: placing the particles of a porous carbon skeleton containing a surface oxidized layer having a median particle size of approximately 10-20 µm of step S1 in a tubular furnace, vacuumizing to a vacuum degree of 10⁻³ Pa, and heating up to 600°C at 2°C/min in a N₂ atmosphere, changing to 20%SiH₄-N₂ mixed gas; and in the 20%SiH₄-N₂ mixed gas atmosphere, holding at 600°C for 5 hours for the deposition of silicon; then changing to N₂, cooling down to 200°C, then changing to a 1%O₂-N₂ mixed gas; and in the 1%O₂-N₂ mixed gas atmosphere, holding at 200°C for 30 minutes for oxygen containing treatment; then changing to N₂ and heating up to 600°C, whereby performing 6 cycles of silicon deposition-oxygen containing treatment on the porous carbon skeleton, and naturally cooling down under the protection of N₂; and crushing and shaping the obtained material by wet ball milling to obtain a nano silicon-oxygen-carbon composite material having a median particle size of 6 µm, to obtain the nano silicon-oxygen-carbon composite material 1.

Step S3 was the same as embodiment 1.

### Embodiment 6:

### Preparation of nano silicon-oxygen-carbon composite material:

Step S1 was the same as embodiment 2.

Step S2, silicon deposition and oxygen containing treatment: placing the particles of a porous carbon skeleton with a surface oxidized layer which had a median particle size of approximately 10-20 µm of step S1 in a tubular furnace, vacuumizing to a vacuum degree of 10⁻³ Pa, and heating up from room temperature to 600°C at 2°C/min in a N₂ atmosphere, changing to 20%SiH₄-N₂ mixed gas; and in the 20%SiH₄-N₂ mixed gas atmosphere, holding at 600°C for 2 hours for the deposition of silicon; then changing to N₂, cooling down to 200°C, then changing to a 1%O₂-N₂ mixed gas; and in the 1%O₂-N₂ mixed gas atmosphere, holding at 200°C for 12 minutes for oxygen containing treatment; then changing to N₂ and heating up to 600°C, whereby performing 10 cycles of silicon deposition-oxygen containing treatment on the porous carbon skeleton, and naturally cooling down under the protection of N₂; and crushing and shaping the obtained material by wet ball milling to obtain a nano silicon-oxygen-carbon composite material having a median particle size of 6 µm, to obtain the nano silicon-oxygen-carbon composite material 1.

Step S3 was the same as embodiment 1.

### Embodiment 7:

### Preparation of nano silicon-oxygen-carbon composite material:

Step S1 was the same as embodiment 2.

Step S2, silicon deposition and oxygen containing treatment: placing the particles of a porous carbon skeleton with a surface oxidized layer which had a median particle size of approximately 10-20 µm of step S1 in a tubular furnace, vacuumizing to a vacuum degree of 10⁻³ Pa, and heating up from room temperature to 450 °C at 2°C/min in a N₂ atmosphere, changing to 20%SiH₄-N₂ mixed gas; and in the 20%SiH₄-N₂ mixed gas atmosphere, holding at 450°C for 2 hours for the deposition of silicon; then changing to N₂, cooling down to 200°C, then changing to a 0.5%O₂-N₂ mixed gas; and in the 1%O₂-N₂ mixed gas atmosphere, holding at 200°C for 12 minutes for oxygen containing treatment; then changing to N₂ and heating up to 600°C, whereby performing 15 cycles of silicon deposition-oxygen containing treatment on the porous carbon skeleton, and naturally cooling down under the protection of N₂; and crushing and shaping the obtained material by wet ball milling to obtain a nano silicon-oxygen-carbon composite material having a median particle size of 6 µm, to obtain the nano silicon-oxygen-carbon composite material 1.

Step S3 was the same as embodiment 1.

### Embodiment 8:

### Preparation of nano silicon-oxygen-carbon composite material:

Step S1 was the same as embodiment 2.

Step S2, silicon deposition and oxygen containing treatment: placing the particles of a porous carbon skeleton with a surface oxidized layer which had a median particle size of approximately 10-20 µm of step S1 in a tubular furnace, vacuumizing to a vacuum degree of 10⁻³ Pa, and heating up from room temperature to 700 °C at 2°C/min in a N₂ atmosphere, then changing to 20%SiH₄-N₂ mixed gas; and in the 20%SiH₄-N₂ mixed gas atmosphere, holding at 700 °C for 2 hours for the deposition of silicon; then changing to N₂, cooling down to 350 °C, then changing to a 1%O₂-N₂ mixed gas; and in the 1%O₂-N₂ mixed gas atmosphere, holding at 350 °C for 12 minutes for oxygen containing treatment; then changing to N₂ and heating up to 700°C, whereby performing 15 cycles of silicon deposition-oxygen containing treatment on the porous carbon skeleton, and naturally cooling down under the protection of N₂; and crushing and shaping the obtained material by wet ball milling to obtain a nano silicon-oxygen-carbon composite material having a median particle size of 6 µm, to obtain the nano silicon-oxygen-carbon composite material 1.

Step S3 was the same as embodiment 1.

### Embodiment 9:

### Preparation of nano silicon-oxygen-carbon composite material:

Step S1 was the same as embodiment 2.

Step S2, silicon deposition and oxygen containing treatment: placing the particles of a porous carbon skeleton with a surface oxidized layer which had a median particle size of approximately 10-20 µm of step S1 in a tubular furnace, vacuumizing to a vacuum degree of 10⁻³ Pa, and heating up from room temperature to 600°C at 2°C/min in a N₂ atmosphere, then changing to 20%SiH₄-N₂ mixed gas; and in the 20%SiH₄-N₂ mixed gas atmosphere, holding at 600°C for 2 hours for the deposition of silicon; then changing to N₂, purging for 2 hours and changing to a 5%CO₂-N₂ mixed gas; and in the 5%CO₂-N₂ mixed gas atmosphere, holding at 600°C for 12 minutes for oxygen containing treatment; then changing to N₂ and heating up to 600°C, whereby performing 15 cycles of silicon deposition-oxygen containing treatment on the porous carbon skeleton, and naturally cooling down under the protection of N₂; and crushing and shaping the obtained material by wet ball milling to obtain a nano silicon-oxygen-carbon composite material having a median particle size of 6 µm, to obtain the nano silicon-oxygen-carbon composite material 1.

Step S3 was the same as embodiment 1.

### Embodiment 10:

### Preparation of nano silicon-oxygen-carbon composite material:

Step S1 was the same as embodiment 2.

Step S2, silicon deposition and oxygen containing treatment: placing the particles of a porous carbon skeleton with a surface oxidized layer which had a median particle size of approximately 10-20 µm of step S1 in a tubular furnace, vacuumizing to a vacuum degree of 10⁻³ Pa, and heating up from room temperature to 600°C at 2°C/min in a N₂ atmosphere, changing to 10%Si₂H₆-N₂ mixed gas; and in the 10%Si₂H₆-N₂ mixed gas atmosphere, holding at 600°C for 2 hours for the deposition of silicon; then changing to N₂, cooling down to 200°C, then changing to a 1%O₂-N₂ mixed gas; and in the 1%O₂-N₂ mixed gas atmosphere, holding at 200°C for 12 minutes for oxygen containing treatment; then changing to N₂ and heating up to 600°C, whereby performing 15 cycles of silicon deposition-oxygen containing treatment on the porous carbon skeleton, and naturally cooling down under the protection of N₂; and crushing and shaping the obtained material by wet ball milling to obtain a nano silicon-oxygen-carbon composite material having a median particle size of 6 µm, to obtain the nano silicon-oxygen-carbon composite material 1.

Step S3 was the same as embodiment 1.

### Embodiment 11:

### Preparation of nano silicon-oxygen-carbon composite material:

Step S1 was the same as embodiment 2.

Step S2, silicon deposition and oxygen containing treatment: placing the particles of a porous carbon skeleton with a surface oxidized layer which had a median particle size of approximately 10-20 µm of step S1 in a tubular furnace, vacuumizing to a vacuum degree of 10⁻³ Pa, and heating up from room temperature to 600°C at 2°C/min in a N₂ atmosphere, then changing to 20%SiH₄-0.5%acetone-N₂ mixed gas; and in the 20%SiH₄-0.5%acetone-N₂ mixed gas atmosphere, holding at 600°C for 30 hours for the deposition of silicon and the oxygen containing treatment synchronously, naturally cooling down under the protection of N₂; and crushing and shaping the obtained material by wet ball milling to obtain a nano silicon-oxygen-carbon composite material having a median particle size of 6 µm, to obtain the nano silicon-oxygen-carbon composite material 1.

Step S3 was the same as embodiment 1.

### Embodiment 12:

### Preparation of nano silicon-oxygen-carbon composite material:

Steps S1-S2 were the same as embodiment 1.

Step S3, deep oxidation treatment: placing the nano silicon-oxygen-carbon composite material 1 obtained in step S2 in a tubular furnace, vacuumizing, and then introducing 1% O₂-Ar mixed gas, controlling the heating rate at 1 °C/min, heating up from room temperature to 300°C, and treating at 300°C for 2 hours, cooling down to obtain the nano silicon-oxygen-carbon composite material.

### Embodiment 13:

### Preparation of nano silicon-oxygen-carbon composite material:

Steps S1-S2 were the same as embodiment 1.

Step S3, deep oxidation treatment: placing the nano silicon-oxygen-carbon composite material 1 obtained in step S2 in a tubular furnace, vacuumizing, and then introducing 1% O₂-Ar mixed gas, controlling the heating rate at 1 °C/min, heating up from room temperature to 350 °C, and treating at 350 °C for 2 hours, cooling down to obtain the nano silicon-oxygen-carbon composite material.

### Embodiment 14:

### Preparation of nano silicon-oxygen-carbon composite material:

Steps S1-S2 were the same as embodiment 1.

Step S3, deep oxidation treatment: placing the nano silicon-oxygen-carbon composite material 1 obtained in step S2 in a tubular furnace, vacuumizing, and then introducing 5% O₂-Ar mixed gas, controlling the heating rate at 1 °C/min, heating up from room temperature to 200 °C, and treating at 200 °C for 2 hours, cooling down to obtain the nano silicon-oxygen-carbon composite material.

### Embodiment 15:

### Preparation of nano silicon-oxygen-carbon composite material:

Steps S1-S2 were the same as embodiment 1.

Step S3, deep oxidation treatment: placing the nano silicon-oxygen-carbon composite material 1 obtained in step S2 in a tubular furnace, vacuumizing, and then introducing 20% O₂-Ar mixed gas, controlling the heating rate at 1 °C/min, heating up from room temperature to 200 °C, and treating at 200 °C for 2 hours, cooling down to obtain the nano silicon-oxygen-carbon composite material.

### Embodiment 16:

### Preparation of nano silicon-oxygen-carbon composite material:

Steps S1-S2 were the same as embodiment 1.

Step S2+, performing acid treatment on the crushed and shaped nano silicon-oxygen-carbon composite material 1 obtained in step S2: dispersing the nano silicon-oxygen-carbon composite material 1 in a 1 M HNOs aqueous/ethanol (50/50) solution, sonicating and dispersing for 2 hours, stirring at 60°C for 8 hours, filtering, washing the solid multiple times with deionized water, and forced air drying the obtained solid at 120°C for 24 hours, then heating up to 400°C at 2°C/min in a N₂ atmosphere, and holding at this temperature for 2 hours, cooling down to obtain the nano silicon-oxygen-carbon composite material 2.

Step S3, deep oxidation treatment: placing the nano silicon-oxygen-carbon composite material 2 obtained in the step S2+ in a tubular furnace, vacuumizing, and then introducing 1% O₂-Ar mixed gas, controlling the heating rate at 1 °C/min, heating up from room temperature to 200°C, and treating at 200°C for 2 hours, cooling down to obtain the nano silicon-oxygen-carbon composite material.

### Embodiment 17:

### Preparation of nano silicon-oxygen-carbon composite material:

Steps S1-S2 were the same as embodiment 1.

Step S2+, performing acid treatment on the crushed and shaped nano silicon-oxygen-carbon composite material 1 obtained in the step S2: dispersing the nano silicon-oxygen-carbon composite material 1 in a 1 M NaOH aqueous/ethanol (50/50) solution, sonicating and dispersing for 2 hours, stirring at 60°C for 8 hours, filtering, washing the solid multiple times with deionized water, and forced air drying the obtained solid at 120°C for 24 hours, then heating up to 400°C at 2°C/min in a N₂ atmosphere, and holding at this temperature for 2 hours, cooling down to obtain the nano silicon-oxygen-carbon composite material 2.

Step S3 was the same as embodiment 16.

### Embodiment 18:

### Preparation of nano silicon-oxygen-carbon composite material:

Steps S1-S2 were the same as embodiment 1.

Step S3, deep oxidation treatment: dispersing the nano silicon-oxygen-carbon composite material 1 obtained in step S2 in a 0.5 M KMnO₄ aqueous/ethanol (50/50) solution, sonicating and dispersing for 2 hours, stirring at 50°C for 2 hours, filtering, washing the solid multiple times with deionized water, and forced air drying the obtained solid at 60°C for 24 hours, then heating up to 400°C at 2°C/min in a N₂ atmosphere, and holding at this temperature for 2 hours, cooling down to obtain the nano silicon-oxygen-carbon composite material.

### Embodiment 19:

### Preparation of nano silicon-oxygen-carbon composite material:

Steps S1-S3 were the same as embodiment 1.

Step S4, outer layer clading: placing the nano silicon-oxygen-carbon composite material obtained from step S3 in a tubular furnace, vacuumizing, and then introducing N₂, heating up to 700°C at 2°C/min, switching to C₂H₂ gas, holding at 700°C for 2 hours, cooling down to obtain the carbon coated nano silicon-oxygen-carbon composite material.

### Embodiment 20:

### Preparation of nano silicon-oxygen-carbon composite material:

Steps S1-S3 were the same as embodiment 1.

Step S4, outer layer clading: dispersing the nano silicon-oxygen-carbon composite material obtained in step S3 in a 0.1 M Al(NO₃)₃ aqueous/ethanol (50/50) solution, sonicating and dispersing for 2 hours, adding an appropriate amount of Na₂CO₃ aqueous solution (n(Na₂CO₃)=1.8n(Al)), stirring at 80°C for 3 hours, filtering, washing the solid multiple times with deionized water, and forced air drying the obtained solid at 60°C for 24 hours, then heating up to 400°C at 2°C/min in a N₂ atmosphere, and holding at this temperature for 2 hours, cooling down to obtain the Al₂O₃ claded nano silicon-oxygen-carbon composite material.

### Embodiment 21:

### Preparation of nano silicon-oxygen-carbon composite material:

Steps S1-S3 were the same as embodiment 1.

Step S4, outer layer clading: dispersing the nano silicon-oxygen-carbon composite material obtained in step S4 in a 0.1 M Al(NO₃)₃ aqueous/ethanol (50/50) solution, sonicating and dispersing for 2 hours, adding an appropriate amount of Na₂CO₃ aqueous solution (n(Na₂CO₃)=1.8n(Al)), stirring at 80°C for 3 hours, filtering, washing the solid multiple times with deionized water, and forced air drying the obtained solid at 60°C for 24 hours, then heating up to 400°C at 2°C/min in a N₂ atmosphere, and holding at this temperature for 2 hours; again heating up to 700°C at 2°C/min, switching to C₂H₂ gas, and holding at 700°C for 2 hours, cooling down to obtain the carbon claded and Al₂O₃ claded nano silicon-oxygen-carbon composite material.

As mentioned above, in the preparation of the nano-silicon-oxygen-carbon composite material in each embodiment, main categories and consideration factors of the preparation conditions thereof are: the porous carbon skeleton and its surface treatment method were modified in embodiments 1-4, various factors in the process of silicon deposition and oxygen containing treatment were modified in embodiments 5-11, the deep oxidation method was investigated in embodiments 12-18, and the outer layer clading of the composite material in embodiments 19-21 was exemplified. Comparative embodiments 1-4 were designed for the three levels of oxygen in the nano silicon-oxygen-carbon composite material of the present disclosure, the surface of the porous carbon skeleton in comparative embodiment 1 had almost no surface oxygen-containing groups, there was separation of oxygen-containing layer due to no oxygen containing treatment during the silicon deposition process in comparative embodiment 2, and a deep oxidation treatment was also not carried out when depositing the obtained composite material, silicon deposition and oxygen-containing treatment were used in comparative embodiment 3, but further oxidation treatment was not carried out after crushing and shaping, and no oxygen-containing treatment was carried out during the silicon deposition process in comparative embodiment 4, but a deep oxidation treatment after crushing and shaping was carried out after crushing and shaping.

Table 1 shows the basic physical properties and electrochemical performance of the nano silicon-oxygen-carbon composite material of embodiments 1 to 21 and comparative embodiments 1 to 4.

**Table 1 Basic physical properties and electrochemical performance of the nano silicon-oxygen-carbon composite material in embodiments and comparative embodiments**

| Em bodiments | Silicon content (wt%) | Oxygen content (wt%) | Carbon content (wt%) | Specific surface area (m²/g ) | Total pore volume (cm³/g ) | True density (g/cm³ ) | Initial coulombic efficiency at 1.5 V (%) | Capacity per gram (mAh/ g) | Expansi on rate of the electrode sheet (%) | Capacity per gram retention rate (%) |
|---|---|---|---|---|---|---|---|---|---|---|
| 1 | 52.6 | 2.1 | 45.3 | 4.1 | 0.021 | 2.00 | 92.8 | 2011 | 75 | 97.1 |
| 2 | 51.1 | 2.1 | 46.8 | 6.2 | 0.025 | 2.01 | 92.5 | 1932 | 78 | 96.9 |
| 3 | 53.2 | 2.5 | 44.3 | 3.2 | 0.019 | 2.01 | 92.9 | 2021 | 88 | 96.2 |
| 4 | 54.9 | 2.1 | 43.0 | 6.7 | 0.026 | 1.99 | 91.2 | 2035 | 81 | 96.8 |
| 5 | 51.5 | 2.2 | 46.3 | 7.2 | 0.029 | 2.03 | 90.8 | 1989 | 91 | 95.2 |
| 6 | 35.2 | 1.0 | 63.8 | 45.2 | 0.241 | 1.92 | 84.5 | 1416 | 51 | 97.8 |
| 7 | 21.0 | 1.9 | 77.1 | 71.3 | 0.299 | 1.85 | 82.8 | 1059 | 38 | 97.5 |
| 8 | 55.2 | 2.8 | 42.0 | 5.9 | 0.018 | 2.02 | 90.6 | 2069 | 80 | 96.1 |
| 9 | 50.7 | 2.1 | 47.2 | 4.5 | 0.015 | 2.01 | 91.5 | 1913 | 91 | 95.4 |
| 10 | 50.0 | 2.3 | 47.7 | 5.8 | 0.019 | 1.99 | 91.7 | 1894 | 79 | 96.1 |
| 11 | 53.0 | 3.1 | 43.9 | 9.8 | 0.035 | 2.00 | 90.1 | 2001 | 86 | 96.0 |
| 12 | 51.7 | 2.9 | 45.4 | 5.9 | 0.018 | 2.02 | 92.1 | 1982 | 72 | 97.1 |
| 13 | 52.6 | 3.8 | 43.6 | 5.1 | 0.014 | 2.01 | 90.7 | 1953 | 75 | 97.0 |
| 14 | 51.2 | 3.6 | 45.2 | 5.8 | 0.019 | 2.01 | 91.0 | 1912 | 78 | 96.8 |
| 15 | 51.5 | 3.9 | 44.6 | 5.4 | 0.013 | 1.98 | 90.2 | 1947 | 75 | 96.5 |
| 16 | 50.7 | 3.4 | 45.9 | 7.3 | 0.031 | 2.00 | 91.6 | 1905 | 65 | 97.4 |
| 17 | 46.1 | 3.1 | 50.8 | 8.1 | 0.035 | 1.95 | 91.9 | 1772 | 70 | 97.2 |
| 18 | 53.3 | 3.4 | 43.3 | 6.5 | 0.021 | 1.98 | 91.4 | 2001 | 75 | 96.9 |
| 19 | 48.2 | 2.1 | 49.7 | 4.9 | 0.014 | 2.01 | 91.8 | 1849 | 69 | 97.1 |
| 20 | 50.9 | 3.0 | 46.1 | 5.3 | 0.018 | 2.02 | 90.6 | 1909 | 76 | 96.5 |
| 21 | 49.1 | 3.2 | 47.7 | 5.1 | 0.015 | 1.97 | 90.3 | 1872 | 71 | 97.1 |
| Co mp ara tiv e Em bo di me nt 1 | / | / | / | / | / | / | / | / | / | / |
| Co mp ara tiv e Em bo di me nt 2 | 50.1 | 0.9 | 49.0 | 12.1 | 0.039 | 1.95 | 91.8 | 1921 | 163 | 86.2 |
| Co mp ara tiv e Em bo di me nt 3 | 51.5 | 1.3 | 47.2 | 4.8 | 0.021 | 1.98 | 92.5 | 1906 | 147 | 86.9 |
| Co mp ara tiv e Em bo di me nt 4 | 51.2 | 1.1 | 47.7 | 6.9 | 0.023 | 1.98 | 92.1 | 1908 | 125 | 89.5 |

As can be seen from the above description that the above embodiments of the disclosure achieve the following technical effects:
The disclosure adopts a suitable preparation method to connect the porous carbon skeleton and the silicon nanoparticles in the composite material through the C-O-Si bond, so that a stable and uniform nano silicon-oxygen-carbon composite material can be obtained. This connection method can be reflected by the XPS testing results, as shown in Figure 10, the Si 2p fine spectrum of the nano silicon-oxygen-carbon composite material obtained in embodiment 1 shows that the bonding of Si mainly exists in the form of Si-Si and Si-O, the binding energy peak is located at 99±0.5 eV and 103±0.5 eV binding energy, respectively, the peak area of C-Si of which the binding energy peak is located at 100.5 ± 0.5 eV is small, and Si-Si exists in the silicon nanoparticles, Si-O is due to the presence of C-O-Si and SiOδ in composite materials.

In the porous carbon material, the pore structure is the primary site for containing silicon nanoparticles. The pore size distribution of porous carbon is generally wide, from micropores of < 2 nm to macropores of >50 nm, and some porous carbon can exist micrometer-level macropores. Silane decomposition is a chain reaction of thermal polymerization, which is difficult to occur at low temperatures and has low utilization rate of silane, however, the decomposition rate is fast at high temperatures, and the silicon particles inevitably grow rapidly. In the vapor deposition process of a silicon containing precursor, the silicon containing precursor usually firstly decomposes and deposits into small particles on the channel surface of porous carbon, and then fills the channels with the extension of time. In this process, the growth of silicon nanoparticles finally is bounded to the pore size of porous carbon skeleton, thus it is inevitable to form larger silicon particles, resulting in uneven size and distribution of silicon particles. In the present disclosure, on the one hand, the pore structure of the porous carbon skeleton is controlled, especially the proportion of pores with a pore size of 2-10 nm in the total pore volume is increased; on the other hand, the effective separation of silicon nanoparticles by an oxygen containing substance is realized by controlling the deposition process of silicon containing precursor and introducing the deposition and growth of an oxygen containing substance, and finally the size control and uniform dispersion of silicon nanoparticles in the composite material are realized. Due to the susceptibility of Si particles to oxidation, the oxygen-containing substance can oxidize Si nanoparticles at the interface between Si and the oxygen-containing substance, forming an oxide layer containing concentration gradients of Si, SiO and SiO2, this oxide layer can be written as SiOδ (0<δ≤2).

After depositing silicon nanoparticles on the porous carbon skeleton, by crushing and shaping the obtained materials in the present disclosure, on the one hand, the stress caused by different material phases in the materials is released, on the other hand, the composite material particles with uniform and appropriate size and shape can be obtained, so as to facilitate the homogenate and subsequent preparation of electrodes. After shaping, the surface of fresh silicon particles is exposed and slowly oxidized in the air to form an oxide layer, which can also play a certain role in alleviating and bounding expansion. In addition, a stable oxide layer can be controllably generated on the surface of the exposed silicon nanoparticles through certain steps in the disclosure, and the oxide layer exists in a form of SiOδ (0<δ≤2). The uniform oxide layer having a controllable structure on the surface of silicon nanoparticles can further alleviate and bound the lithium intercalation expansion of silicon.

In the present disclosure, the surface structure and pore structure of the porous carbon skeleton are first regulated, and then an oxygen-containing precursor is introduced during the silane decomposition and deposition process to form an oxidation and separation layer for silicon nanoparticles, achieving uniform dispersion of silicon nanoparticles, on this basis, the composite material is crushed and shaped to release possible stresses among different material phases, and make the material have the appropriate size and shape distribution required for homogenization; finally, the broken and shaped composite material is subjected to deep oxidation treatment to form a stable oxide layer on the surface of silicon nanoparticles. The crushing and grading and the subsequent deep oxidation treatment further ensure that silicon nanoparticles in the finished nano silicon-oxygen-carbon composite material are coated by an extremely low expansion oxide layer. Therefore, the volume effect of the uniformly dispersed and bounded silicon nanoparticles in the obtained nano silicon-oxygen-carbon composite material can be effectively buffered and suppressed during the lithium intercalation and delithiation processes, and the material strength can be improved, which helps to improve the electrochemical performance of the electrochemical device containing the silicon-oxygen-carbon composite anode material.

In the nano silicon-oxygen-carbon composite material of the disclosure, the silicon nanoparticles are amorphous and/or smaller than 2 nm crystal particle, the silicon nanoparticles are separated and/or claded by SiOδ network, and combine with the porous carbon skeleton to form a stable composite material through C-O-Si, and silicon nanoparticles and SiOδ are uniformly dispersed in the pores and on the surface of the porous carbon skeleton, an appropriate content of SiOδ is helpful for the good dispersion of silicon nanoparticles, and at the same time, it can bound the expansion of silicon in the process of lithium intercalation, so that the limiting aggregation size of silicon nanoparticles is less than 10 nm, the expansion rate of electrode sheets is low, the material has a high strength, and the cycle performance of battery is good. The nano silicon-oxygen-carbon composite material has a small specific surface area and pore volume, effectively reducing side reactions on the electrode surface, which is beneficial for improving the coulombic efficiency of the material and obtaining silicon-oxygen-carbon composite anode materials with an ultra-high initial coulombic efficiency. The nano silicon-oxygen-carbon composite material comprises closed pores, which can to some extent buffer the volume expansion of silicon during the lithium intercalation process, the electrode sheets containing this composite material have a lower expansion rate, thereby further improving the cycle performance of battery.

To sum up, the nano silicon-oxygen-carbon composite material provided by the disclosure includes a porous carbon skeleton and silicon nanoparticles evenly distributed in its pores and on its surface, the carbon and silicon are stably compounded, the nanoscalization and uniform dispersion of silicon particles are guaranteed by three levels of oxygen: (1) formation of C-O-Si bonds between the oxygen containing groups on the surface of porous carbon skeleton and silicon nanoparticles to ensure stable bonding between silicon nanoparticles and porous carbon skeleton; (2) in the pores of porous carbon skeleton, separating the silicon nanoparticles by the oxygen containing substance to avoid uncontrolled aggregation and growth during deposition, so as to control the size of silicon nanoparticles and realize separation and/or clading of silicon nanoparticles by the oxygen containing substance; (3) uniform growth of the oxide layer on the surface of the fresh silicon particles exposed after shaping to further realize the clading of silicon nanoparticles by the oxygen containing substance. Therefore, the silicon nanoparticles in the obtained nano silicon-oxygen-carbon composite material are completely separated and/or claded by the SiOδ(0<δ≤2) network, and the silicon nanoparticles and SiOδ are uniformly distributed on the surface and/or in the pores of the porous carbon skeleton. The separation and/or coating of silicon nanoparticles by SiOδ can effectively control the volume expansion and contraction of silicon and the fusion among silicon particles in the charge and discharge processes of the composite material. In addition, a suitable range of silicon, oxygen, and carbon element contents and specific surface area of the composite material can enable the nano silicon-oxygen-carbon composite material to exhibit the optimal capacity per gram, initial coulombic efficiency, extremely low expansion rate, and excellent cycle performance.

Therefore, in some embodiments of the present disclosure, the capacity per gram of lithium-ion secondary batteries is greater than or equal to 1500 mAh/g, the initial coulombic efficiency at 1.5 V is greater than or equal to 90%, the electrode sheet expansion rate is less than 100%, and the capacity per gram retention rate after 50 cycles of charge and discharge is greater than or equal to 97%. In some embodiments, the capacity per gram of lithium-ion secondary batteries is greater than or equal to 2000 mAh/g, the initial coulombic efficiency at 1.5 V is greater than or equal to 90%, the electrode sheet expansion rate is less than 120%, and the capacity per gram retention rate after 50 cycles of charge and discharge is greater than or equal to 96%.

It should be noted that the relationship terms such as "first" and "second", etc. are only used to distinguish one entity or operation from another entity or operation, and do not necessarily require or imply any actual relationship or order between these entities or operations. Moreover, the terms "including", "comprising", or any other variation thereof are intended to encompass non exclusive inclusion, such that a process, method, article, or device that includes a series of elements not only includes those elements, but also includes other elements that are not explicitly listed, or also includes elements inherent in such a process, method, article, or device. Without further limitations, the elements limited by the statement "including one..." do not exclude the existence of other identical elements in the process, method, article, or device that includes said elements.

The above contents only describe the preferred embodiments of the disclosure, and are not intended to limit the disclosure, for those skilled in the art, various modifications and changes can be made to the disclosure. Any modifications, equivalent substitutions, improvements, and the like made within the spirit and principle of the disclosure shall be included within the scope of protection of the disclosure.

## Claims

1. A nano silicon-oxygen-carbon structural composite material, wherein, the composite material comprises (C_{*x*1}-O_{*y*1})-(Si*_{z}O*_{*y*2}-C_{*x*2}), wherein,
C_{*x*1}-O_{*y*1} is a porous carbon substrate containing a surface oxidized layer, comprising the porous carbon substrate and its surface oxidized layer, x1 is the stoichiometric number of carbon, y1 is the stoichiometric number of oxygen in the surface oxidized layer, and 0.001≤*y*1/*x*1≤0.05;
Si*_{z}*-O_{*y*2}-C_{*x*2} comprises silicon nanoparticles, an oxygen-containing substance, and an optional carbon, the silicon nanoparticles, the oxygen-containing substance, and the optional carbon are dispersedly distributed on the surface and/or within the pores of the porous carbon substrate containing a surface oxidized layer, and the oxygen-containing substance presents in a form of SiO_{δ}, and 0<*δ*≤2, 0.1≤*z*/*x*1≤2, 0.01≤*y*2/*z*≤0.15, 0≤*x*2/*z*≤0.15.

2. The composite material according to claim 1, wherein, the total oxygen content in the composite material ranges from 0.5 wt% to 5 wt%.

3. The composite material according to claim 1 or 2, wherein, the deconvolution peak analysis results of high-resolution Si 2p spectrum in the XPS testing of the nano silicon-oxygen-carbon structural composite material comprise the following characteristics, the ratio of the peak area of Si-O with a binding energy peak at 103 ± 0.5 eV to the peak area of Si-Si with a binding energy peak at 99 ± 0.5 eV is 0.5-2, preferably 0.8-1.5, and the ratio of the peak area of Si-C with a binding energy peak at 100.5 ± 0.5 eV to the peak area of Si-Si with a binding energy peak at 99 ± 0.5 eV is 0.01-1, preferably 0.01-0.5.

4. The composite material according to any one of claims 1 to 3, wherein, the silicon nanoparticles comprise silicon crystal particles and/or non-crystalline silicon, and the crystal size of the said silicon crystal particles is less than 5 nm, and further preferably the crystal size of the said silicon crystal particles is less than 2 nm.

5. The composite material according to any one of claims 1 to 4, wherein, the size of the silicon nanoparticles is less than 20 nm, preferably the size of the silicon nanoparticles is less than 10 nm.

6. The composite material according to any one of claims 1 to 5, wherein, the specific surface area of the composite material is 0.1-15 m²/g, and the total pore volume is 0.001-0.05 cm³/g, and preferably the specific surface area of the composite material is 0.1-10 m²/g, and the total pore volume is 0.001-0.035 cm³/g.

7. The composite material according to any one of claims 1 to 6, wherein, the true density of the composite material is 1.8-2.1 g/cm³.

8. The composite material according to any one of claims 1 to 7, wherein, the composite material further comprises a cladding layer, and the cladding layer comprises a solid electrolyte and/or a conductive polymer.

9. The composite material according to any one of claims 1 to 8, wherein, the median particle diameter D₅₀ of the composite material is between 4 µm and 12 µm.

10. A preparation method for a nano silicon-oxygen-carbon structural composite material, wherein, the preparation method comprises:
step S1, providing a porous carbon substrate containing a surface oxidized layer, wherein the molar ratio of oxygen to carbon in the porous carbon substrate containing the surface oxidized layer ranges from 0.001 to 0.05;
step S2, a silicon-containing precursor and an oxygen containing precursor are introduced into a reaction furnace providing with the porous carbon substrate containing the surface oxidized layer, and taken into contact with the porous carbon substrate containing the surface oxidized layer at 150-700°C for 5-100 hours of heat treatment, and allowing silicon, oxygen containing substance, and optional carbon to disperse and deposit onto the surface and/or within the pores of the porous carbon substrate to obtain the nano silicon-oxygen-carbon structural composite material.

11. The preparation method according to claim 10, wherein, the preparation method of the porous carbon substrate containing the surface oxidized layer in the step S1 involves mixing the carbon precursor and pore forming agent and carbonizing the mixture to form a carbonized material, and then subjecting the carbonized material to crushing and oxidizing treatment.

12. The preparation method according to claim 10 or 11, wherein, the specific surface area of the porous carbon substrate containing the surface oxidized layer is 50-2000 m²/g, and the pore volume is 0.1-3.0 cm³/g, and the pore structure of the porous carbon substrate containing the surface oxidized layer comprises micropores, mesopores and macropores; preferably, the pore volume of the micropores accounts for 1-40% of the total pore volume, the pore volume of the mesopores accounts for 30-80% of the total pore volume, and the pore volume of the macropores accounts for 1-40% of the total pore volume;
preferably, the specific surface area of the porous carbon substrate containing the surface oxidized layer is 100-1000 m²/g, and the pore volume is 0.3-1.5 cm³/g; further preferably, the pore volume of the micropores accounts for 1-20% of the total pore volume, the pore volume of the mesopores accounts for 60-80% of the total pore volume, and the pore volume of the macropores accounts for 1-20% of the total pore volume.

13. The preparation method according to any one of claims 10 to 12, wherein, during the implementation process of step S2, the silicon containing precursor and the oxygen containing precursor are combined in any volume ratio, preferably the silicon containing precursor is selected from one or more of monosilane, disilane, trisilane, halosilane, polysilane, silole and a derivative thereof, silafluorene and a derivative thereof, etc, and preferably the oxygen containing precursor is one or more of oxygen, carbon dioxide, water vapor, methanol, ethanol, n-propanol, isopropanol, butanol, acetone, and butanone, and
preferably, the volume ratio of the silicon containing precursor to the oxygen containing precursor exhibits continuous changes and/or periodic changes with the extension of the introduction time.

14. The preparation method according to any one of claims 10 to 13, wherein, in the step S2, an inert gas is introduced simultaneously with the silicon containing precursor and the oxygen containing precursor, and the inert gas is one or more of nitrogen, argon, and helium; preferably, when a first mixed gas of the silicon containing precursor, the oxygen containing precursor and the inert gas is introduced, the oxygen containing precursor is one or more of methanol, ethanol, n-propanol, isopropanol, butanol, acetone, and butanone, the content of the silicon containing precursor in the first mixed gas is 1-50% by volume, and the content of the oxygen containing precursor is 0.5-10% by volume; preferably, the temperature of the heat treatment when introducing the first mixed gas is 400-700°C, and further preferably, the time of the heat treatment when introducing the first mixed gas is 5-50 hours.

15. The preparation method according to any one of claims 10 to 13, wherein, in the step S2, the inert gas is introduced before, after, or simultaneously with the silicon containing precursor and the oxygen containing precursor, or the inert gas can be introduced in the interval between the silicon containing precursor and the oxygen containing precursor, and the inert gas is one or more of nitrogen, argon, and helium; preferably, when a second mixed gas of the silicon containing precursor and the inert gas is introduced, the content of the silicon precursor in the second mixed gas is 1-50% by volume, and when a third mixed gas of the oxygen containing precursor and the inert gas is introduced, the content of the oxygen containing precursor in the third mixed gas is 1-50% by volume; further preferably, the temperature of the heat treatment when introducing the silicon containing precursor is 400-700°C, and the temperature of the heat treatment when introducing the oxygen containing precursor is 150-600°C, and preferably, the step S2 comprises:
step S2-1, introducing the inert gas into a reaction furnace provided with the porous carbon substrate containing the surface oxidized layer, and increasing the temperature of the reaction furnace to 400-700°C;
step S2-2, introducing the second mixed gas of the silicon containing precursor and the inert gas, with a concentration by volume of 1%-50% of the silicon containing precursor in the second mixed gas, and holding the reaction furnace at 400-700°C for 0.5-15 hours;
step S2-3, stopping the introduction of the silicon containing precursor, only introducing the inert gas, and adjusting the temperature of the reaction furnace to 150-600°C;
step S2-4, introducing the third mixed gas of the oxygen containing precursor and the inert gas, with a concentration by volume of 1%-50% of the oxygen containing precursor in the third mixed gas, and holding the reaction furnace at 150-600°C for 0.1-5 hours; and
step S2-5, repeating step S2-1 to step S2-4 for 2 times to 50 times.

16. The preparation method according to any one of claims 10 to 15, wherein, the preparation method further comprises:
step S3, crushing the nano silicon-oxygen-carbon structural composite material obtained in step S2 and removing the fine powder, to obtain the fine-removed particles of the nano silicon-oxygen-carbon structural composite material, which have a median particle diameter of 4-12 µm, and preferably the crushing and fine removing method is any one or more of manual milling, mechanical milling, ball milling, and airflow milling and fine removing.

17. The preparation method according to claim 16, wherein, the preparation method further comprises:
step S4, subjecting the fine-removed particles of the nano silicon-oxygen-carbon structural composite material obtained in step S3 to deep oxidation treatment, preferably the deep oxidation treatment comprising contacting the fine-removed particles of the nano silicon-oxygen-carbon structural composite material with a solution and/or gas containing an oxidizing substance at 0-400°C for 0.5-12 hours.

18. The preparation method according to claim 17, wherein, in step S4, the deep oxidation treatment comprises liquid phase oxidation and/or gas phase oxidation;
preferably, the steps of the liquid phase oxidation are placing the fine-removed particles of the nano silicon-oxygen-carbon structural composite material in an oxygen-containing compound and/or an aqueous solution and/or an ethanol solution of an oxygen-containing compound, sonicating 0.5-2 hours for dispersing the particles into the oxygen-containing compound or the solution, then stirring at 0-50°C for 0.5-12 hours, filtering and/or centrifuging to separate the solid with the liquid, washing the solid multiple times with deionized water and/or ethanol, and drying the resulting solid at 40-200°C for 0.5-24 hours in air, and treating same in an inert atmosphere at 200-400°C for 0.5-5 hours; the oxygen-containing compound being selected from any one or more of KMnO₄, H₂O₂, HNO₃, H₂SO₄, acetic acid, propionic acid, butyric acid, succinic acid, malic acid, and citric acid, and preferably the liquid phase oxidation being carried out under the action of ultraviolet light and/or microwave radiation; and
preferably, the steps of the gas phase oxidation are vacuumizing the fine-removed particles of the nano silicon-oxygen-carbon structural composite material to a vacuum degree below 10⁻² Pa, then introducing a mixed gas comprising an oxidizing gas and an inert gas, heating up from room temperature to 200-400°C with a heating rate of 1-10°C/min, and holding at 200-400°C for 0.1-5 hours; the oxidizing gas is selected from any one or more of oxygen, ozone, carbon dioxide, and water vapor, and the inert gas is one or more of nitrogen, argon, and helium, and the oxidizing gas accounting for 0.5-20% of the mixed gas.

19. The preparation method according to claim 17 or 18, wherein, before the step S4, an acid treatment and/or an alkali treatment process for the fine-removed particles of the nano silicon-oxygen-carbon structural composite material is added;
preferably, the acid treatment method involves dispersing the fine-removed particles of the nano silicon-oxygen-carbon structural composite material into an aqueous/ethanol solution containing acid, stirring at 0-50°C for 0.5-12 hours, filtering and/or centrifuging to separate the solid with the liquid, washing the solid multiple times with deionized water and/or ethanol until the pH of the filtrate and/or supernatant is neutral, and vacuum drying the resulting solid;
the alkali treatment method involves dispersing the fine-removed particles of the nano silicon-oxygen-carbon structural composite material into an aqueous/ethanol solution containing alkali, stirring at 0-50°C for 0.5-12 hours, filtering and/or centrifuging to separate the solid with the liquid, washing the solid multiple times with deionized water and/or ethanol until the pH of the filtrate and/or supernatant is neutral, and vacuum drying the resulting solid; the acid is one or more of HCl, H₂SO₄, HNOs, and H₃PO₄, and the base is one or more of NaOH, KOH, Na₂CO₃, K₂CO₃, NH₃H₂O, NH₄HCO₃, (NH₄)₂CO₃, and urea.

20. The preparation method according to any one of claims 10 to 19, wherein, the preparation method further comprises:
step S5, clading a solid electrolyte and/or a conductive polymer on the nano silicon-oxygen-carbon structural composite material.

21. The preparation method according to any one of claims 10 to 20, wherein, the preparation method further comprises:
step S6, vacuum treating and carbon coating the nano silicon-oxygen-carbon structural composite material, the carbon coating method involving using one or more of methane, ethane, propane, butane, ethylene, propylene, butene, acetylene, propyne, methanol, ethanol, n-propanol, isopropanol, butanol, propanone, and butanone to perform vapor deposition on the composite material, or using a liquid carbon precursor for liquid phase carbon coating, and preferably the liquid carbon precursor is selected from resin and asphalt.

22. An anode, comprising an anode material, wherein, the anode material is the nano silicon-oxygen-carbon structural composite material of any one of claims 1 to 9 or the nano silicon-oxygen-carbon structural composite material obtained by the preparation method of any one of claims 10 to 21.

23. An electrochemical device, comprising an anode, wherein, the anode is the anode of claim 22, and preferably the electrochemical device is a lithium ion secondary battery.
